# EUROPEAN PATENT APPLICATION

(11) **EP 1 601 138 A1**
(43) Date of publication of application: **30.11.2005**
(21) Application number: 03816170.9
(22) Date of filing: 07.07.2003
(51) Int. Cl.: H04L 12/56, H04Q 7/38, G06F 13/00

(54) **LINKAGE INFORMATION MANAGEMENT SYSTEM AND MESSAGE TRANSFER CONTROL SYSTEM**

(30) Priority: 04.03.2003 WO PCT/JP03/02498
(71) Applicant: FUJITSU LIMITED, Kawasaki-shi, Kanagawa 211-8588 (JP)
(72) Inventor: IGARASHI, Yoichiro c/o FUJITSU LIMITED, Kawasaki-shi, Kanagawa 211-8588 (JP); TAKASE, Masaaki c/o FUJITSU LIMITED, Kawasaki-shi, Kanagawa 211-8588 (JP); WAKAMOTO, Masaaki c/o FUJITSU LIMITED, Kawasaki-shi, Kanagawa 211-8588 (JP); KAKEMIZU, Mitsuaki c/o FUJITSU LIMITED, Kawasaki-shi, Kanagawa 211-8588 (JP); FUKAZAWA, Mitsunori c/o FUJITSU LIMITED, Kawasaki-shi, Kanagawa 211-8588 (JP)
(74) Representative: HOFFMANN EITLE
(86) International application number: PCT/JP2003/008613
(87) International publication number: WO 2004/080009

(57) **Abstract**

A linkage information management server includes linkage information storage means for storing linkage information relating a first identifier for identifying a first device to a second identifier for uniquely identifying a second device, registration means for registering the received first identifier and the second identifier as linkage information in the linkage information storage means, and location information storage means for relating and storing a first address which is an invariable address assigned for the second device, a second address which is a variable address assigned for the second device, and the second identifier.

## Description

### TECHNICAL FIELD

The present invention relates to a system, apparatus, and the like for providing services to a specific user of a terminal device that can be connected to a network such as an IP network.

### BACKGROUND ART

Up to now, as a measure for individually controlling a location of a user terminal, there is Mobile IP (refer to Non-Patent Document 1) in a layer 3 (IP (Internet Protocol) layer).

In the Mobile IP, communications can be continuously made while MN (Mobile Node) moves between subnetworks constituted by using the IP network. The MN has an address that does not depend on a subnetwork to which the MN currently belongs and an address that depends on this sub network. The address that does not depend on the subnetwork is called a home address. On the other hand, the address that depends on the subnetwork is called Care of Address (CoA). Then, a Home Agent (HA) stores the home address and the CoA in association with each other. In this way, the HA individually controls the location of the MN.

A host (CN: Correspondent Node) of a third party, when transmitting a packet to the MN, transmits the packet to the home address of the MN. The HA, when receiving the packet addressed to the home address of the MN, transfers the packet to the CoA stored in association with the home address. Then, the MN receives the packet sent out from the CN. In this way, in the Mobile IP, the packet sent out from the CN is moved between the plurality of subnetworks, and is surely transferred to the MN whose CoA is changed.

Also, as a technique related to the Mobile IP, there is a technique in which the HA authenticates, with regard to a certain MN, whether or not this MN is an authenticated user terminal (refer to Patent Document 1). Also, as the technique for identifying a user of a terminal device connected through a network, there is NAI (Network Access Identifier: refer to Non-Patent Document 2).

Also, as one type of an upcoming network service, it is expected that providing an appliance placed around a user. In the present invention, the appliance refers to one that holds individual identification information and simultaneously has communication means for communicating the held individual identification information with another apparatus. For example, the appliance is provided to the user for providing a function that cannot be attained by using only a user's personal terminal device (for example, a portable telephone) to the user. That is, the user, by temporarily using the appliance (for example, a pointing device, a program recording medium, and a headphone) placed around the user, can receive the provision of the function, which cannot be attained only by the user's personal terminal device, as a service. Also, the appliance may be one that does not provide any function directly to the terminal device of the user in itself (for example, a building, a billboard, and a can). Also, the appliance may be fixed or movable. Also, the appliance may be public or private one.
[Patent Document 1]
   JP 2001-169341 A
[Non-Patent Document 1]
   "IP Mobility Support" at the Internet, URL: http://www.ietf.org/rfc/rfc2002.txt (search was made online on February 14, 2003)
[Non-Patent Document 2]
   "The Network Access Identifier" at the Internet, URL: http://www.ietf.org/ref/rfc2486.txt (search was made online on February 14, 2003)

In the service for providing the foregoing appliance to the user, a need to recognize a relation between a certain appliance and a user using this appliance (namely, a usage relation) on the provider side of the service may arise. For example, if charging information to the user using each appliance is managed, recognition of the usage relation is required.

Incidentally, as a network service of a next generation, attention is being paid to a service whose key word is "Ubiquitous" characterized by the ubiquity of the service. The ubiquitous is said to be the environment where an access can be performed on the information network, such as the Internet, from everywhere at any time. As one of the requirements to create the above environment, a "Context-Aware" service is considered promising. In this description, the "Context" of the user indicates various situations of the user (service user). For example, the context of the user includes information indicating an attribute of the user, a lifestyle and an occasional situation. Moreover, the context of the user includes information indicating the environment surrounding the user. For example, the information indicating the environment includes the information, such as kinds and quantities of various devices which are located in the vicinities of a communication terminal used by the user, or possessed or used by the user.

In the "Context-Aware" service, one possible form is such that the provider of the service obtains the context of the user and sends a message including the information based on this context through the network to the user.

However, depending on the content of the context of the user, there is a possibility that a user receive a message sent at timing or with content which is not intended by the user or a message of the content undesirable for the user.

### DISCLOSURE OF THE INVENTION

An object of the present invention is to provide a system that enables recognition of a usage relation between an apparatus such as the foregoing appliance and a user using the appliance, and an apparatus used in the system.

Also, another object of the present invention is to provide a technique that can protect a user from receiving an unintended message, in a context-aware service. A first aspect of the present invention relates to a linkage information management system including: a first device identified with a first identifier, the first device having storage means for storing the first identifier; a second device uniquely identified with a second identifier, the second device including read means for reading the first identifier from the first device, storage means for storing the second identifier, creating means for creating a linkage information message that includes the first identifier read by the read means and the second identifier stored in the storage means, and transmission means for transmitting the linkage information message created by the creating means to another device; and a linkage information management server including reception means for receiving the transmitted linkage information message from the second device, linkage information storage means for storing linkage information in which the first identifier and the second identifier are associated, and registration means for registering the first identifier and the second identifier, which are included in the linkage information message received by the reception means, as the linkage information, in the linkage information storage means.

The system according to the first aspect of the present invention includes the first device, the second device, and the linkage information management server. The first identifier and the second identifier are assigned to the first device and the second device, respectively. It is not always necessary that the first identifier is the identifier that allows the first device to be uniquely identified. For example, the first identifier may be a serial number of the first device, or an identifier indicating an object to which the first device is attached. On the other hand, the second identifier is the identifier that allows the second device to be uniquely identified.

The read means of the second device reads the first identifier stored in the storage unit of the first device, for example by using radio communication means or wired communication means, or other non-contact information read means (image recognition through infrared rays or camera). Such operation is attained, for example, by using an RFID tag (Radio Frequency ID tag) and an RFID reader, Bluetooth and the like.

The creating means of the second device creates the linkage information message, which includes the first identifier read by the read means and the second identifier stored in the storage means in the self-device. Then, the transmission means of the second device transmits the linkage information message created by the creating means to the linkage information management server.

The second device may be a device to which the invariable first address and the variable second address are assigned. As examples of such addresses, there are the care of address (CoA) and the home address based on the Mobile IP. In this case, the transmission means of the second device transmits the location registration message, in which the home address and the CoA are related, to the linkage information management server, in accordance with the specifications of the Mobile IP. In this case, in the transmission means of the second device, the location registration message includes the second identifier stored in the storage means of the self-device (second device itself).

The reception means of the linkage information management server receives the linkage information message. Then, the registration means associates the first identifier and second identifier in the received message to be registered in the linkage information storage means.

According to the first aspect of the present invention, the correspondence between the first device that does not have the communication means with the linkage information management server and the second device is reported by the second device having the communication means with the linkage information management server. Thus, in the linkage information management server, such correspondence (usage relation) is accurately registered.

Further, in the linkage information management system according to the first aspect of the present invention, the linkage information management server may further include completion report means for reporting a completion of the registration to the second device, when the linkage information is registered in the linkage information storage means, and the second device may further include usage limit means for enabling a usage of the first device, when the completion report is received.

Further, according to the first aspect of the present invention, the second device may have an invariable first address assigned to the self-device and a variable second address, the transmission means of the second device may further transmit a location registration message, which includes the second address, the first address, and a second identifier of the self-device, to the linkage information management server, and the linkage information management server may further include location information storage means for storing the first address, the second address, and the second identifier, which are included in the received location registration message in association with one another.

Further, the system according to the first aspect of the present invention may further include a first authentication device for executing an authentication process about the first device, wherein the linkage information management server may have: authentication request means for requesting the authentication process of the first device to the first authentication device; and registration limit means for limiting a registration of the linkage information with the registration means in response to a result of the authentication process with the first authentication device.

Further, the system according to the first aspect of the present invention may further include a second authentication device for executing an authentication process about the second device, wherein the linkage information management server may have: authentication requestmeans for requesting the authentication process of the second device to the first authentication device; and registration limit means for limiting a registration of the linkage information with the registration means in response to a result of the authentication process with the second authentication device.

Further, the system according to the first aspect of the present invention may further include a device information management server including: device information storage means for storing a device information of the first device to the first identifier in association with each other; retrieval means for retrieving the device information stored in association with the first identifier included in a received inquiry message; and response means for transmitting the device information retrieved by the retrieval means as a response to the inquiry message, wherein the linkage information management server may further include inquiry means for transmitting the inquiry message including a specific first identifier to the device information management server.

Further, according to the first aspect of the present invention, the linkage information management server may have: identifier retrieval means for retrieving, when data with the first identifier is received, the second identifier stored in the linkage information storage means in association with the first identifier; address retrieval means for retrieving the second address stored in the location information storage means in association with the second identifier retrieved by the retrieval means; and transfer means for transmitting at least a part of the data to the second address retrieved by the address retrieval means.

A second aspect of the present invention relates to a terminal device, including: read means for reading a first identifier from a first device; storage means for storing a second identifier for uniquely identifying a self-device; creating means for creating a linkage information message, which includes the first identifier read by the read means and the second identifier stored in the storage means; and transmission means for transmitting the linkage information message created by the creating means to another device.

A third aspect of the present invention relates to a linkage information management server, including: linkage information storage means for storing linkage information in which a first identifier for identifying a first device and a second identifier for uniquely identifying a second device are associated; registration means for registering the received first identifier and second identifier as the linkage information in the linkage information storage means; and location information storage means for storing a first address, which is an invariable address assigned to the second device, a variable second address assigned to the second device, and the second identifier in association with one another.

According to the present invention, it is possible to recognize the usage relation between the device (first device) such as the appliance and the device (second device) used by the same user as this appliance. As a result, it is possible to recognize the usage relation between the device such as the appliance and the user who uses this appliance.

One example of the effect will be described below. As the example, a case where an advertisement distributor distributes an advertisement to a consumer who satisfies a specific condition is assumed. In this case, conventionally, there was a method of specifying a distribution destination user using identification information of a user (example, an electronic mail address) having a portable terminal. On the other hand, the present invention eliminates a need to specify a user of an individual distribution destination in advance, "user who possesses specific product (corresponding to LN)" can be specified as the attribute for specifying whether or not it is a distribution target. In other words, there is no necessity for identifying the user of the distribution destination. Only with the specific attribute (the possession of the specific product) as a hint, the advertisement can be distributed to the user who satisfies the condition of the attribute.

A fourth aspect of the present invention relates to a message transfer control system, including:
linkage information storage means for storing linkage information that indicates a relation between a communication terminal of a user and a distribution device distributed to a user side;
transfer control information storage means for storing transfer control information that defines a transfer condition of a message to be transmitted to the communication terminal associated with a specific distribution device based on the linkage information; and
transfer control means for controlling a transfer of the message to the communication terminal, in accordance with the transfer control information.

Preferably, according to the fourth aspect of the present invention, the transfer control information includes : first transfer condition information that defines a transfer condition of the message based on context information related to the distribution device; and second transfer condition information that defines the transfer condition of the message based on the context information related to the communication terminal, and
the transfer control means allows the transfer of the message, when the transfer condition of the message defined by the first and second transfer condition information is satisfied.

Preferably, according to the fourth aspect of the present invention, the transfer control means includes: first judging means for judging whether a transfer of the message is allowed or rejected in accordance with at least the first transfer condition information; and second judging means for judging whether the transfer of the message is allowed or rejected in accordance with at least the second transfer condition information.

A fifth aspect of the present inventor relates to a message transfer control system, including: a location registration device of a communication terminal of a user; and a location registration device of a distribution device distributed on a user side, which are respectively connected to a wide area network where the communication terminal of the user is connected,
wherein the location registration device of the distribution device includes:
a linkage information storage section for storing, as linkage information, information indicating a relation between the communication terminal and the distribution device, which is transmitted from the communication terminal;
a transfer control information storage section for storing transfer control information that defines a transfer condition to a message to be transmitted to the communication terminal related to a specific distribution device;
a reception section for receiving a message in which the distribution device is designated;
transfer control means for judging, when the communication terminal related to the distribution device specified by the message is identified by the linkage information stored in the linkage information storage section is specified, whether to allow or reject a transfer of the message to the communication terminal, in accordance with the transfer control information stored in the transfer control information storage section; and
a transmission section for transmitting the message whose the transfer is allowed by the transfer control section, and
wherein the location registration device of the communication terminal includes:
a reception section for receiving the message from the location registration device of the distribution device;
a location information storage section for storing location information of the communication terminal; and
a transmission section for transmitting the message to the communication terminal, in accordance with the location information of the communication terminal.

Preferably, according to the fifth aspect of the present invention, the location registration device of the communication terminal further includes:
a second transfer control information storage section for storing transfer control information that defines the transfer condition to the message to be transmitted to the communication terminal related to the specific distribution device; and
second transfer control means for judging, when the message from the location registration device of the distribution device is received, whether to allow or reject the transfer of the message to the communication terminal in accordance with the transfer control information stored in the second transfer information storage section, and
the transmission section transmits the message whose transfer is allowed by the second transfer control means to the communication terminal.

Preferably, according to the fifth aspect of the present invention, the location registration device of the distribution device further includes:
authentication request means for requesting, when receiving identification information of the distribution device and identification information of the communication terminal that are stored as the linkage information, an authentication device of the distribution device to authenticate the distribution device specified by the identification information of the distribution device; and
information management means for storing the transfer control information provided by the authentication device of the distribution device in the transfer control information storage section, when the authentication of the distribution device related to the request is successful.

Preferably, according to the fifth aspect of the present invention, the location registration device of the distribution device further includes:
second authentication request means for requesting, when receiving identification information of the distribution device and identification information of the communication terminal that are stored as the linkage information, an authentication device of the communication terminal to authenticate the communication terminal specified by the identification information of the communication terminal; and
second information management means for storing the transfer control information provided by the authentication device of the communication terminal in the second transfer control information storage section, when the authentication of the communication terminal related to the request is successful.

Preferably, according to the fifth aspect of the present invention, the location registration device of the distribution device further includes information management means for storing, when receiving identification information of the distribution device and identification information of the communication terminal and the transfer control information that are stored as the linkage information from the authentication device of the distribution device, the transfer control information in the transfer control information storage section.

Preferably, according to the fifth aspect of the present invention, the location registration device of the distribution device further includes information management means for storing, when receiving the identification information of the distribution device and the identification information of the communication terminal and the transfer control information that are stored as the linkage information from the communication terminal, the transfer control information in the transfer control information storage section.

Preferably, according to the fifth aspect of the present invention, the location registration device of the communication terminal further includes information management means for storing, when receiving the identification information of the distribution device and the identification information of the communication terminal and the transfer control information that are stored as the linkage information from the communication terminal, the transfer control information in the second transfer control information storage section.

Preferably, according to the fifth aspect of the present invention, the transfer control means judges whether to allow or reject the transfer of the message, in accordance with whether or not the transfer condition of the message based on at least context information with respect to the distribution device stored in the transfer control information storage section as the transfer control information is satisfied.

Preferably, according to the fifth aspect of the present invention, the said transfer control means judges whether to allow or reject the transfer of the message, in accordance with whether or not transfer condition of the message based on at least context information with respect to the communication terminal stored in the second transfer control information storage section as the transfer control information is satisfied.

Preferably, according to the fifth aspect of the present invention, the transfer control means judges whether to allow or reject the transfer of the message, in accordance with the transfer control information including the transfer condition information of the message defined for each distribution device, which is stored in the transfer control information storage section.

Preferably, according to the fifth aspect of the present invention, the second transfer control means judges whether to allow or reject the transfer of the message, in accordance with the transfer control information including the transfer condition information of the message defined for each communication terminal, which is stored in the second transfer control information storage section.

Preferably, according to the fifth aspect of the present invention, the location registration device of the distribution device further includes transfer control information request means for requesting, when a message is received and the transfer control information that is effective for judging whether to allow or reject a transfer of the message is not stored in the transfer control information storage section, the authentication device of the distribution device to send the transfer control information.

Preferably, according to the fifth aspect of the present invention, the location registration device of the distribution device further includes transfer control information request means for requesting, when a message is received and the transfer control information that is effective for judging whether to allow or reject a transfer of the message is not stored in the transfer control information storage section, the authentication device of the communication terminal to send the transfer control information.

Preferably, the system according to the fifth aspect of the present invention further includes a transfer control gateway device on an ingress side of the wide area network, which is connected to the wide area network, wherein the ingress side transfer control gateway device specifies, when receiving a service message to be transferred to the communication terminal from a service provider device, at least one of a plurality of location registration devices of the distribution device, which should be transferred the service message, in accordance with at least identification information of the distribution device included in or added to the service message, and transfers the service message to at least one of the plurality of location registration devices.

Preferably, according to the fifth aspect of the present invention, the ingress side transfer control gateway device judges whether to transfer the service message to the location registration device of the distribution device, in accordance with context information with respect to the distribution device included in or added to the service message.

Preferably, according to the fifth aspect of the present invention, the ingress side transfer control gateway device receives a service request message, in which the service message is capsulated and at least identification information of the distribution device is set in a header portion thereof, from the service provider device.

Preferably, the system according to fifth aspect of the present invention further includes a transfer control gateway device on an egress side of the wide area network, which is connected to the wide area network and includes: a transfer control information storage section for storing the transfer control information that defines a transfer condition to the message to be transmitted to the communication terminal related to the specific distribution device; a reception section for receiving the message from the location registration device of the communication terminal; and transfer control means for judging whether to allow or reject the transfer of the message received by the reception section to the communication terminal, in accordance with the transfer control information stored in the transfer information storage section.

The present invention can be specified as the message transfer control method having the feature substantially similar to the message transfer control system specified as the foregoing fourth and fifth aspects.

Moreover, the present invention can be specified as a program allowing a computer to function as each device specified in the fifth aspect, or as a computer-readable recordingmediumwhich stores the program.

### BRIEF DESCRIPTION OF THE DRAWINGS

FIG. 1 is a diagram showing a schema of a linkage information management system;
FIG. 2 is a diagram showing a function block of LN;
FIG. 3 is a diagram showing a function block of GN;
FIG. 4 is a diagram showing a function block of GN-HA;
FIG. 5 is a diagram showing a function block of LN-HA;
FIG. 6 is a diagram showing a function block of GN-AAA;
FIG. 7 is a diagram showing a function block of LN-AAA;
FIG. 8 is a diagram showing a GN location registration request message and a GN location registration response message;
FIG. 9 is a diagram showing a linkage information registration request message and a linkage information registration response message;
FIG. 10 is a diagram showing an authentication information transfermessage and an authentication information response message;
FIG. 11A is a flowchart showing an operation example of GN;
FIG. 11B is a flowchart showing the operation example of GN;
FIG. 12A is a flowchart showing an operation example of GN-HA;
FIG. 12B is a flowchart showing the operation example of GN-HA;
FIG. 12C is a flowchart showing the operation example of GN-HA;
FIG. 12D is a flowchart showing the operation example of GN-HA;
FIG. 13A is a flowchart showing an operation example of LN-HA;
FIG. 13B is a flowchart showing the operation example of LN-HA;
FIG. 13C is a flowchart showing the operation example of LN-HA;
FIG. 14A is a flowchart showing an operation example of GN-AAA;
FIG. 14B is a flowchart showing the operation example of GN-AAA;
FIG. 15A is a flowchart showing an operation example of LN-AAA;
FIG. 15B is a flowchart showing the operation example of LN-AAA;
FIG. 16 is a diagram showing a first operation example of a first embodiment;
FIG. 17 is a diagram showing the first operation example of the first embodiment;
FIG. 18 is a diagram showing a second operation example of the first embodiment;
FIG. 19 is a diagram showing the second operation example of the first embodiment;
FIG. 20 is a diagram showing a third operation example of the first embodiment;
FIG. 21 is a diagram showing the third operation example of the first embodiment;
FIG. 22 is a diagram showing a fourth operation example of the first embodiment;
FIG. 23 is a diagram showing the fourth operation example of the first embodiment;
FIG. 24 is a diagram showing a fifth operation example of the first embodiment;
FIG. 25 is a diagram showing the fifth operation example of the first embodiment;
FIG. 26 is a diagram showing a sixth operation example of the first embodiment;
FIG. 27 is a diagram showing the sixth operation example of the first embodiment;
FIG. 28 is a diagram showing a seventh operation example of the first embodiment;
FIG. 29 is a diagram showing the seventh operation example of the first embodiment;
FIG. 30 is a diagram showing an eighth operation example of the first embodiment;
FIG. 31 is a diagram showing the eighth operation example of the first embodiment;
FIG. 32 is a diagram showing a ninth operation example of the first embodiment;
FIG. 33 is a diagram showing the ninth operation example of the first embodiment;
FIG. 34 is a diagram showing a schema of a linkage information management system in a second embodiment;
FIG. 35 is a diagram showing a first operation example of the second embodiment;
FIG. 36 is a diagram showing the first operation example of the second embodiment;
FIG. 37 is a diagram showing a second operation example of the second embodiment;
FIG. 38 is a diagram showing the second operation example of the second embodiment;
FIG. 39 is a diagram showing a first application example of the present invention;
FIG. 40 is a diagram showing the first application example of the present invention;
FIG. 41 is a diagram showing a second application example of the present invention;
FIG. 42 is a diagram showing the second application example of the present invention;
FIG. 43 is a diagram showing a configuration example of a mail transfer control system according to the present invention;
FIG. 44 is an explanatory diagrams of CAC;
FIG. 45 is a diagram showing a first distribution method of a default CAC;
FIG. 46 is a diagram showing the first distribution method of the default CAC;
FIG. 47 is a diagram showing an example of a message transfer control;
FIG. 48 is a diagram showing a second distribution method of a default CAC;
FIG. 49 is a diagram showing the second distribution method of the default CAC;
FIG. 50 is a diagram showing a third distribution method of a default CAC;
FIG. 51 is a diagram showing the third distribution method of the default CAC;
FIG. 52 is a diagram showing a fourth distribution method of a default CAC;
FIG. 53 is a diagram showing the fourth distribution method of the default CAC;
FIG. 54 is a diagram showing a fifth distribution method of a default CAC;
FIG. 55 is a diagram showing the fifth distribution method of the default CAC;
FIG. 56 is an explanatory diagrams of a service request message and a service response message;
FIG. 57 is an explanatory diagram of a CAC request message and a CAC response message;
FIG. 58 is a diagram showing a distribution method of an on-demand CAC;
FIG. 59 is a diagram showing the distribution method of the on-demand CAC;
FIG. 60 is a diagram showing a message transfer control based on the distribution method of the on-demand CAC;
FIG. 61 is a diagram showing the distribution method of the on-demand CAC;
FIG. 62 is a diagram showing the distribution method of the on-demand CAC;
FIG. 63 is a diagram showing the distribution method of the on-demand CAC;
FIG. 64 is a diagram showing the message transfer control based on the distribution method of the on-demand CAC;
FIG. 65 is a diagram showing the distribution method of the on-demand CAC;
FIG. 66 is a diagram showing a configuration example of a message transfer control system to which an O-CMGW is applied;
FIG. 67 is a diagram showing a configuration example of GN-HA;
FIG. 68 is a diagram showing a configuration example of LN-HA;
FIG. 69 is a diagram showing a configuration example of GN-AAA;
FIG. 70 is a diagram showing a configuration example of LN-AAA;
FIG. 71 is a flowchart showing a process of GN-HA or LN-HA; and
FIG. 72 is a flowchart showing a process of GN-AAA or LN-AAA.

### BEST MODE FOR CARRYING OUT THE INVENTION

### I. Linkage Information Management System

A linkage information management system according to embodiments of the present invention will be described below by using the drawings. Note that, the explanation of this embodiment is the exemplification, and the configuration of the present invention is not limited to the following explanation.

### [First Embodiment]

### <System Configuration>

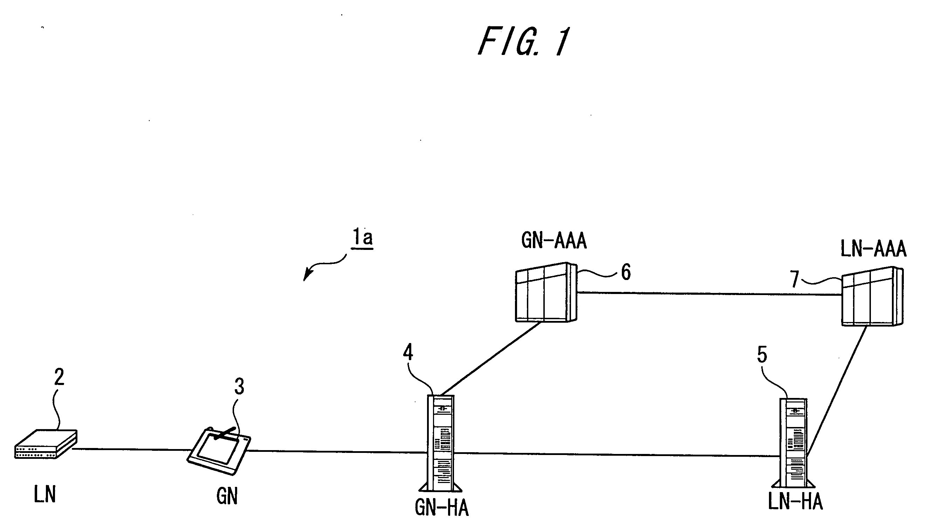

FIG. 1 is a diagram showing a first embodiment of the linkage information management system according to the present invention, namely, the schema of a linkage information management system 1a. FIG. 1 is used to explain the linkage information management system 1a.

The linkage information management system 1a is constituted by using an LN (Local Node) 2, a GN (Global Node) 3, a GN-HA (GN Home Agent) 4, an LN-HA (LN Home Agent) 5, a GN-AAA (GN Authentication, Authorization and Accounting) 6, and an LN-AAA (LN Authentication, Authorization and Accounting) 7. The linkage information management system 1a may be constituted by using a plurality of foregoing respective devices. The LN 2 and the GN 3 are communicably connected by using a local network. However, the LN 2 and the GN 3 may be a one-way communication (a communication in which a signal transmitted by the LN 2 is received by the GN 3) or may be a two-way communication. As an example of the one-way communication, there is a communication of an RFID tag (corresponds to the LN 2) and an RFID reader (corresponds to the GN 3). Also, as an example of the two-way communication, there is a communication of Bluetooth.

Between the GN 3 and the GN-HA 4, the GN-HA 4 and the LN-HA 5, the GN-HA 4 and the GN-AAA 6, the LN-HA 5 and the LN-AAA 7, and the GN-AAA 6 and the LN-AAA 7 are respectively, communicably connected by using a wide area network such as the Internet, WAN and the like. The connection between GN 3 and the GN-HA 4 are configured by using a wireless or wired network. The connection between GN-HA 4 and the LN-HA 5, the GN-HA 4 and the GN-AAA 6, the LN-HA 5 and the LN-AAA 7, and the GN-AAA 6 and the LN-AAA 7 are configured by using wireless or wired networks, respectively.

The linkage information management system 1a may be set such that one GN 3 can use a plurality of LNs 2. Also, one LN 2 may be used by a plurality of GNs 3. Also, the plurality of GNs 3, the LN-HAs 5, and the GN-AAAs 6 may be installed (prepared) for one GN-HA 4, respectively. Also, a plurality of GN-HAs 4 and the LN-AAAs 7 may be installed (prepared) for one LN-HA 5, respectively.

A configuration of each device will be described below.

### <<LN>>

The LN 2 is function device that has a locally wireless access function and has own individual identification information. Hereafter, the individual identification information stored by the LN 2 is called LN-ID. The LN-ID stored by the LN 2 is read by the GN 3, by using means of contact/non-contact (radio or the like). As the LN-ID, for example, the information that can identify the individual based on a combination of a manufacturer of a product and a serial number thereof, the information used to identify in a specific place such as an employee card of a terminal user for unique identification, and the like are applied.

As a Specific example of the LN 2, there is the RFID tag. The RFID tag stores, for example, identification information of a product to which the RFID tag itself is attached (identification information such as a manufacturer, a manufacture number, and the like) as the LN-ID. For this reason, the RFID tag has a memory region (storage area) that can store an LN-ID. The RFID reader (corresponds to the GN 3) reads information stored in the RFID tag by using a non-contact communication method through an electric wave and the like.

In addition to the RFID tag, the LN 2 may be configured by using such equipment that the GN 3 can read the LN-ID stored in the LN 2 through means using electric waves.

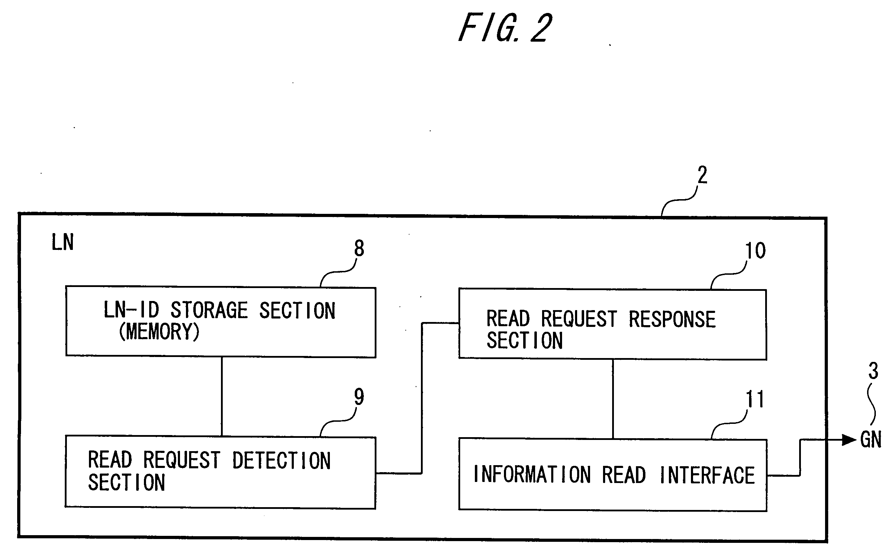

FIG. 2 is a diagram showing a function block of the LN 2. The LN 2 includes an LN-ID storage section 8, a read request detection section 9, a read request response section 10, and an information read interface 11.

The LN-ID storage section 8 is configured by using a non-volatile storage device (so-called ROM, FRAM (Ferroelectric RAM), and the like) and stores LN-IDs.

The read request detection section 9 detects a read request from the GN 3 included in data received through the information read interface 11.

The read request response section 10 reads an LN-ID from the LN-ID storage section 8 in response to a read request detected by the read request detection section 9. Then, the read request response section 10 transmits data including the read LN-ID to the GN 3 through the information read interface 11.

The information read interface 11 is configured by using one of a Bluetooth communication apparatus, an antenna used for the RFID tag, and the like. The information read interface 11 attains the communication with the GN 3.

### <<GN>>

The GN 3 is a terminal device possessed by a network user and is a terminal device that is uniquely identified inside a wide area network (for example, IP network). The GN 3 is configured by using one of a portable telephone, PDA (Personal Digital Assistants), a personal computer (especially, a notebook computer), and the like. The GN 3 has the preamble that it is possessed and used by an individual user. However, one user can possess a plurality of the GNs 3, or one GN 3 can be used by a user group including a plurality of users. Also, the GN 3 is configured by using a device that can be connected to the wide area network. Here, the GN 3 is assumed to be a client operated in accordance with the Mobile IP or the like. For this reason, the GN 3 performs the registration (location registration) of a home address and a CoA with respect to the GN-HA 4 in accordance with the Mobile IP.

Also, the GN 3 receives the data including the LN-ID from the LN 2 through the local network. The GN 3 transmits the GN-HA 4 a location registration request including the received LN-ID, through the wide area network. In other words, the GN 3 indirectly transmits the received LN-ID to a management mechanism (corresponds to the LN-HA 5) of the LN-ID inside the wide area network, including into the own location registration procedure to the wide area network.

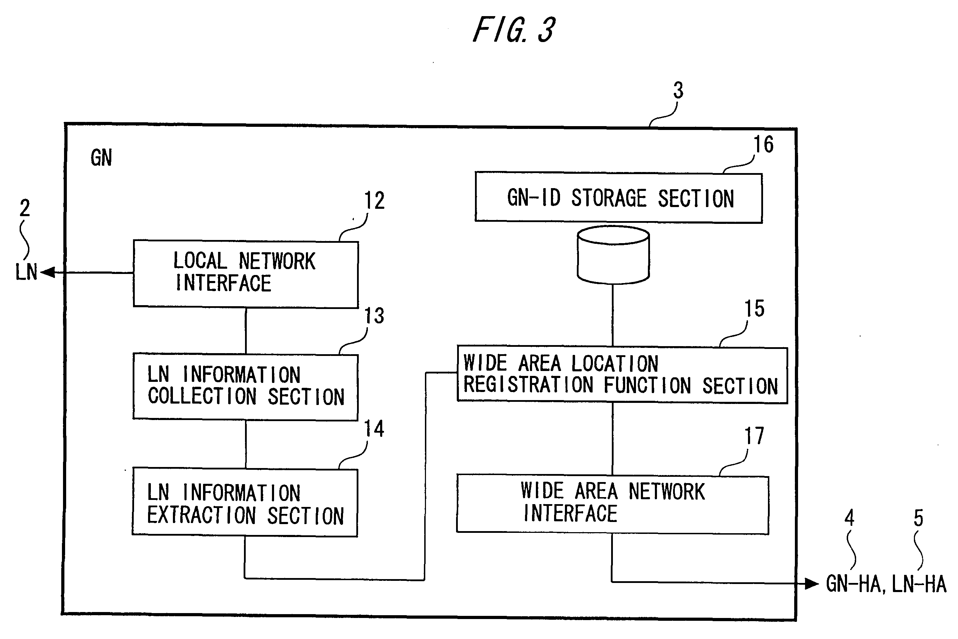

FIG. 3 is a diagram showing a function block of the GN 3. The GN 3 is configured by using a local network interface 12, an LN information collection section 13, an LN information extraction section 14, a wide area location registration function section 15, a GN-ID storage section 16, and a wide area network interface 17.

The local network interface 12 receives data including the LN-ID from the LN 2 through the local network.

The LN information collection section 13 transmits the LN 2 a read request through the local network interface 12.

The LN information extraction section 14 extracts the LN-ID from the data received from the LN 2 through the local network interface 12.

The local network interface 12, the LN information collection section 13, and the LN information extraction section 14 may be configured, for example, by using the RFID reader. Also, the foregoing three respective configurations may be realized by respective dedicated chips.

Also, the local network interface 12 may be configured by using a Bluetooth communication apparatus. In such a case, the LN information collection section 13 and the LN information extraction section 14 may be realized by dedicated chips, or may be attained by a dedicated program executed by a CPU.

The wide area location registration function section 15 is realized by a location control protocol stack (Mobile IP and the like). The wide area location registration function section 15 is realized by a program based on the location control protocol stack executed by the CPU. The wide area location registration function section 15 executes the location registration in accordance with at least the Mobile IP. The wide area location registration function section 15 reads the GN-ID from the GN-ID storage section 16. If the LN-ID is extracted by the LN information extraction section 14, the wide area location registration function section 15 creates a location registration request message including the read GN-ID and the LN-ID extracted by the LN information extraction section 14. Then, the wide area location registration function section 15 transmits the GN-HA 4 the prepared location registration request message through the wide area network interface 17.

The GN-ID storage section 16 is configured by using the non-volatile storage device (so-called ROM, FRAM, a hard disk, and the like). The GN-ID storage section 16 stores the GN-ID of the self-device (GN 3 itself) 3. The GN-ID is information that enables unique identification of the GN 3 or the user of the GN 3 in the wide area network. The GN-ID is configured, for example, by using one of the home address and the CoA for the Mobile IP, the NAI, or the like.

The wide area network interface 17 is configured by using a network interface card or the like. The wide area network interface 17 enables the GN 3 to communicate with another device through the wide area network.

### <<GN-HA>>

The GN-HA 4 at least has a function as a home agent in the Mobile IP. The GN-HA 4 further relates the GN 3 managed by the self-device (GN-HA itself) 4 with the LN 2 used by the GN 3 or the user of the GN 3, and manages (stores) them. Also, upon reception of a location registration message from the GN 3, the GN-HA 4 transmits the data including the LN-ID in the received location registration message to another device, on the basis of the content of the received location registration message.

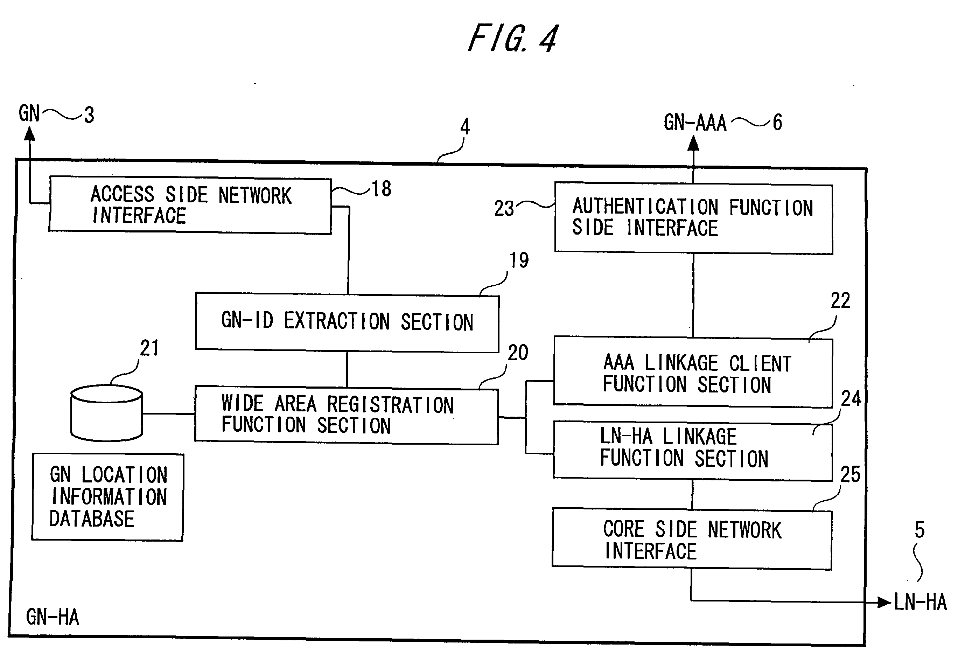

FIG. 4 is a diagram showing a function block of the GN-HA 4. The GN-HA 4 is configured by using an access side network interface 18, a GN-ID extraction section 19, a wide area location registration function section 20, a GN location information database 21, an AAA linkage client function section 22, an authentication function side interface 23, an LN-HA linkage function section 24, and a core side network interface 25.

The access side network interface 18 is configured by using a network interface card or the like. The access side network interface 18 enables the GN-HA 4 to communicate with the GN 3 through the wide area network.

The GN-ID extraction section 19 extracts the GN-ID from the message received through the access side network interface 18.

The wide area location registration function section 20 is realized by a location control protocol stack.

The GN location information database 21 is configured by using a non-volatile memory such as a hard disk, a flash memory, or the like. The GN location information database 21 relates the home address of the GN 3 with the CoA, and stores them. The GN location information database 21 also relates the GN-ID with the LN-ID, and stores them. If the GN-ID is neither the home address of the GN 3 nor the CoA, the GN database 21 further relates the home address or the CoA with the GN-ID, and stores them.

The authentication function side interface 23 is configured by using a network interface card or the like. The authentication function side interface 23 enables the GN-HA 4 to communicate with the GN-AAA 6 through the wide area network.

The core side network interface 25 is configured by using a network interface card or the like. The core side network interface 25 enables the GN-HA 4 to communicate with the LN-HA through the wide area network.

The GN-ID extraction section 19, the wide area location registration function section 20, the AAA linkage client function section 22, and the LN-HA linkage function section 24 may be realized by respective dedicated chips, or may be attained by a dedicated program executed by a CPU.

### <<LN-HA>>

The LN-HA 5 is a server for managing location information of the LN 2. The location information of the LN 2 indicates a relation with the GN 3 as a terminal used by the user occupying (or sharing) the LN 2, in addition to geographic information in the existing location management system, location information on the network of network devices located in the vicinity of the LN 2, or the like. In other words, the LN-HA manages information, as the location of each LN 2, indicating the user of which GN 3 who uses the LN 2.

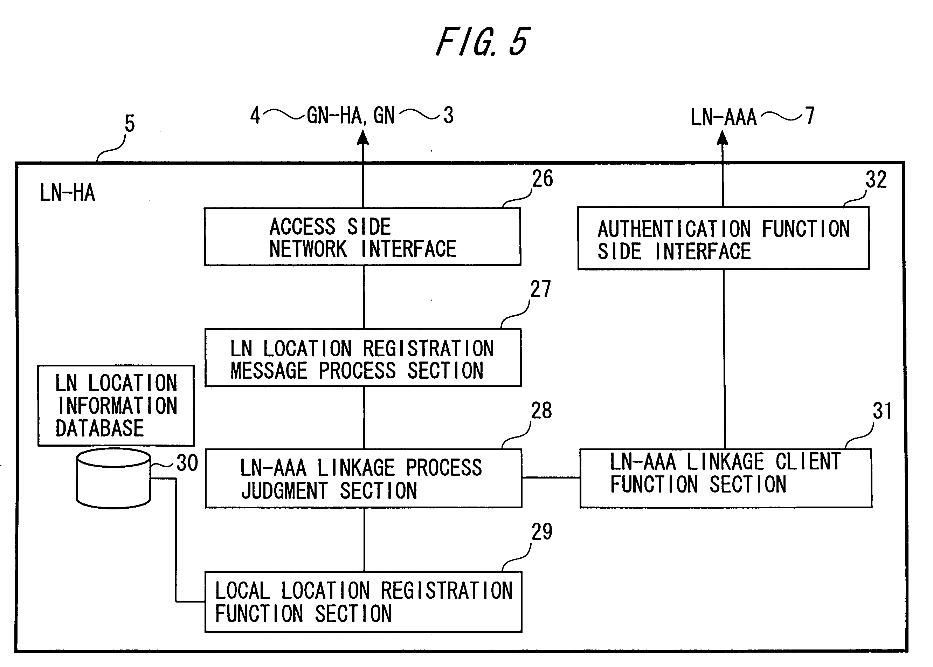

FIG. 5 is a diagram showing a function block of the LN-HA 5. The LN-HA 5 is configured by using an access side network interface 26, an LN location registration message process section 27, an LN-AAA linkage process judgment section 28, a local location registration function section 29, an LN location information database 30, an LN-AAA linkage client function section 31, and an authentication function side interface 32.

The access side network interface 26 is configured by using a network interface card or the like. The access side network interface 26 enables the LN-HA 5 to communicate with the GN 3 and the GN-HA 4 through the wide area network.

The authentication function side interface 32 is configured by using a network interface card or the like. The authentication function side interface 32 enables the LN-HA 5 to communicate with the LN-AAA 7 through the wide area network.

The local location registration function section 29 is realized by the location control protocol stack. The LN location registration message process section 27, the LN-AAA linkage process judgment section 28, the local location registration function section 29, and the LN-AAA linkage client function section 31 may be realized by respective dedicated chips, or may be realized by a dedicated program executed by a CPU. Operations of those configurations will be described in columns of operation examples.

### <<GN-AAA>>

The GN-AAA 6 authenticates the validity of a certain GN 3 (whether or not it is a normal contractor to the GN-HA 4). Also, the GN-AAA 6 carries out linkage of an authentication procedure with the LN-AAA 7, in accordance with authentication information with regard to the LN 2 related to the certain GN 3.

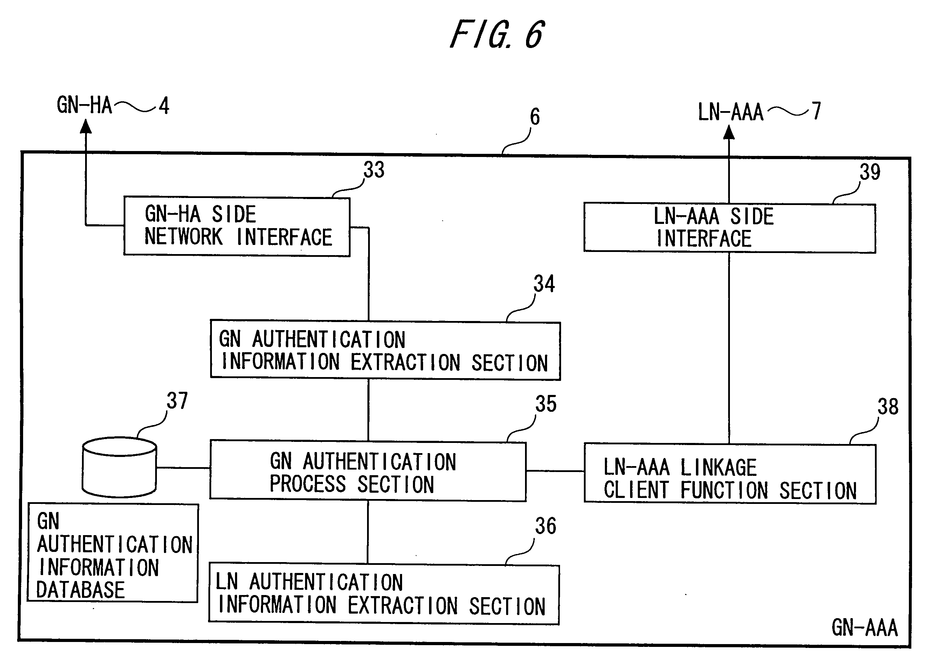

FIG. 6 is a diagram showing a function block of the GN-AAA 6. The GN-AAA 6 is configured by using a GN-HA side network interface 33, a GN authentication information extraction section 34, a GN authentication process section 35, an LN authentication information extraction section 36, a GN authentication information database 37, an LN-AAA linkage client function section 38, and an LN-AAA side interface 39.

The GN-HA side network interface 33 is configured by using a network interface card or the like. The GN-HA side network interface 33 enables the GN-AAA 6 to communicate with the GN-HA 4 through the wide area network.

The GN authentication information database 37 is configured by using a non-volatile storage device such as a hard disk, a flash memory, or the like. The GN authentication information database 37 stores information used to authenticate the GN 3. For example, if the GN 3 is authenticated by use of a password and ID, the GN authentication information database 37 relates the password and ID with each GN 3 and stores them.

The LN-AAA side interface 39 is configured by using a network interface card or the like. The LN-AAA side interface 39 enables the GN-AAA 6 to communicate with the LN-AAA 7 through the wide area network.

The GN authentication information extraction section 34, the GN authentication process section 35, the LN authentication information extraction section 36 and the LN-AAA linkage client function section 38 may be realized by respective dedicated chips, or may be realized by a dedicated program executed by a CPU. Operations of those configurations will be explained in columns of operation examples.

### <<LN-AAA>>

The GN-AAA 7 authenticates the validity of the LN 2 (whether or not the LN 2 is equipment normally registered in the LN-AAA 7) .

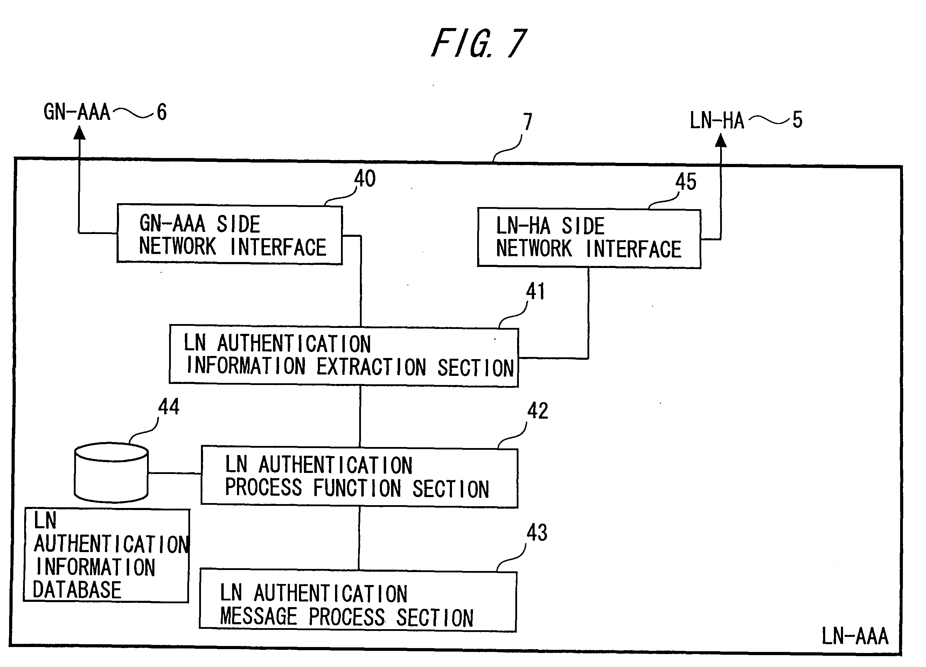

FIG. 7 is a diagram showing a function block of the LN-AAA 7. The LN-AAA 7 is configured by using a GN-AAA side network interface 40, an LN authentication information extraction section 41, an LN authentication process function section 42, an LN authentication message process section 43, an LN authentication information database 44, and an LN-HA side network interface 45.

The GN-AAA side network interface 40 is configured by using a network interface card, or the like. The GN-AAA side network interface 40 enables the LN-AAA 7 to communicate with the GN-AAA 6 through the wide area network.

The LN authentication information database 44 is configured by using a non-volatile storage device such as a hard disk, a flash memory, or the like. The LN authentication information database 44 stores information used to authenticate the LN 2. For example, if the LN 2 is authenticated by use of a bit row, the LN authentication information database 44 relates the bit row with an LN-ID for each LN 2, and stores them.

The LN-HA side network interface 45 is configured by using a network interface card or the like. The LN-HA side network interface 45 enables the LN-AAA 7 to communicate with the LN-HA 5 through the wide area network.

The LN authentication information extraction section 41, the LN authentication process function section 42, and the LN authentication message process section 43 may be realized by respective dedicated chips, or may be realized by a dedicated program executed by the CPU. Operations of those configurations will be explained in columns of operation examples.

### <Format Example of Message>

A message to be transmitted and received between the respective devices of the linkage information management system 1a will be described below by using the drawings.

### <<GN Location Registration Request/Response>>

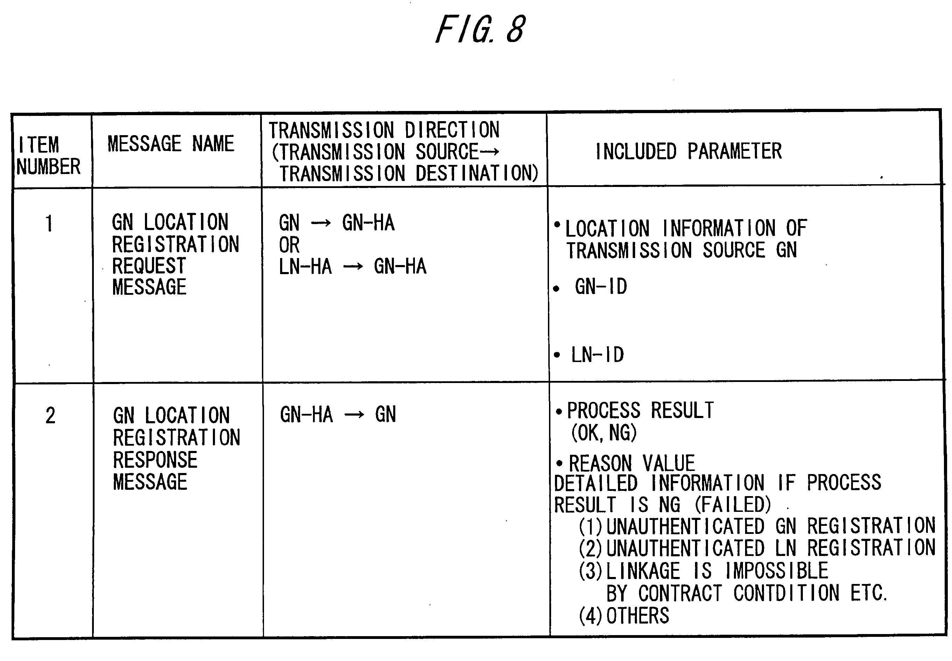

FIG. 8 is a diagram showing schemas of a GN location registration request message and a GN location registration response message. The GN location registration request message (Item Number 1) is a message transmitted from the GN 3 to the GN-HA 4 or from the LN-HA 5 to the GN-HA 4.

The GN location registration requestmessage is used to request that it is registered and held information, in which the GN-ID and LN-ID possessed by the transmission source (GN 3, LN-HA 5) are related each other, linkage information. The GN location registration request message includes a location registration request message that is transmitted and received between the GN and the GN-HA, in the usual Mobile IP. The GN location registration request message includes location information of the GN 3, and the GN-ID and LN-ID of this GN 3, as parameters. The LN-ID is, for example, the LN-ID of the LN 2 used in linkage with the GN 3. The location information of the GN 3 is configured, for example, by using at least any one of the current CoA, the home address, the address of an accommodation router, and the like of the GN 3.

The GN location registration response message (Item Number 2) is a message transmitted from the GN-HA 4 to the GN 3.

The GN location registration response message is a message to report a process result to a transmission source of the GN location registration request message. For this reason, the GN location registration response message includes a value indicating a process result (OK or NG) of the location registration process. Also, the GN location registration response message includes a value indicating detailed information of the process, as a reason value, if the value of the process result indicates NG. As examples of such detailed information, there are "GN Registration Invalid", "LN Registration Invalid", "Linkage Impossible due to Contract Condition or the like", and the like. The "GN Registration Invalid" indicates that registration of the GN is invalid. The "LN Registration Invalid" indicates that registration of the LN is invalid.

### <<Linkage Information Registration Request/Response>>

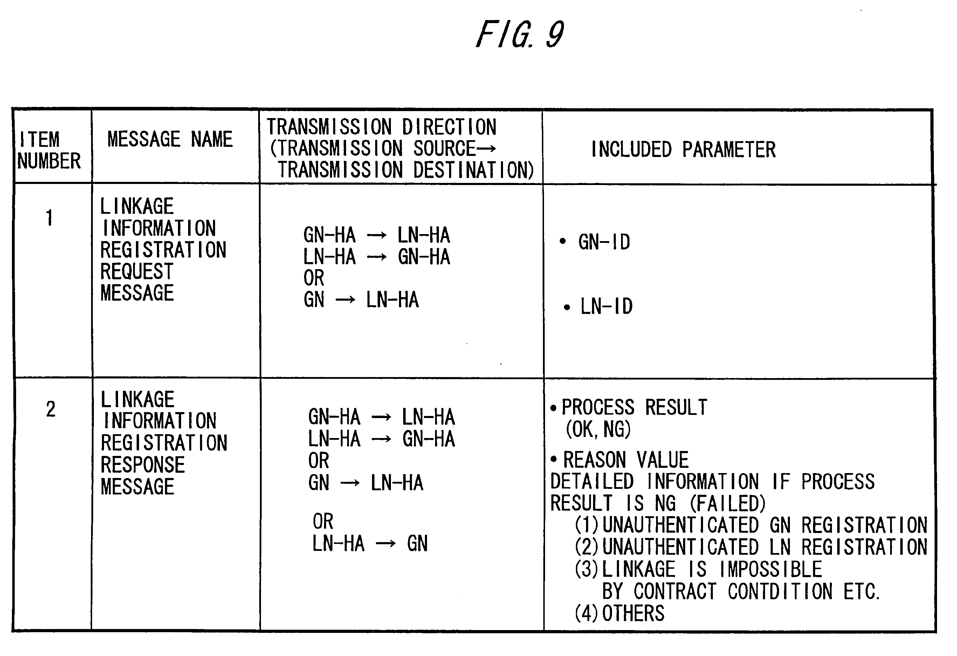

FIG. 9 is a diagram showing schemas of a linkage information registration request message and a linkage information registration response message. The linkage information registration request message (Item Number 1) is a message transmitted from the GN-HA 4 to the LN-HA 5, from the LN-HA 5 to the GN-HA 4, or from the GN 3 to the LN-HA 5.

The linkage information registration request message is used to request that it is registered and held the GN-ID and LN-ID possessed by the transmission source (GN-HA 4, LN-HA 5) as the linkage information.

The linkage information registration request message includes the GN-ID, and the LN-ID to be stored in linkage with the GN-ID, as parameters. For example, the linkage information registration request message includes the GN-ID of a certain GN 3, and the LN-ID of the LN 2 used in linkage with this GN 3.

The linkage information registration response message (Item Number 2) is a message transmitted from the GN-HA 4 to the LN-HA 5, from the LN-HA 5 to the GN-HA 4, or from the LN-HA 5 to the GN 3.

The linkage information registration response message is a message to report a process result to a transmission source of the linkage information registration request message. For this reason, the linkage information registration response message includes a value of the process result (OK or NG) of the linkage information registration process. Also, the linkage information registration response message includes a value indicating detailed information of the process, as a reason value, if the value of the process result indicates NG. As examples of such detailed information, there are "GN Registration Invalid", "LN Registration Invalid", "Linkage Impossible due to Contract Condition and the like", and the like. The "GN Registration Invalid" indicates that registration of the GN is invalid. The "LN Registration Invalid" indicates that registration of the LN is invalid.

### <<Authentication Information Transfer/Response>>

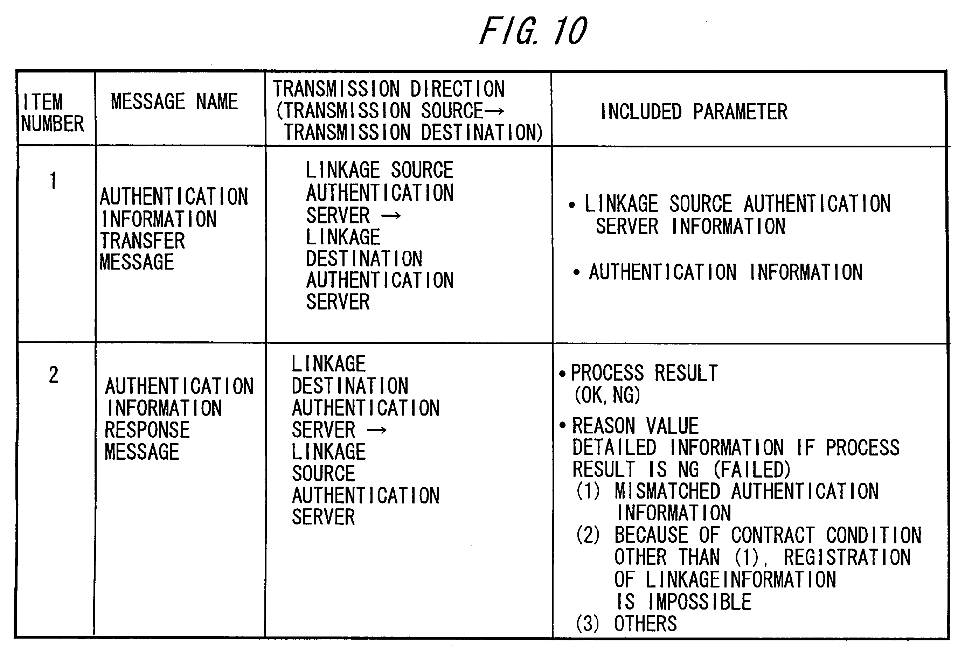

FIG. 10 is a diagram showing schemas of an authentication information transfermessage and an authentication response message. The authentication information transfer message (Item Number 1) is a message transmitted from a linkage source authentication server to a linkage destination authentication server. The linkage source authentication server is one of the GN-AAA 6 and the LN-AAA 7 that early obtains the GN-ID and the LN-ID. The linkage destination authentication server is one of the GN-AAA 6 and the LN-AAA 7 to which the GN-ID or LN-ID is reported from the linkage source authentication server.

The authentication information transfer message is used to transfer the authentication information with regard to a device (LN 2 or GN 3) to be authenticated by the linkage destination authentication server, from the linkage source authentication server to the linkage destination authentication server. For this reason, the authentication information transfer message includes the authentication information. For example, if the GN 3 is authenticated by use of a password and ID, the authentication information includes the password and ID for the GN 3. Also, the authentication information transfer message includes linkage source authentication server information. The linkage source authentication server information is used for the linkage destination authentication server to check that the linkage destination authentication server and the linkage source authentication server have a reliability relation.

The authentication information response message (Item Number 2) is a message transmitted from the linkage destination authentication server to the linkage source authentication server.

The authentication information response message is used to report a result of an authentication process performed by the linkage destination authentication server to the linkage source authentication server. For this reason, the authentication information response message includes a value of the process result (OK or NG) of the authentication process. Also, the linkage information registration response message includes a value indicating detailed information of the process, as a reason value, if the value of the process result indicates NG. As examples of such detailed information, there are "Authentication Information Mismatch", "Linkage Impossible due to Contract Condition and the like" and the like.

### <Operation Example of Each Device>

The operation example of each device constituting the linkage information management system 1a will be described below by using the drawings.

### <<GN>>

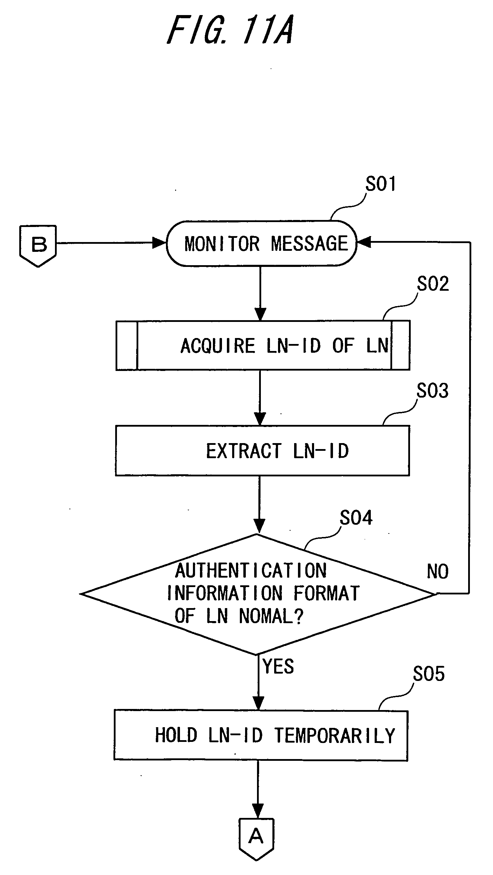

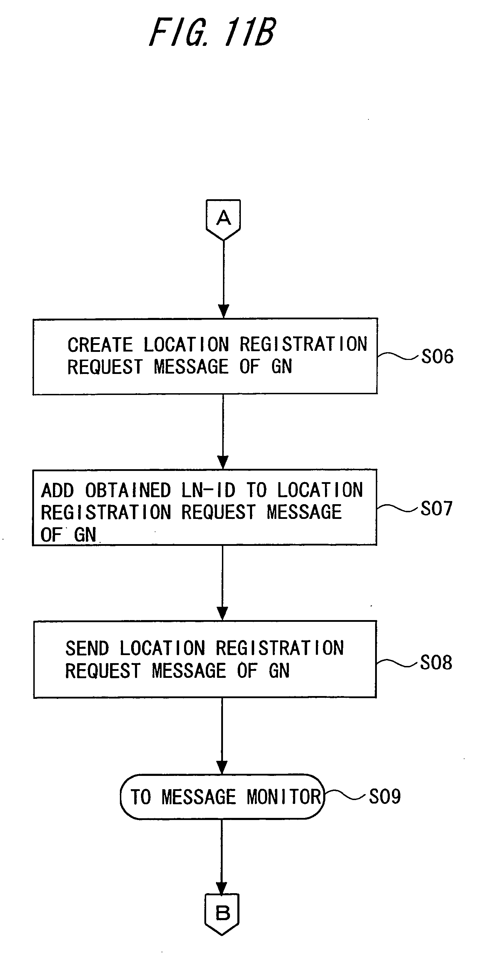

FIGS. 11A and 11B are flowcharts showing an operation example of the GN 3. FIG. 11 is used to explain the operation example of the GN 3.

The LN information collection section 13 monitors messages received through the local network interface 12 (S01). When the LN information collection section 13 acquires a message including the LN-ID of the LN 2 (S02), the LN information extraction section 14 extracts the LN-ID from the acquired message (S03). Incidentally, the process of S02 is the process to be executed for general purpose.

The LN information extraction section 14 judges whether or not the LN-ID information format of the LN 2 is normal. If the LN-ID information format is not normal (S04-NO), the process of S01 is again executed. On the other hand, if the LN information format is normal (S04-YES), the wide area location registration function section 15 temporarily stores the extracted LN-ID in an LN information storage region (not shown) (S05). The LN information storage region is configured by using a storage device such as RAM (Random Access Memory) or the like. Next, the wide area location registration function section 15 prepares (creates) a GN location registration requestmessage (refer to FIG. 8) (S06). Next, the wide area location registration function section 15 adds the LN-ID stored in the LN information storage region, to the prepared GN location registration request message (S07). Then, the wide area location registration function section 15 transmits the GN location registration request message through the wide area network interface 17 (S08).

After the foregoing processes, the LN information collection section 13 again monitors messages received through the local network interface 12 (S09).

### <<GN-HA>>

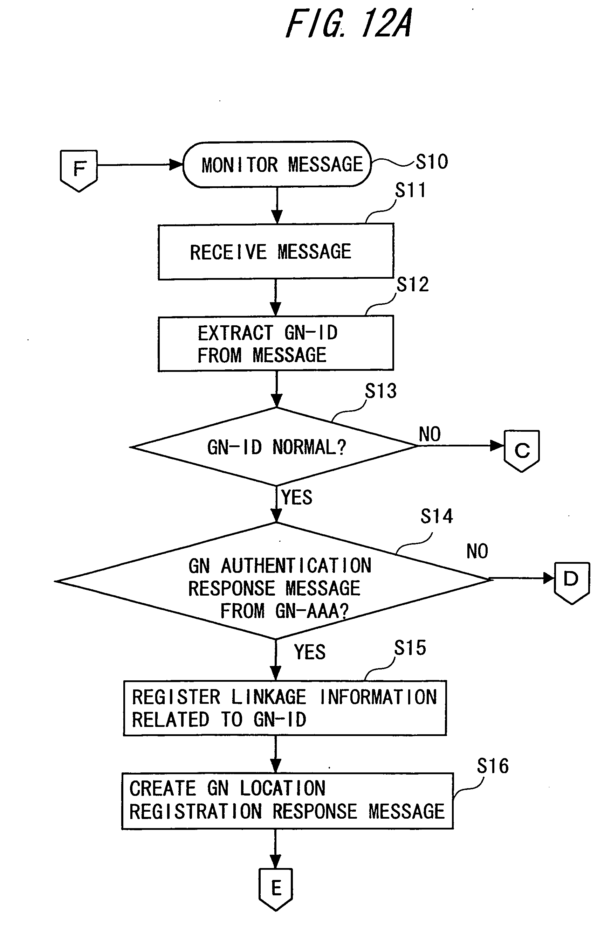

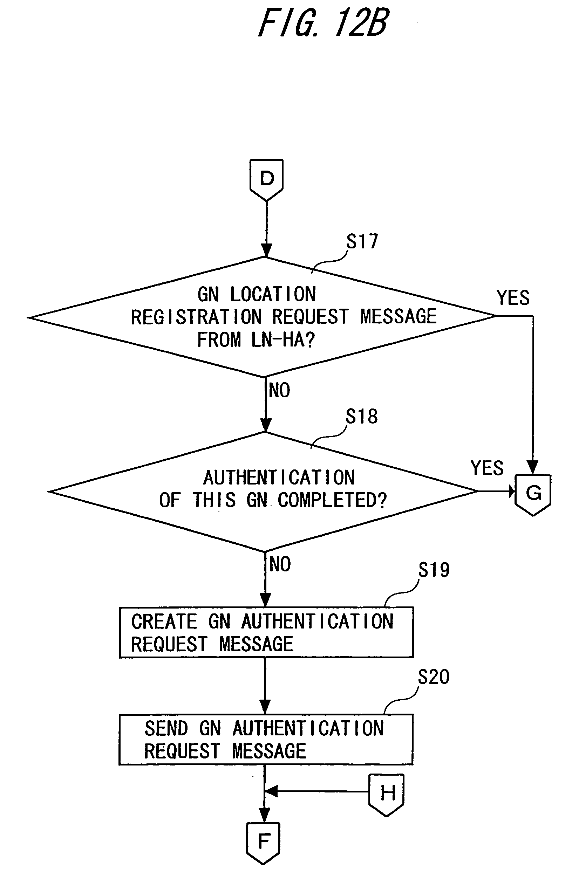

FIG. 12A, FIG. 12B, FIG. 12C, and FIG. 12D are flowcharts showing an operation example of the GN-HA 4. FIG. 12A, FIG. 12B, FIG. 12C, and FIG. 12D are used to explain the operation example of the GN-HA 4.

The GN-ID extraction section 19 monitors messages (S10: refer to FIG. 12A). When a message is received through the access side network interface 18, the authentication function side interface 23, or the core side network interface 25 (S11), the GN-ID extraction section 19 extracts a GN-ID from the received message (S12). As examples of such messages, there are the GN location registration request message, the linkage information registration request message, and the GN authentication response message. The GN authentication response message is a message transmitted from the GN-AAA 6 to the GN-HA 4 and includes the authentication result about the GN 3 and the GN-ID of this GN 3.

The GN-ID extraction section 19 judges whether or not the extracted GN-ID is a normal value (S13). If the extracted GN-ID is not a normal value (S13-NO), a process of S29 and subsequent processes are executed. The process of S29 and subsequent processes will be described later.

If the extracted GN-ID is a normal value (S13-YES), the wide area location registration function section 20 judges whether or not the received message is a GN authentication response message from the GN-AAA 6 (S14).

If the receivedmessage is a GN authentication response message from the GN-AAA 6 (S14-YES), the wide area location registration function section 15 registers linkage information with regard to the extracted GN-ID (S15). For example, the wide area location registration function section 15 relates the extracted GN-ID with the LN-ID stored in a storage region (not shown) in association with this GN-ID, and stores them in the GN location information database 21.

Next, the wide area location registration function section 15 prepares the GN location registration response message (see FIG. 8) (S16). Then, thewidearea location registration function section 15 transmits the GN 3 the prepared GN location registration response message through the access side network interface 18 (S30: see FIG. 12D).

On the other hand, if the received message is not a GN authentication response message from the GN-AAA 6 (S14-NO), the wide area location registration function section 15 judges whether or not the received message is a GN location registration request message from the LN-HA 5. If the received message is a GN location registration request message (S17-YES), a process of S21 and subsequent processes are executed. The pro cess of S21 and subsequent processes will be described later.

On the other hand, if the received message is not a GN location registration request message (S17-NO), the wide area location registration function section 15 judges whether or not the authentication of the extracted GN-ID has been completed. This judgment may be attained in any manner, for example, by using a table storing authenticated GN-IDs.

If the authentication for the GN 3 corresponding to the extracted GN-ID has been completed (S18-YES), the process of S21 and subsequent processes are executed. The process of S21 and subsequent processes will be described later.

On the other hand, if the authentication for the GN 3 corresponding to the extracted GN-ID has not been completed (S18-NO), the wide area location registration function section 15 prepares a GN authentication request message to carry out the authentication for this GN 3 (S19). Then, the wide area location registration function section 15 transmits the GN-AAA 6 the prepared GN authentication request message through the authentication function side interface 23 (S20). Then, the process of S10 and subsequent processes are again executed.

The process of S21 and subsequent processes will be described below by using FIGS. 12C and 12D. At first, the wide area location registration function section 15 registers current-location information of the GN-ID in the GN location information database 21 (S21). Then, the wide area location registration function section 15 retrieves an LN-ID from the received message (S22). If the received message does not include the LN-ID (S23-NO), the process of S29 and subsequent processes are executed. The process of S21 and subsequent processes will be described later.

On the other hand, if the received message includes the LN-ID (S23-YES), the LN-HA linkage function section 24 prepares a linkage information registration request message (S24). Then, the LN-HA linkage function section 24 transmits the prepared linkage information registration request message (S25-a).

The LN-HA linkage function section 24, when a linkage information registration response message corresponding to the transmitted linkage information registration request message is received (S25-b), judges whether or not a process result is normal (S26). At this time, the LN-HA linkage function section 24 makes a judgment by referring to a parameter indicating the process result, included in the received linkage information registration response message.

If the process result is normal (S26-YES), the LN-HA linkage function section 24 relates the LN-ID included in the received linkage information registration response message with the GN-ID registered at S21 and registers them (S27). Then, the LN-HA linkage function section 24 prepares a GN location registration response message (S29).

On the other hand, if the process result is not normal (S26-NO), the LN-HA linkage function section 24 uses the value indicating the process result, included in the received linkage information registration response message and the reason value, and creates a GN location registration response message (S28, S29).

Then, the LN-HA linkage function section 24 transmits the prepared GN location registration response message through the access side network interface 18 (S30). Then, the process of S10 is again started (S31).

### <<LN-HA>>

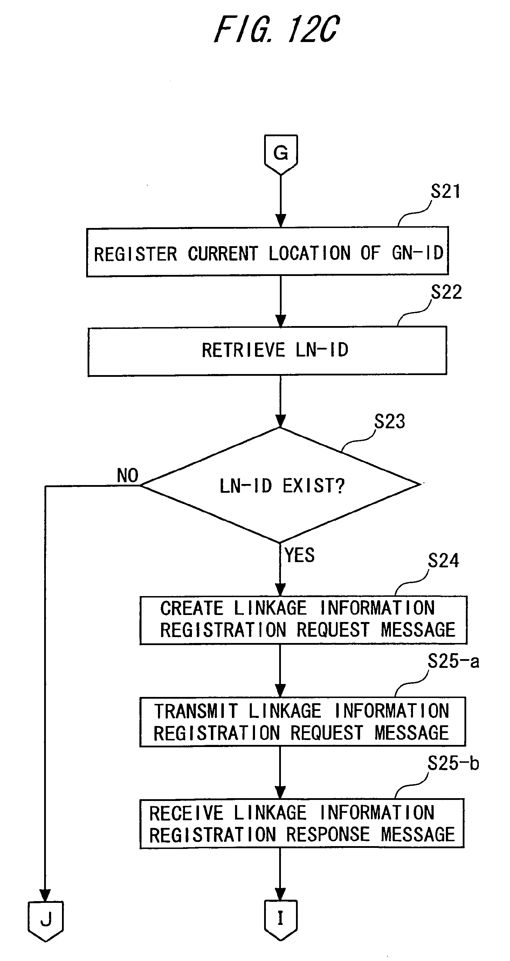

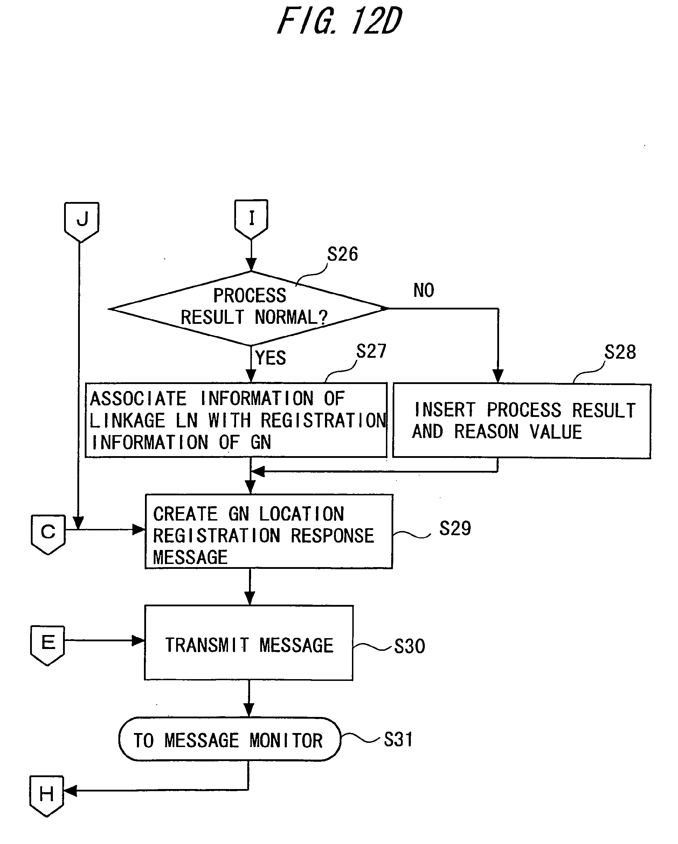

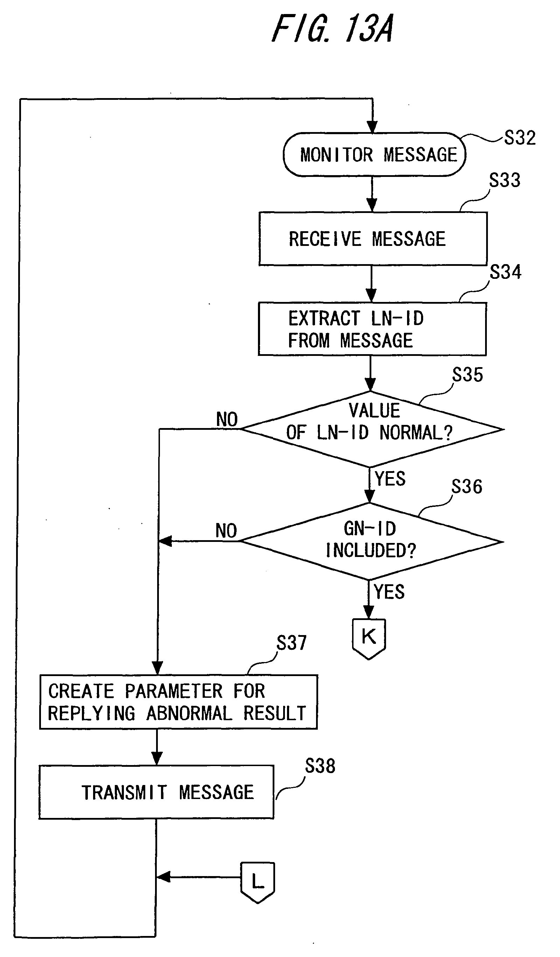

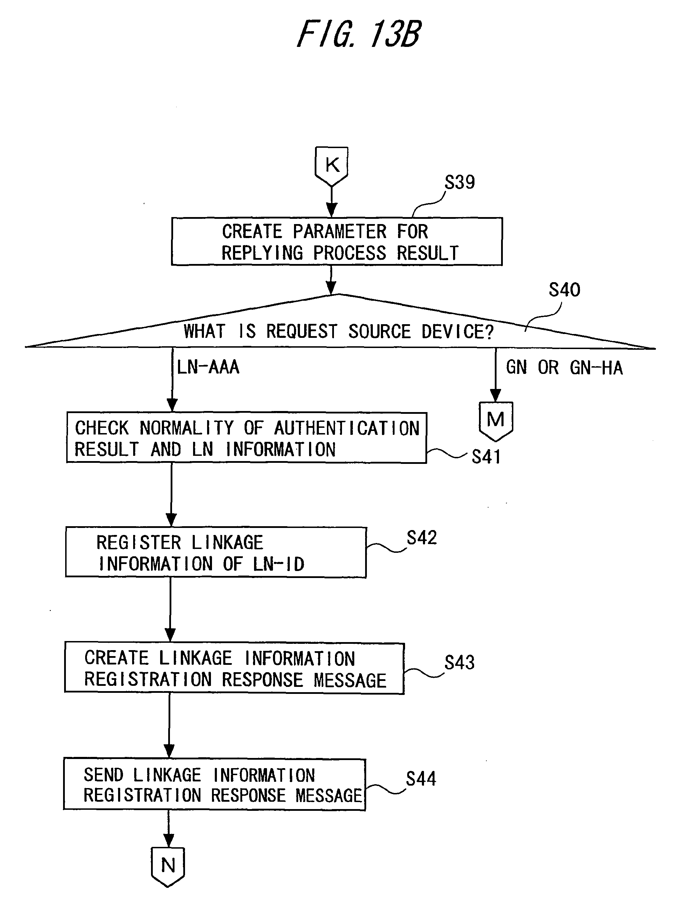

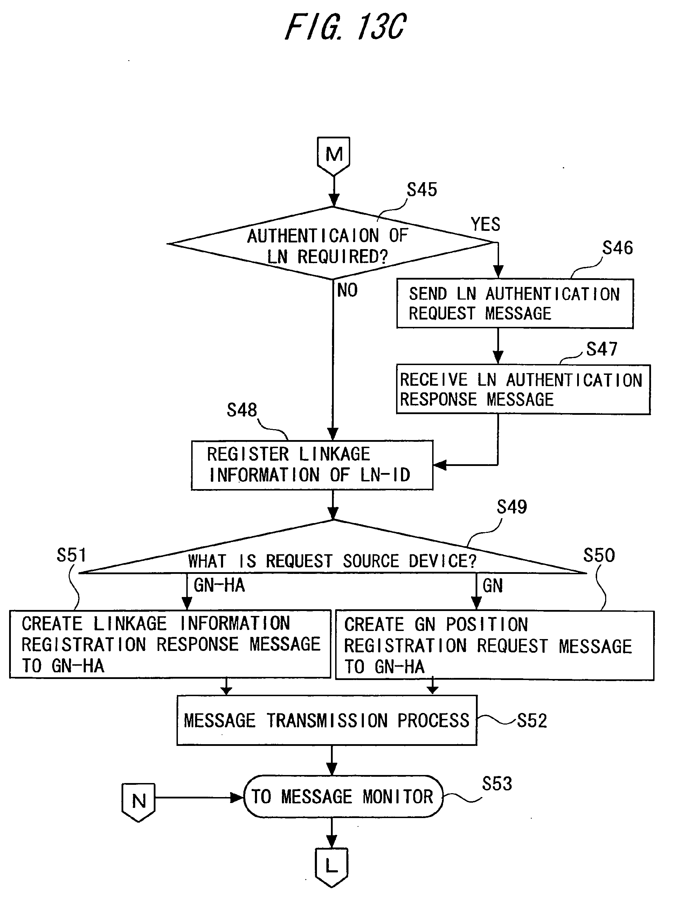

FIG. 13A, FIG. 13B, and FIG. 13C are flowcharts showing an operation example of the LN-HA 5. FIG. 13A, FIG. 13B, and FIG. 13C are used to explain the operation example of the LN-HA 5.

The LN location registration message process section 27 monitors messages to be received (S32). When a message (linkage information registration request message) is received (S33), the LN location registration message process section 27 extracts an LN-ID from the received message (S34).

Next, the LN location registration message process section 27 judges whether or not the value of the extracted LN-ID is normal. If the value of the extracted LN-ID is normal (S35-YES), the LN location registration message process section 27 judges whether or not the received message includes a GN-ID. If the receivedmessage includes the GN-ID (S36-YES), a process of S39 and subsequent processes are executed. The process of S39 and subsequent processes will be described later.

On the other hand, if the value of the extracted LN-ID is not normal (S35-NO), or if the received message does not include a GN-ID (S36-NO), the LN location registration message process section 27 prepares an abnormal result reply parameter (S37). The abnormal result reply parameter is a value to report the fact that the received message is not a normal message, to a device that is the transmission source of the received message. Then, the LN location registration message process section 27 transmits a message including the prepared abnormal result reply parameter, to a device that is the transmission source of the received message (S38).

Next, FIGS. 13B and 13C are used to explain the process of S39 and subsequent processes. The LN-AAA linkage process judgment section 28 prepares the process result reply parameter (S39). The process result reply parameter is a value to report the result of the process in the LN-HA 5, to a device that is the transmission source (namely, the request source of the linkage information registration) of the received message.

If the request source device is the LN-AAA 7 (S40: LN-AAA), the LN-AAA linkage client function section 31 checks the validity of the authentication result and information of the LN 2 (S41). Next, the local location registration function section 29 registers the linkage information of the extracted LN-ID in the LN location information database 30 (S42).. Next, the LN-AAA linkage client function section 31 creates a linkage information registration response message (S43). Then, the LN-AAA linkage client function section 31 transmits the prepared linkage information registration response message to the LN-AAA 7 as the request source, through the authentication function side interface 32.

If the request source device is the GN 3 or GN-HA 4 (S40: GN or GN-HA), the LN-AAA linkage client function section 31 judges whether or not the authentication process for the LN 2 is required (S45). If the authentication for the LN 2 is required (S45-YES), namely, if the linkage information management system 1a needs to be authenticated, the LN-AAA linkage client function section 31 creates a LN authentication request message. Then, the LN-AAA linkage client function section 31 transmits the prepared LN authentication request message to the LN-AAA 7, through the authentication function side interface 32 (S46).

When the LN authentication responsemessage is received through the authentication function side interface 32, or when the authentication for the LN 2 is not required (S45-NO), the local location registration function section 29 registers the linkage information for the extracted LN-ID in the LN location information database 30 (S48).

If the request source device is the GN-HA (S49: GN-HA), the LN location registrationmessage process section 27 creates a linkage information registration response message designated to the GN-HA 4 (S51). On the other hand, if the request source device is the GN 3 (S49 : GN), the LN location registration message process section 27 creates a GN location registration request message designated to the GN-HA 4 (S50). Then, the LN location registration message process section 27 transmits the prepared message through the access side network interface 26 (S52). After that, the message monitor process of S32 is resumed (S53).

### <<GN-AAA>>

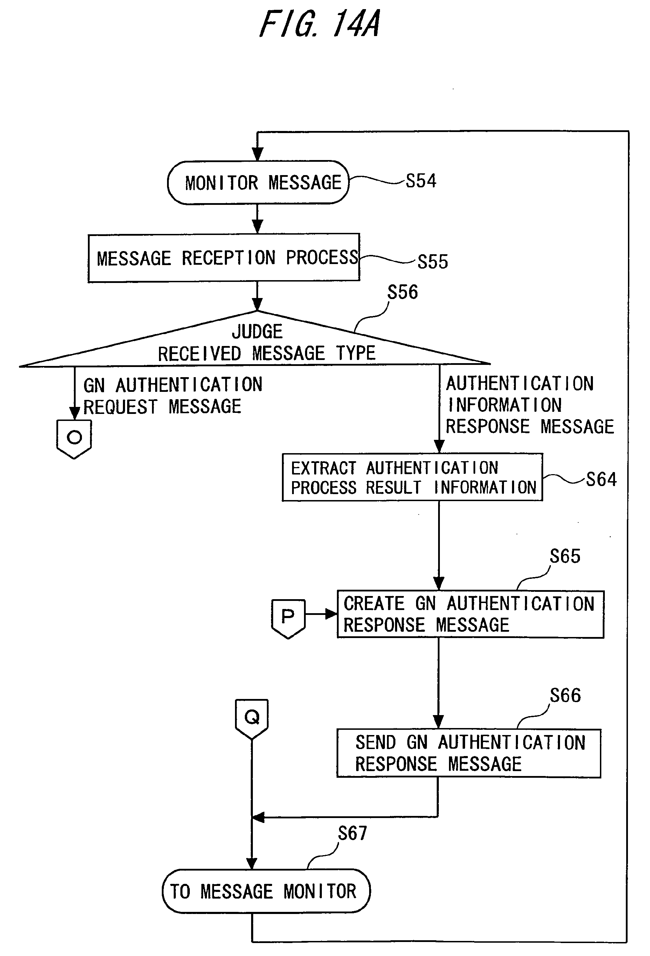

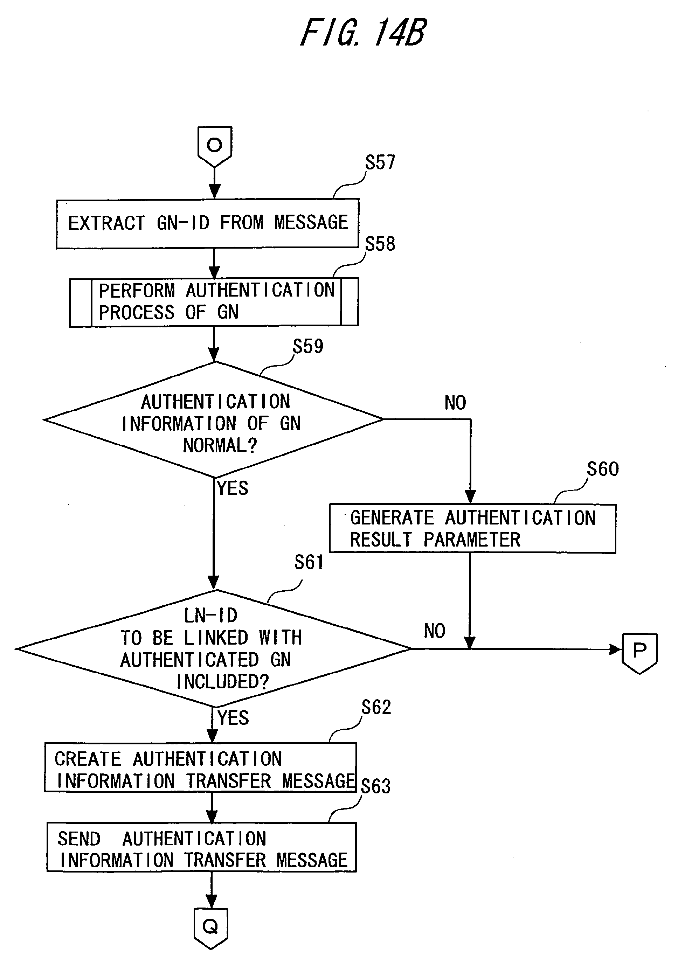

FIGS. 14A and 14B are flowcharts showing an operation example of the GN-AAA 6. FIGS. 14A and 14B are used to explain the operation example of the GN-AAA 6.

The GN authentication information extraction section 34 monitors messages received through the GN-HA side network interface 33 or LN-AAA side interface 39 (S54). When a message is received from the GN-HA 4 or LN-AAA 7 (S55), the GN authentication information extraction section 34 judges the type of the received message.

If the received message is the GN authentication request message (S56: GN authentication request message), the GN authentication information extraction section 34 extracts the GN-ID from the received message (S57). The GN authentication process section 35 performs the authentication process for the GN 3 specified by the extracted GN-ID (S58). This authentication process is performed by the general purpose process (the authentication procedure of a usual AAA server).

If the authentication information of the GN 3 is abnormal (S59-NO), the GN authentication process section 35 prepares an authentication result parameter (S60). The authentication result parameter is a value to report the result of the authentication process executed by the GN authentication process section 35, to the transmission source of the GN authentication request message. After that, with the process of S65 and subsequent processes, the GN authentication response message including the prepared authentication result parameter is transmitted. The process of S65 and subsequent processes will be described later.

On the other hand, if the authentication information of the GN 3 is normal (S59-YES), the LN authentication information extraction section 36 judges whether or not the LN-ID corresponding to the GN-ID of the authenticated GN 3 is included in the received message. If the LN-ID is not included in the received message (S61-NO), the authentication process is performed for only the GN 3. In this case, with the process of S65 and subsequent processes, the GN authentication response message is transmitted. The process of S65 and subsequent processes will be described later.

On the other hand, if the LN-ID is included in the received message (S61-YES), the LN authentication information extraction section 36 prepares the authentication information transfer message (S62). Then, the LN authentication information extraction section 36 transmits the prepared authentication information transfer message through the LN-AAA side interface 39 (S63).

If the received message is the authentication information response message (S56: authentication information response message), the LN-AAA linkage client function section 31 extracts the authentication process result information from the received message (S64). The LN-AAA linkage client function section 31 prepares the GN authentication response message (S65). Then, the LN-AAA linkage client function section 31 transmits the prepared GN authentication response message through the GN-HA side network interface 33 (S66) . Then, the message monitor process of S54 is started (S67).

### <<LN-AAA>>

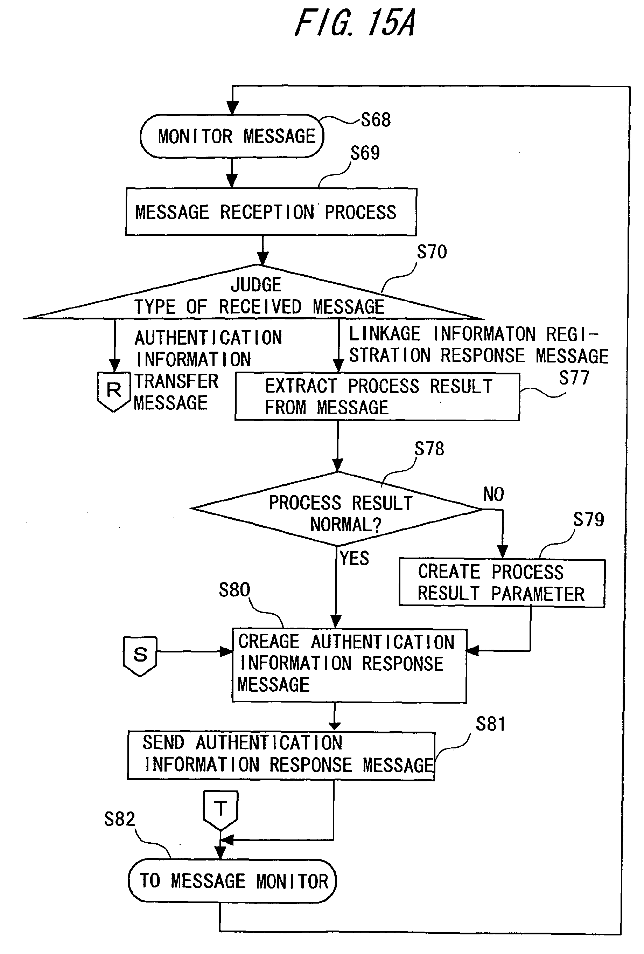

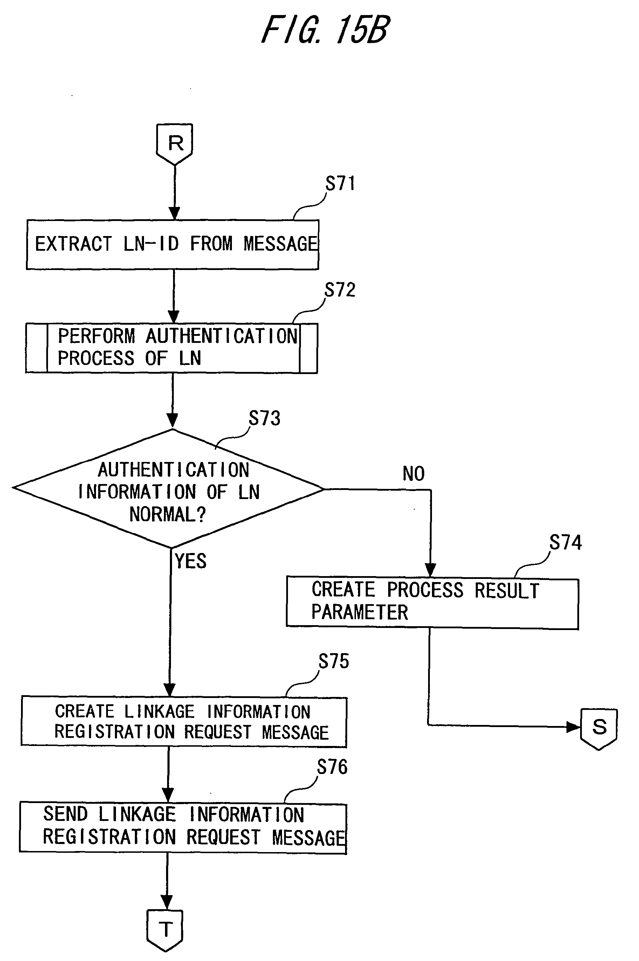

FIGS. 15A and 15B are flowcharts showing the operation example of the LN-AAA 7. FIGS. 15A and 15B are used to explain the operation example of the LN-AAA 7.

The LN authentication information extraction section 41 monitors the message received through the GN-AAA side network interface 40 or LN-HA side network interface 45 (S68). When the message is received (S69), the LN authentication information extraction section 41 judges the type of the received message (S70).

If the received message' is the authentication information transfer message (S70: authentication information transfer message), the LN authentication information extraction section 41 extracts the LN-ID from the received message (S71). Then, the LN authentication process function section 42 performs the authentication process on the LN 2 corresponding to the extracted LN-ID (S72). This authentication process is performed by the general purpose authentication process (the authentication process of the usual AAA server).

If the authentication information of the LN 2 is not normal (S73-NO), the LN authentication process function section 42 prepares a process result parameter indicating this process result (S74). Then, the process of S80 and subsequent processes are executed to transmit the authentication information response message including the prepared process result parameter. The process of S80 and subsequent processes will be described later.

On the other hand, if the authentication information of the LN 2 is normal (S73-YES), the LN authentication message process section 43 prepares the linkage information registration request message (S75). Then, the LN authentication message process section 43 transmits the prepared linkage information registration request message (S76).

On the other hand, if the received message is the linkage information registration response message (S70: linkage information registration response message), the LN authentication information extraction section 41 extracts the parameter indicating the process result from the received message (S77). The LN authentication process function section 42 judges whether or not the parameter indicating the extracted process result is the value indicating the normality.

If the parameter indicating the process result is the value that is not normal (S78-NO), the LN authentication process function section 42 prepares the parameter indicating the process result that is not normal (S79). The LN authentication message process section 43 prepares the authentication information response message including the prepared parameter (S80). On the other hand, if the parameter indicating the process result is the normal value (S78-YES), the LN authentication message process section 43 prepares the authentication information response message. Then, the LN authentication message process section 43 transmits the prepared authentication information response message (S81). After that, the message monitor process of S68 is started (S81).

If the received message is the LN authentication request message, the LN-AAA 7 performs the authentication process on the LN 2, in response to the received LN authentication request message. The LN-AAA 7 prepares the LN authentication response message including the result of the authentication process. Then, the LN-AAA 7 transmits the prepared LN authentication response message to the LN-HA 5.

### <Operation Example of System>

The operation example of the linkage information management system 1a will be described below by using the drawings. Note that, when the respective operation examples explained below are attained, the operation examples of the respective units as mentioned above by using FIG. 11A to FIG. 15B need to be suitably changed.

### <<First Operation Example>>

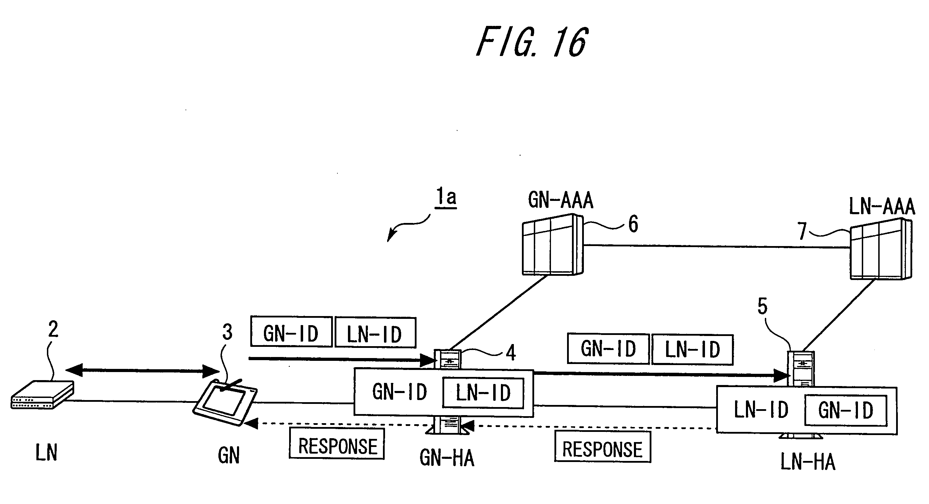

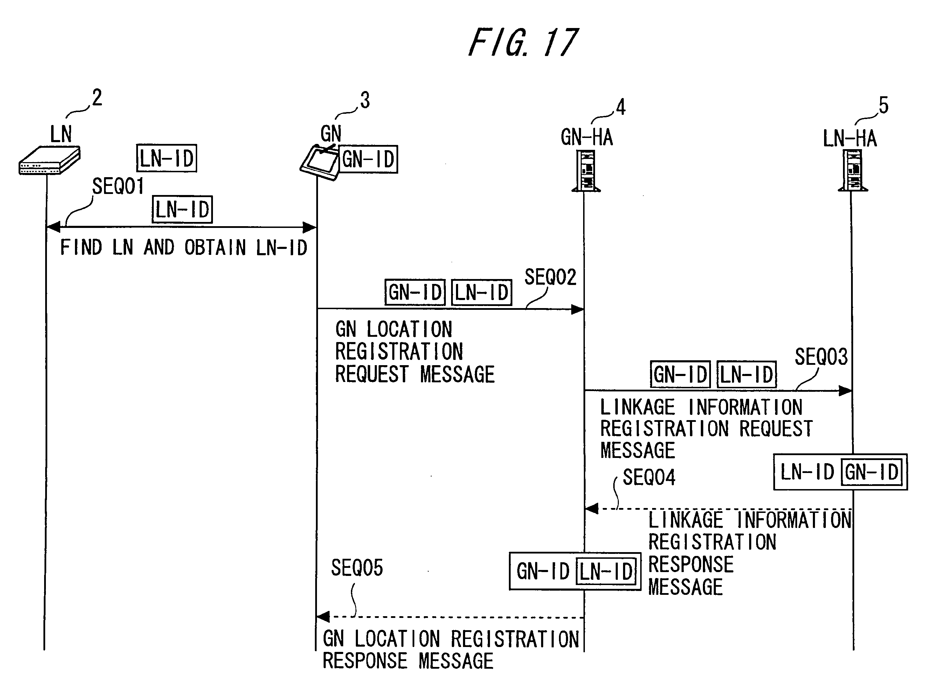

FIGS. 16 and 17 are diagrams showing the process sequence in a first operation example of the linkage information management system 1a. FIGS. 16 and 17 are used to explain the first operation example of the linkage information management system 1a.

In the first operation example, the GN-HA 4 is always set so as to judge that the authentication of the GN 3 has been completed, at S18.

In the first operation example, when the GN 3 firstly finds the LN 2, the GN 3 obtains the LN-ID of the found LN 2 (Seq01).

Next, the GN 3 prepares the GN location registration request message including the obtained LN-ID and GN-ID of the self-unit 3 (the GN 3 itself). Then, the GN 3 transmits the prepared GN location registration request message to the GN-HA 4 (Seq02).

The GN-HA 4, when receiving the GN location registration request message from the GN 3, relates the LN-ID with the GN-ID included in the received GN location registration request message and stores the LN-ID and GN-ID. The GN-HA 4 prepares the linkage information registration response message including the LN-ID and the GN-ID. Then, the GN-HA 4 transmits the prepared linkage information registration response message to the LN-HA 5 (Seq03).

The LN-HA 5, when receiving the linkage information registration request message, relates the LN-ID with the GN-ID included in the received message and stores the LN-ID and GN-ID. The LN-HA 5 prepares the linkage information registration response message. Then, the LN-HA 5 transmits the prepared linkage information registration response message back to the GN-HA 4 (Seq04).

The GN-HA 4, when receiving the linkage information registration response message, relates the GN-ID included in the received GN location registration request message (refer to Seq02) and the LN-ID and stores the information. Then, the GN-HA 4 prepares the GN location registration response message, and transmits the prepared GN location registration response message to the GN 3 (Seq05).

The GN 3, when receiving the GN location registration response message, may judge that the usage of the LN 2 becomes possible. For example, it may be configured that such a judgment is executed by a usage limit section (not shown). In this case, the usage limit section provides the service in the LN 2 to the user, only if the usage is judged to be possible. Also, it may be configured such that when the GN 3 receives the GN location registration response message, the completion of the location registration is merely reported to the user (for example, through a voice or image).

In the first operation example, the GN-HA 4 registers the linkage information after the linkage information registration response message is received (Seq04-Seq05). However, it may be configured so as to be registered when the GN location registration response message is received.

In this operation example, the LN-ID as the linkage information is included in the GN location registration requestmessage to perform the location registration of the GN 3 on the GN-HA 4 that is the location management server of the GN 3. As a result, in the GN-HA 4 and the LN-HA 5, the LN-ID and the GN-ID are related and stored as the linkage information. For this reason, the correspondence (locational relation) between the local unit (LN 2) and the wide unit (GN 3) can be held in the GN-HA 4 and the LN-HA 5.

### <<Second Operation Example>>

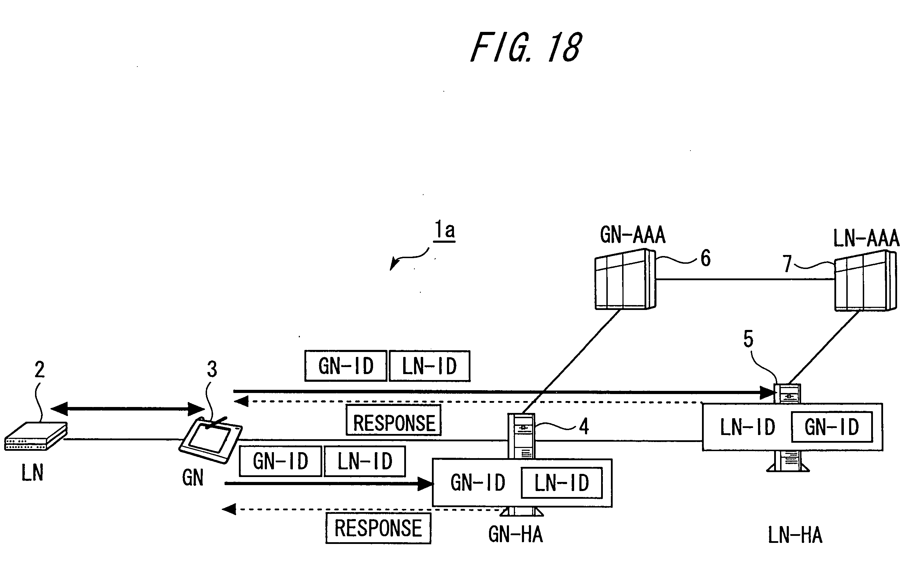

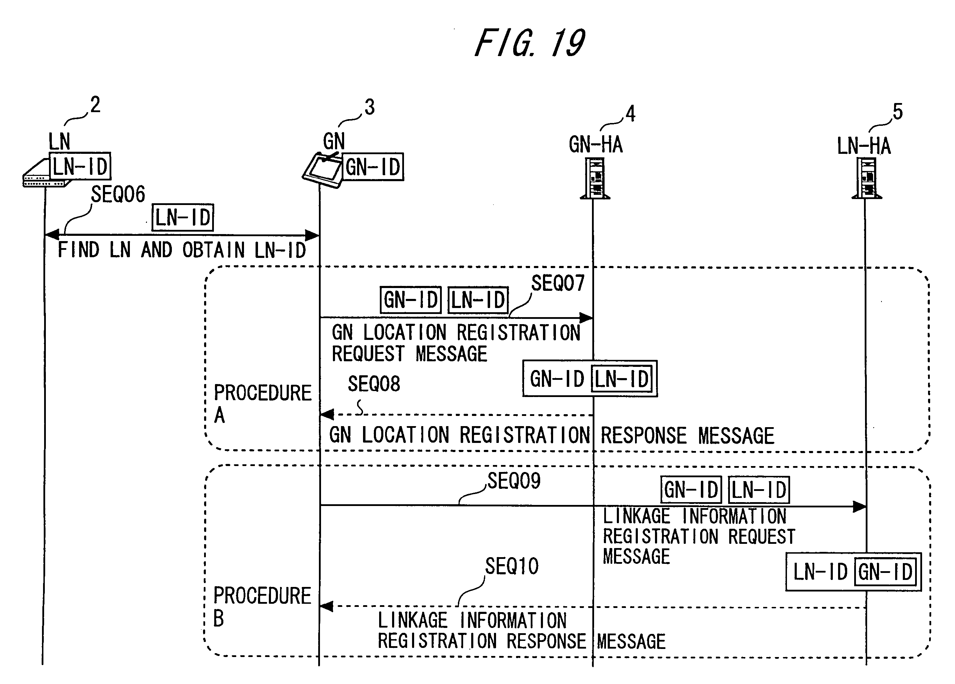

FIGS. 18 and 19 are diagrams showing the process sequence in a second operation example of the linkage information management system 1a. FIGS. 18 and 19 are used to explain the second operation example of the linkage information management system 1a.

In the second operation example, the GN-HA 4 is always set so as to judge that the authentication of the GN 3 has been completed, at S18. Also, in the second operation example, the GN-HA 4 is set so as to omit the processes at S24 to S26.

Also, in the second operation example, the GN 3 is set so as to prepare even the linkage information registration request message, apart from the GN location registration request message, at S06 (refer to FIG. 11B). Then, the GN 3 is set so as to transmit the prepared linkage information registration request message to the LN-HA 5, apart from the GN location registration request message, at S08.

In the second operation example, when the GN 3 firstly finds the LN 2, the GN 3 obtains the LN-ID of the found LN 2 (Seq06).

Next, the GN 3 prepares the GN location registration request message including the obtained LN-ID and the GN-ID of the self-unit 3 (the GN 3 itself). Then, the GN 3 transmits the prepared GN location registration request message to the GN-HA 4 (Seq07).

The GN-HA 4, when receiving the GN location registration request message from the GN 3, relates the LN-ID with the GN-ID included in the received GN location registration request message and stores the LN-ID and the GN-ID. The GN-HA 4 prepares the GN location registration response message. Then, the GN-HA 4 transmits the prepared GN location registration response message to the GN 3 (Seq08).

Also, the GN 3 prepares the linkage information registration request message including the obtained LN-ID and the GN-ID of the self-unit 3. Then, the GN 3 transmits the prepared linkage information registration request message to the LN-HA 5 (Seq09).

The LN-HA 5, when receiving the linkage information registration request message from the GN 3, relates the LN-ID and the GN-ID included in the receivedmessage and stores the information. The LN-HA 5 prepares the linkage information registration response message. Then, the LN-HA 5 transmits the prepared message to the GN 3 (Seq10).

The GN 3, since receiving the GN location registration response message or the linkage information registration response message, recognizes the completion of the relation to the corresponding LN 2.

In the second operation example, the GN 3 may execute the transmission of the GN location registration request message and the transmission of the linkage information registration request message in parallel or may execute them in sequence.

In the second operation example, the registrations of the linkage information to the LN-HA 5 and the GN-HA 4 are individually executed. Thus, the GN-HA 4 and the LN-HA 5 can register the linkage information, irrespectively of the states of the mutual units. The operation such as the second operation example may be applied to a case, for example, in which the linked GN 3 and LN 2 need not be explicitly related. Specifically, for example, if the LN-HA 5 cannot register (should not register) the linkage information about the corresponding LN 2, and on the other hand, if the GN-HA 4 needs to register this linkage information, this is effective.

### <<Third Operation Example>>

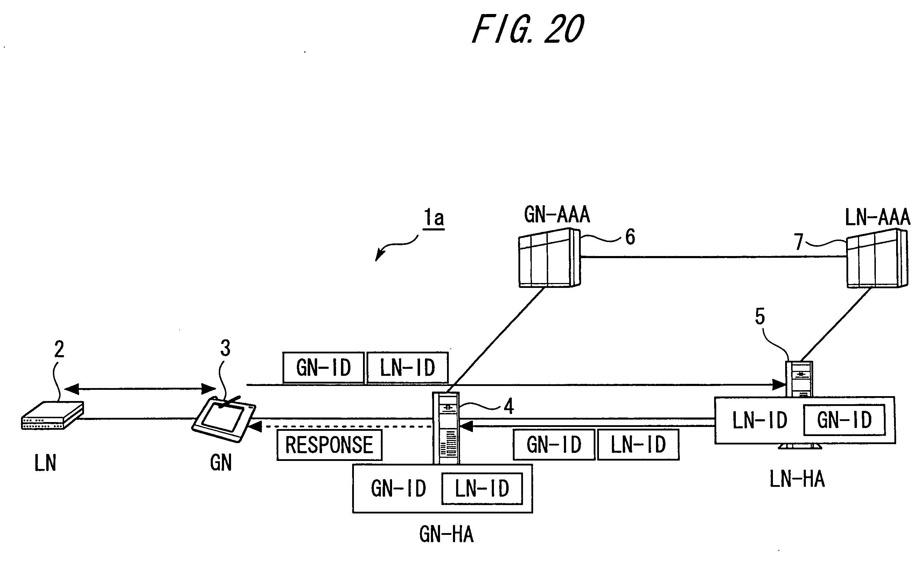

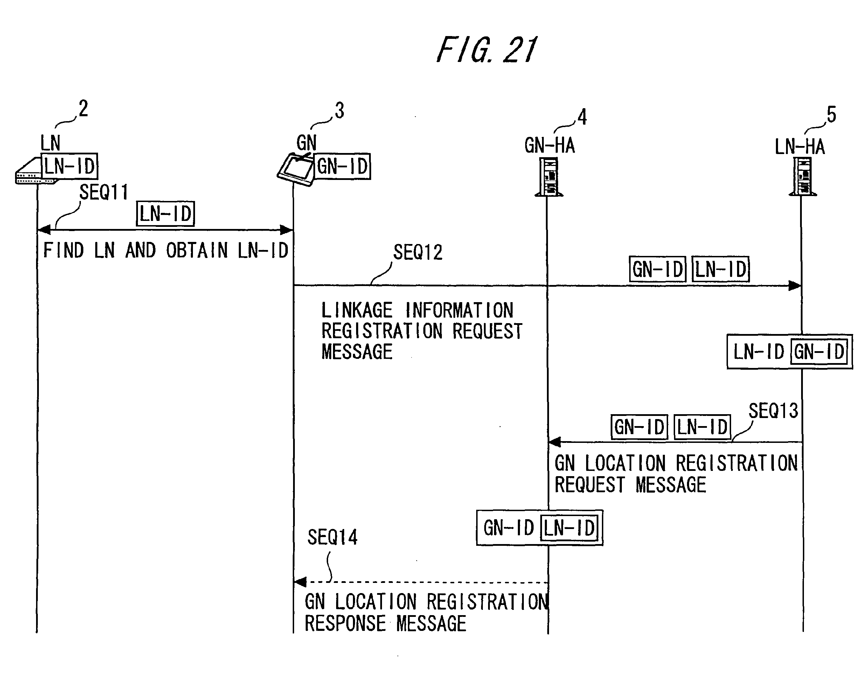

FIGS. 20 and 21 are diagrams showing the process sequence in a third operation example of the linkage information management system 1a. FIGS. 20 and 21 are used to explain the third operation example of the linkage information management system 1a.

In the third operation example, the GN 3 is set so as to prepare the linkage information registration request message at S06 (refer to FIG. 11B). Then, the GN 3 is set so as to transmit the prepared linkage information registration request message to the LN-HA 5, at S08.

Also, in the third operation example, the GN-HA 4 is set so as to omit the processes at S24 to S26.

In the third operation example, when the GN 3 firstly finds the LN 2, the GN 3 obtains the LN-ID of the found LN 2 (Seq11).

Next, the GN 3 prepares the linkage information registration request message including the obtained LN-ID and the GN-ID of the self-unit 3 (the GN 3 itself). Then, the GN 3 transmits the prepared linkage information registration request message to the LN-HA 5 (Seq12).

The LN-HA 5, when receiving the linkage information registration request message, relates the LN-ID with the GN-ID included in the received message and stores the LN-ID and GN-ID. The LN-HA 5 prepares the GN location registration response message including the LN-ID and the GN-ID. Then, the LN-HA 5 transmits the prepared GN location registration response message to the GN-HA 4 (Seq13).

The GN-HA 4, when receiving the GN location registration request message from the LN-HA 5, relates the LN-ID with the GN-ID included in the received GN location registration request message and stores the LN-ID and GN-ID. The GN-HA 4 prepares the GN location registration response message. Then, the GN-HA 4 transmits the prepared GN location registration response message to the GN-HA 4 (Seq14).

In the third operation example, the message prepared by the GN 3 is directly transmitted to the LN-HA 5 without any transmission to the GN-HA 4. Thus, the third operation example is effective in the case where the partner with which the user of the GN 3 contracts for receiving the service about the GN 3 or LN 2 is an administrator of the LN-HA 5 and not a administrator of the GN-HA 4. In other words, the third operation example is effective in the business type in which the contract regarding the GN 3 to the user of the GN 3 and the contract regarding the service of the LN 2 without any intention of the relation to the GN-HA 4 are concluded and the service is provided.

As a specific example, the business type of MVNO (Mobile Virtual Network Operator) resembles the foregoing case. In the MVNO, the network service having a high added value can be provided by selling a unique terminal device and a network function to the user without making the user conscious of a backbone network function (a management mechanism of the GN 3).

### <<Fourth Operation Example>>

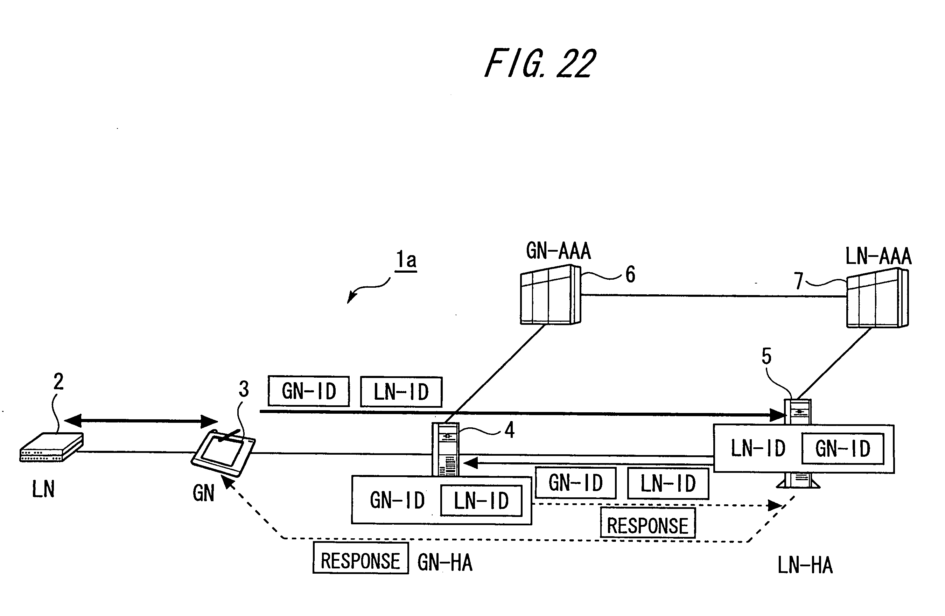

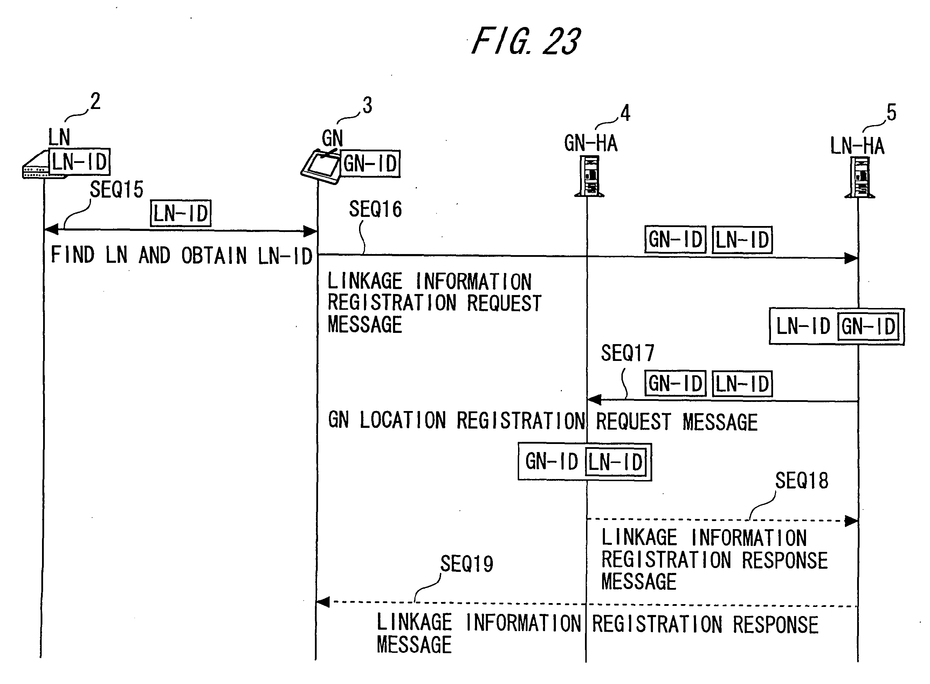

FIGS. 22 and 23 are diagrams showing the process sequence in a fourth operation example of the linkage information management system 1a. FIGS. 22 and 23 are used to explain the fourth operation example of the linkage information management system 1a.

In the fourth operation example, the GN 3 is set so as to prepare the linkage information registration request message at S06 (refer to FIG. 11B). Then, the GN 3 is set so as to transmit the prepared linkage information registration request message to the LN-HA 5, at S08.

Also, in the fourth operation example, the GN-HA 4 is set so as to omit the processes of S24 to S26 (refer to FIGS. 12C and 12D) . Also, in the third operation example, the GN-HA 4 is set so as to prepare the linkage information registration response message, at the process of S29. Also, in the fourth operation example, the GN-HA 4 is set so as to transmit the prepared linkage information registration response message to the LN-HA 5, at the process of S30.

Also, in the fourth operation example, the LN-HA 5 is set so as to prepare the linkage information registration response message and transmit the prepared message to the GN 3, if the linkage information registration response message is received from the GN-HA 4.

In the fourth operation example, when the GN 3 firstly finds the LN 2, the GN 3 obtains the LN-ID of the found LN 2 (Seq15).

Next, the GN 3 prepares the linkage information registration request message including the obtained LN-ID and the GN-ID of the self-unit 3 (the GN 3 itself). Then, the GN 3 transmits the prepared linkage information registration request message to the LN-HA 5 (Seq16).

The LN-HA 5, when receiving the linkage information registration request message from the GN 3, relates the LN-ID with the GN-ID included in the received message and stores the LN-ID and GN-ID. The LN-HA 5 prepares the GN location registration request message including the LN-ID and the GN-ID. Then, the LN-HA 5 transmits the prepared GN location registration request message to the GN-HA 4 (Seq17).

The GN-HA 4, when receiving the GN location registration request message from the LN-HA 5, relates the LN-ID with the GN-ID included in the received GN location registration request message and stores the LN-ID and GN-ID. After that, the GN-HA 4 prepares the linkage information registration response message. Then, the GN-HA 4 transmits the prepared linkage information registration response message to the LN-HA 5 (Seq18).

The LN-HA 5, when receiving the linkage information registration response message from the GN-HA 4, prepares the linkage information registration response message designated to the GN 3. Then, the LN-HA 5 transmits the prepared linkage information registration response message to the GN 3 (Seq19).

In the fourth operation example, similarly to the third operation example, the message prepared by the GN 3 is directly transmitted to the LN-HA 5 without any transmission to the GN-HA 4. Moreover, in the fourth operation example, unlike the third operation example, the GN 3 directly receives the response message from the LN-HA 5. Thus, the fourth operation example is effective in the case that the partner with which the user of the GN 3 contracts for receiving the service about the GN 3 or LN 2 is the administrator of the LN-HA 5 and not the administrator of the GN-HA 4.

### <<Fifth Operation Example>>

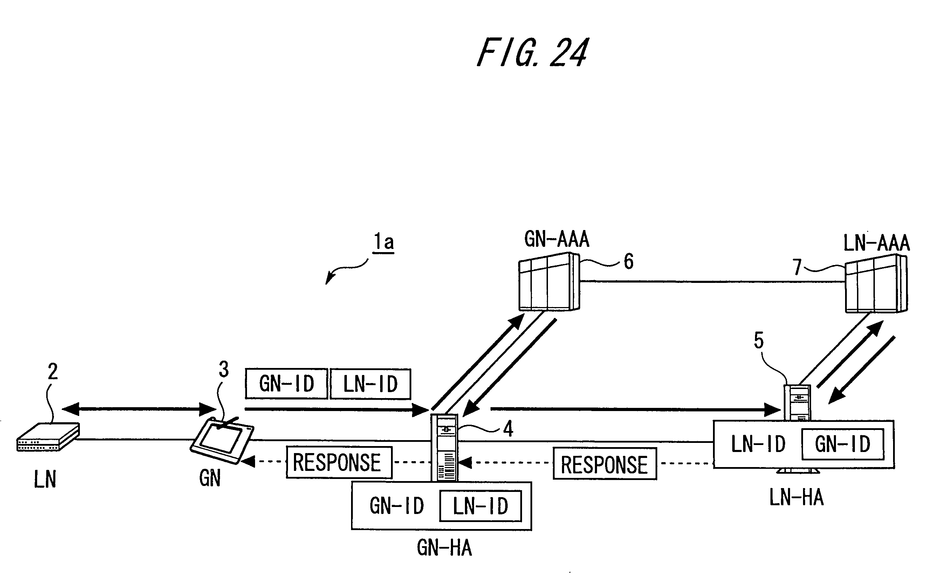

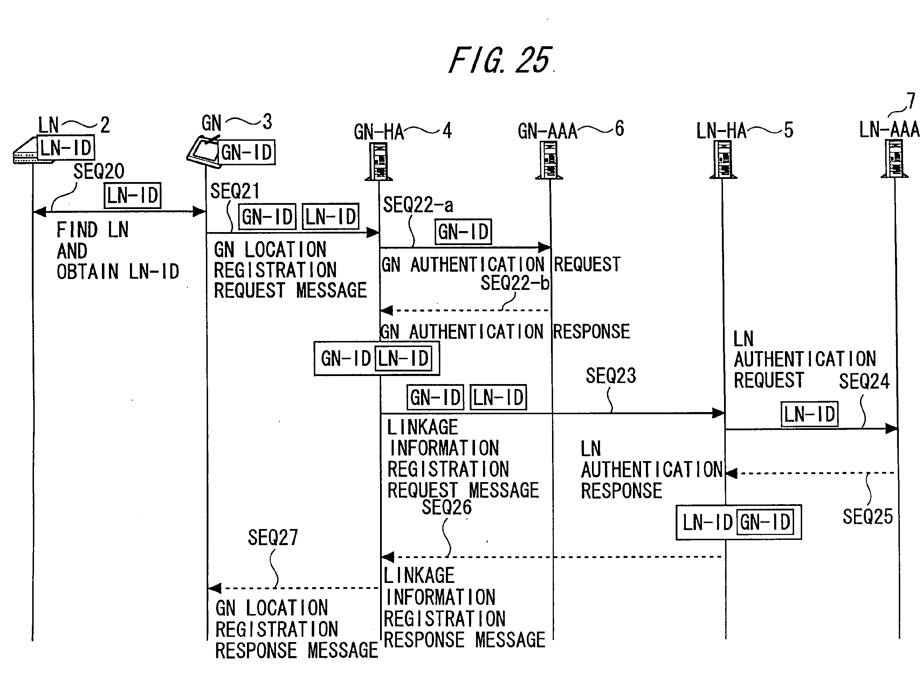

FIGS. 24 and 25 are diagrams showing the process sequence in a fifth operation example of the linkage information management system 1a. FIGS. 24 and 25 are used to explain the fifth operation example of the linkage information management system 1a.

In the fifth operation example, the linkage information registration request message is set so as to be prepared, at the process of S16 (FIG. 12A). Also, in the fifth operation example, the GN-HA 4 is set so as to prepare the GN location registration response message and transmit the prepared message to the GN 3, when the linkage information registration response message is received from the LN-HA 5.

In the fifth operation example, when the GN 3 firstly finds the LN 2, this GN 3 obtains the LN-ID of the found LN 2 (Seq20).

Next, the GN 3 prepares the GN location registration request message including the obtained LN-ID and the GN-ID of the self-unit 3 (the GN 3 itself). Then, the GN 3 transmits the prepared message to the GN-HA 4 (Seq21).

The GN-HA 4, when receiving the GN location registration request message from the GN 3, prepares the GN authentication request message of the GN 3 corresponding to the GN-ID included in the received message. Then, the GN-HA 4 transmits the prepared message to the GN-AAA 6 (Seq22-a).

The GN-AAA 6, when receiving the GN authentication request message, executes the authentication process about the GN 3. The GN-AAA 6 prepares the GN authentication response message. Then, the GN-AAA 6 transmits the prepared GN authentication response message to the GN-HA 4 (Seq22-b).

The GN-HA 4, when receiving the GN authentication response message from the GN-AAA 6, relates the LN-ID with the GN-ID included in the received GN location registration request message Seq21 and registers the LN-ID and GN-ID. After that, the LN-HA 4 prepares the linkage information registration request message including the LN-ID and GN-ID. Then, the GN-HA 4 transmits the prepared linkage information registration request message to the LN-HA 5 (Seq23).

The LN-HA 5, when receiving the linkage information registration request message from the GN-HA 4, prepares the LN authentication request message of the LN 2 corresponding to the LN-ID included in the received message. Then, the LN-HA 5 transmits the prepared message to the LN-AAA 7 (Seq24).

The LN-AAA 7, when receiving the LN authentication request message, executes the authentication process of the LN 2. The LN-AAA 7 prepares the LN authentication response message. Then, the LN-AAA 7 transmits the prepared message to the LN-HA 5 (Seq25).

The LN-HA 5, when receiving the LN authentication response message from the LN-AAA 7, relates the GN-ID with the LN-ID included in the received linkage information registration request message and registers the GN-ID and LN-ID. After that, the LN-HA 5 prepares the linkage information registration response message. Then, the LN-HA 5 transmits the prepared linkage information registration response message to the GN-HA 4 (Seq26).

The GN-HA 4, when receiving the linkage information registration response message from the LN-HA 5, prepares the GN location registration response message. Then, the GN-HA 4 transmits the prepared GN location registration response message to the GN 3 (Seq27).

In order to execute the service where any GN 3 and LN 2 are linked on a business base, it is necessary to insure the safety and the like, not only for the location control of the LN 2 and GN 3 , but also for the registration of the mutual linkage information. That is, for the sake of the execution on the business base, the authentication process for the LN 2 and/or GN 3 is inevitable.

In the fifth operation example, the authentication of the GN 3 by the GN-AAA 6 and the authentication of the LN 2 by the LN-AAA 7 are executed. For this reason, in the fifth operation example, the linkage information management system 1a can be configured such that only the information (GN-ID, LN-ID) of the authenticated GN 3 and LN 2 are registered in the GN-HA 4 and the LN-HA 5. Thus, as mentioned above, the service where any GN 3 and LN 2 are linked is safely executed. Thus, the fifth operation example is suitable for the case of executing such service on the business base.

In the fifth operation example, the timing of the registration of the linkage information between the GN-ID and the LN-ID in the GN-HA 4 may be between the Seq26 and the Seq27. Such setting enables the GN-HA 4 to register only the LN-ID of the LN 2 authenticated by the LN-AAA 7.

### <<Sixth Operation Example>>

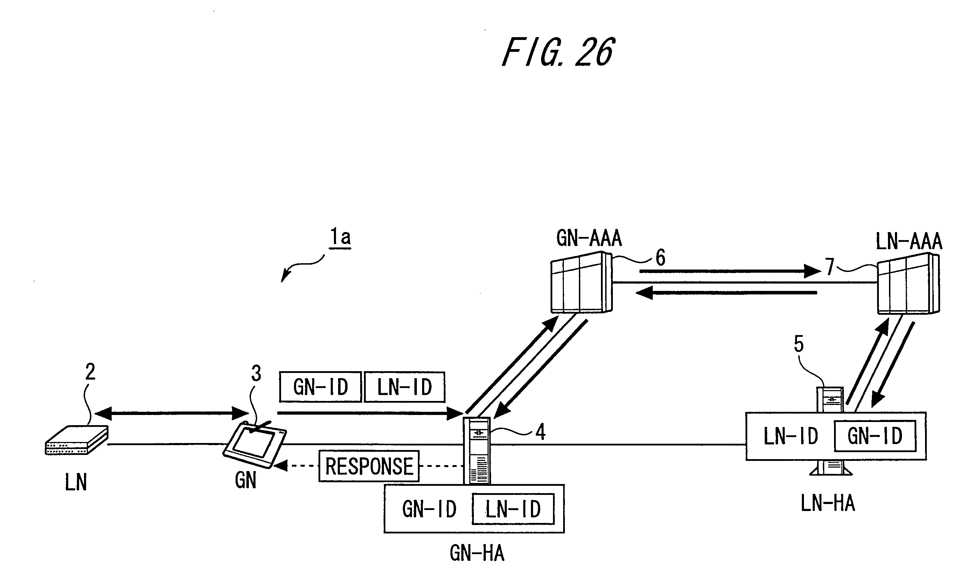

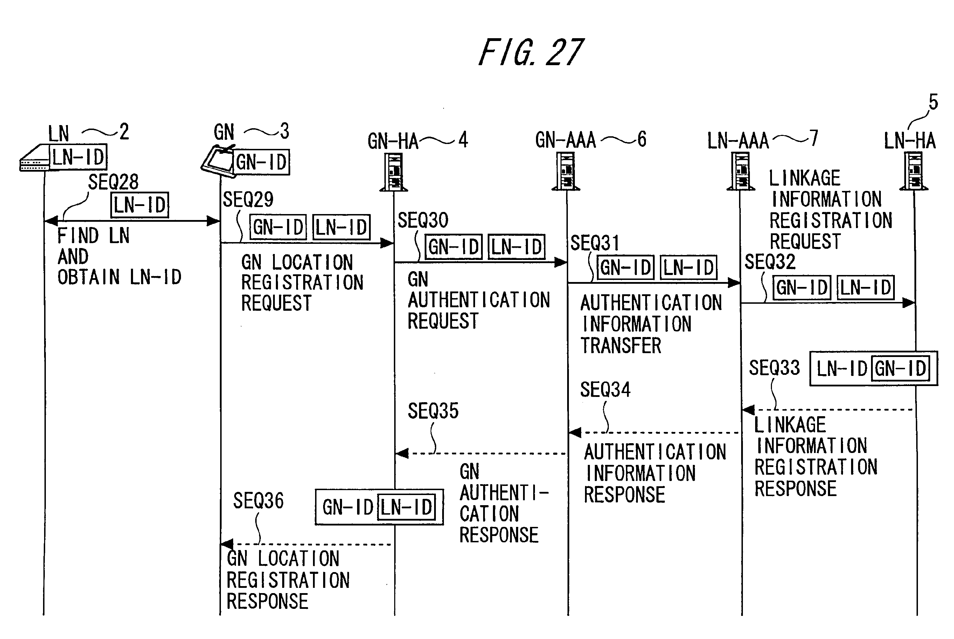

FIGS. 26 and 27 are diagrams showing the process sequence in a sixth operation example of the linkage information management system 1a. FIGS. 26 and 27 are used to explain the sixth operation example of the linkage information management system 1a.

In the sixth operation example, the GN-HA 4 is set such that the GN-ID and the LN-ID are included in the prepared GN authentication request message, at the process of S19 (FIG. 12B).

In the sixth operation example, when the GN 3 firstly finds the LN 2, the GN 3 obtains the LN-ID of the found LN 2 (Seq28).

Next, the GN 3 prepares the GN location registration request message including the obtained LN-ID and the GN-ID of the self-unit 3 (the GN 3 itself). Then, the GN 3 transmits the prepared GN location registration request message to the GN-HA 4 (Seq29).

The GN-HA 4, when receiving the GN location registration request message from the GN 3, prepares the GN authentication request message. This authentication request message includes the GN-ID included in the received GN location registration request message and the LN-ID. Then, the GN-HA 4 transmits the prepared GN authentication request message to the GN-AAA 6 (Seq30).

The GN-AAA 6 executes the authentication process about the GN 3. Next, the GN-AAA 6 prepares the authentication information transfer message. This authentication information transfer message includes the LN-ID and the GN-ID included in the received GN authentication request. Then, the GN-AAA 6 transmits the prepared authentication information transfer message to the LN-AAA 7 (Seq31) .

The LN-AAA 7, when receiving the authentication information transfer message, uses the authentication information of the LN 2 included in the received authentication information transfer message and carries out the authentication process about this LN 2. After_that, when the authentication of the LN 2 is completed, the LN-AAA 7 prepares the linkage information registration request message including the GN-ID and LN-ID, which are included in the received authentication information transfer message. Then, the LN-AAA 7 transmits the prepared linkage information registration request message to the LN-HA 5 (Seq32).

The LN-HA 5, when receiving the linkage information registration request, relates the LN-ID with the GN-ID, each of which is included in the linkage information registration request, and registers the LN-ID and GN-ID. Then, the LN-HA 5 prepares the linkage information registration response message and transmits the prepared message to the LN-AAA 7 (Seq33).

The LN-AAA 7, when receiving the linkage information registration response message, prepares the authentication information response message and transmits the prepared authentication information response message to the GN-AAA 6 (Seq34) .

The GN-AAA 6, when receiving the authentication information response message, prepares the GN authentication response message and transmits the prepared GN authentication response message to the GN-HA 4 (Seq35).

The GN-HA 4, when receiving the GN authentication response message, relates the GN-ID with the LN-ID, each of which is included in the GN location registration request message received at the Seq29, and registers the LN-ID and GN-ID as the linkage information. Then, the GN-HA 4 prepares the GN location registration response message and transmits the prepared GN location registration response message to the GN 3 (Seq36).

In the sixth operation example, the GN-AAA 6 transfers the authentication information, which is included in the received authentication request message, directly to the LN-AAA 7. For this reason, there may be a case of requiring that the administrator of the GN-AAA 6 and the administrator of the LN-AAA 7 are the same administrator or under high reliability relation. That is, the administrator of the GN-AAA 6 and the administrator of the LN-AAA 7 need to mutually trust the mutual authentication result and authentication information.

On the other hand, in the sixth operation example, the GN-AAA 6 transfers the authentication information of the LN 2, which is included in the received authentication request message, to the LN-AAA 7. Thus, the authentication processes and the location registration process (the registration process of the linkage information) about the GN 3 and LN 2 are executed at a higher speed than the other operation examples.

### <<Seventh Operation Example>>

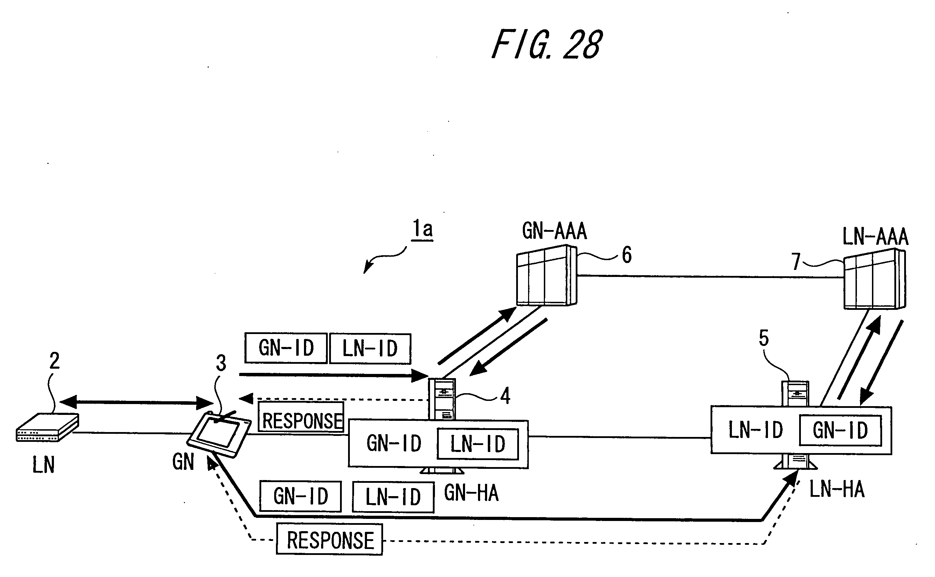

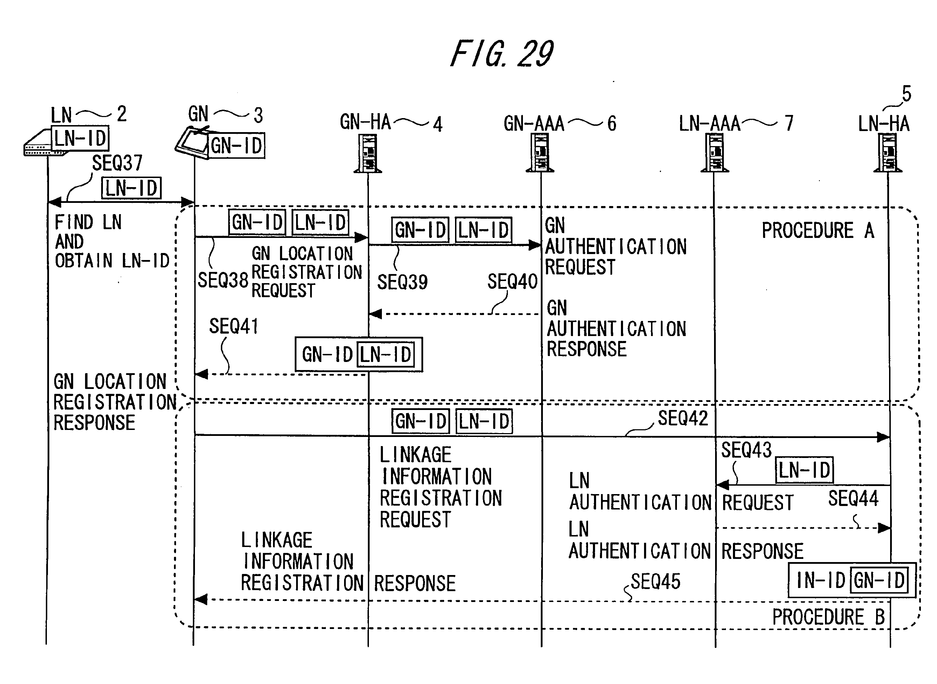

FIGS. 28 and 29 are diagrams showing the process sequence in a seventh operation example of the linkage information management system 1a. FIGS. 28 and 29 are used to explain the seventh operation example of the linkage information management system 1a.

In the seventh operation example, the LN-HA 5 is set so as to prepare the linkage information registration response message to be transmitted to the GN 3, at the process of S50 (FIG. 13C). Then, the LN-HA 5 is set so as to transmit the prepared linkage information registration response message to the GN 3, at the process of S52.

In the seventh operation example, when the GN 3 firstly finds the LN 2, this GN 3 obtains the LN-ID of the found LN 2 (Seq37).

Next, the GN 3 prepares the GN location registration request message including the obtained LN-ID and the GN-ID of the self-unit 3 (the GN 3 itself). Then, the GN 3 transmits the prepared message to the GN-HA 4 (Seq38).

The GN-HA 4, when receiving the GN location registration request message, prepares the GN authentication request message, which includes the LN-ID and the GN-ID included in the received GN location registration request message, and transmits the prepared GN authentication request message to the GN-AAA 6 (Seq39).

The GN-AAA 6, when receiving the GN authentication request message, executes the authentication process about the GN 3, on the basis of the authentication information of the GN 3 included in the received GN authentication request message. Then, the GN-AAA 6 prepares the GN authentication response message and transmits the prepared GN authentication response message to the GN-HA 4 (Seq40).

The GN-HA 4, when receiving the GN authentication response message, relates the GN-ID and LN-ID, which are included in the received GN location registration request message and registers the information. Then, the GN-HA 4 prepares the GN location registration response message and transmits the prepared GN location registration response message to the GN 3 (Seq41).

Also, the GN 3 prepares the linkage information registration request message, which includes the obtained LN-ID and the GN-ID of the self-unit 3. Then, the GN 3 transmits the prepared linkage information registration request message to the LN-HA 5 (Seq42).

The LN-HA 5, when receiving the linkage information registration request message from the GN 3, prepares the LN authentication request message and transmits the prepared LN authentication request message to the LN-AAA 7 (Seq43).

The LN-AAA 7 performs the authentication on the LN 2, in accordance with the authentication information included in the received LN authentication request message. Then, the LN-AAA 7 prepares the LN authentication response message and transmits the prepared LN authentication response message to the LN-HA 5 (Seq44).

The LN-HA 5 relates the GN-ID with the LN-ID, each of which is included in the received message at the Seq42, and registers the GN-ID and LN-ID. The LN-HA 5 prepares the linkage information registration response message. Then, the LN-HA 5 transmits the prepared message to the GN 3 (Seq45).

The GN 3, since receiving the GN location registration response message or linkage information registration response message, recognizes the completion of the relation to the corresponding LN 2.

In the seventh operation example, the GN 3 may execute the transmission of the GN location registration request message and the transmission of the linkage information registration request message in parallel or may execute them in sequence.

In the seventh operation example, the authentication process about the GN 3 and the authentication process about the LN 2 are executed independently of each other. Thus, in the seventh operation example, if the authentication process about any one of them has been completed, the user can receive some service.

### <<Eighth Operation Example>>

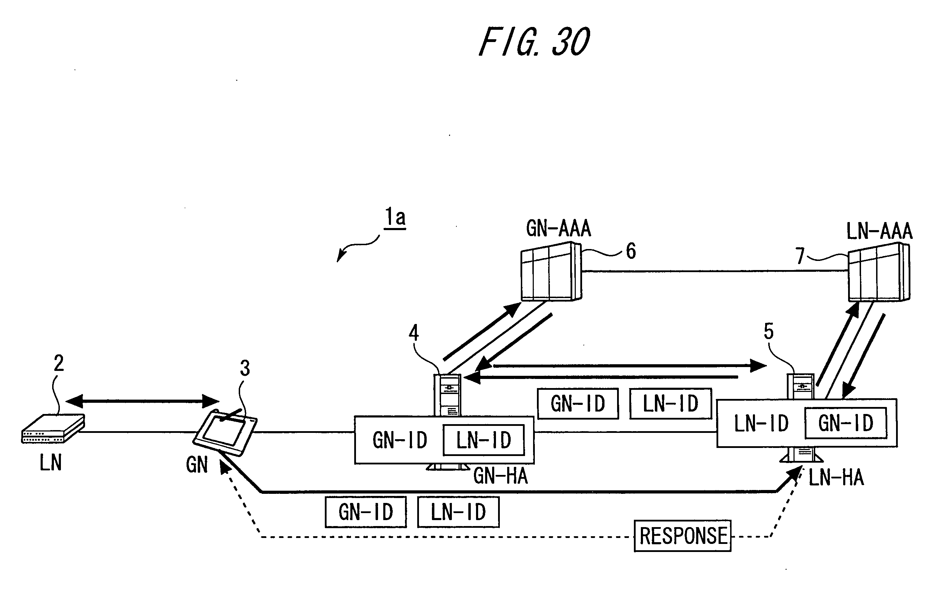

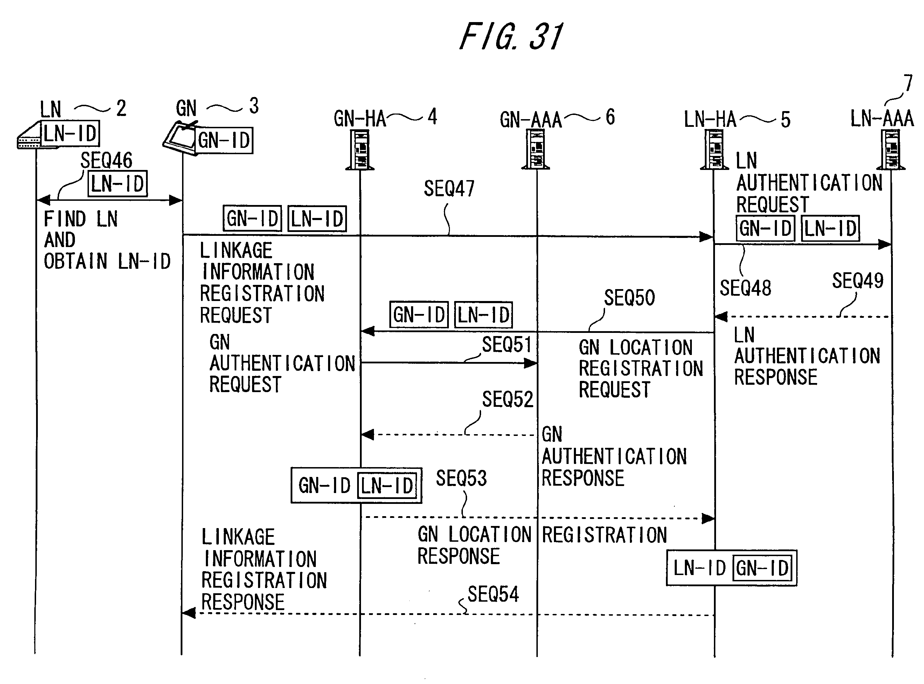

FIGS. 30 and 31 are diagrams showing the process sequence in an eighth operation example of the linkage information management system 1a. FIGS. 30 and 31 are used to explain the eighth operation example of the linkage information management system 1a.

In the eighth operation example, the GN 3 is set so as to prepare the linkage information registration request message at S06 (refer to FIG. 11B). Then, the GN 3 is set so as to transmit the prepared linkage information registration request message to the LN-HA 5, at S08.

Also, in the eighth operation example, the GN-HA 4 is set so as to transmit the GN authentication request message, prior to executing the process to the received GN location registration request message, at S17 (refer to FIG. 12B). Also, in the eighth operation example, the GN-HA 4 is set so as not to execute the processes of S24 to S26.

Also, in the eighth operation example, the LN-HA 5 is set so as not to execute the process of S48 (FIG. 13C). Also, in the eighth operation example, the LN-HA 5 is set so as to relate the GN-ID with the LN-ID, each of which is included in the linkage information registration request message received from the GN 3, and registers the GN-ID and LN-ID, and to transmit the linkage information registration response message to the GN 3, if the GN location registration response message is received from the GN-HA 4.

In the eighth operation example, when the GN 3 firstly finds the LN 2, the GN 3 obtains the LN-ID of the found LN 2 (Seq46).

Next, the GN 3 prepares the linkage information registration request message including the obtained LN-ID and the GN-ID of the self-unit 3 (the GN 3 itself). Then, the GN 3 transmits the prepared request message to the LN-HA 5 (Seq47).

The LN-HA 5, when receiving the linkage information registration request message, prepares the LN authentication request message that includes the GN-ID and LN-ID, which are included in the received linkage information registration request message. This LN authentication request message is the message to request the authentication process about the LN 2 indicated by the LN-ID. Then, the LN-HA 5 transmits the prepared LN authentication request message to the LN-AAA 7 (Seq48).

The LN-AAA 7, when receiving the LN authentication request message, performs the authentication process on the LN 2, in accordance with the authentication information included in the received LN authentication request message. Then, the LN-AAA 7 prepares the LN authentication response message and transmits the prepared LN authentication response message to the LN-HA 5 (Seq49).

The LN-HA 5, when receiving the LN authentication response message, prepares the GN location registration request message that includes the GN-ID and LN-ID, which are included in the received linkage information registration request message. Then, the LN-HA 5 transmits the prepared GN location registration request message to the GN-HA 4 (Seq50).

The GN-HA 4, when receiving the GN location registration request message, prepares the GN authentication request message. This GN authentication request message is the message to request the authentication process about the GN 3 indicated by the GN-ID included in the received GN location registration request message. Then, the GN-HA 4 transmits the prepared GN authentication request message to the GN-AAA 6 (Seq51).

The GN-AAA 6, when receiving the GN authentication request message, performs the authentication process on the GN 3, in accordance with the authentication information included in the received GN authentication request message. Then, the GN-AAA 6 prepares the GN authentication response message and transmits the prepared GN authentication response message to the GN-HA 4 (Seq52).

The GN-HA 4, when receiving the GN authentication response message, relates the GN-ID with the LN-ID, each of which is included in the received GN location registration response message, and registers the GN-ID and LN-ID as the linkage information. Then, the GN-HA 4 prepares the GN location registration response message and transmits the prepared GN location registration response message to the LN-HA 5 (Seq53).

The LN-HA 5, when receiving the GN location registration response message, relates the LN-ID with the GN-ID, each of which is included in the received linkage information registration request message, and registers the GN-ID and LN-ID as the linkage information. Then, the LN-HA 5 prepares the linkage information registration response message and transmits the prepared message to the GN 3 (Seq54).

In the eighth operation example, in addition to the operations similar to the third operation example, the authentication processes about the LN 2 and GN 3 are executed. Thus, in the eighth operation example, in addition to the actions and effects similar to the third operation example, the validity of the LN 2 and GN 3 registered in the GN-HA 4 and LN-HA 5 are insured, which enables the improvement of the safety in the entire system.

### <<Ninth Operation Example>>

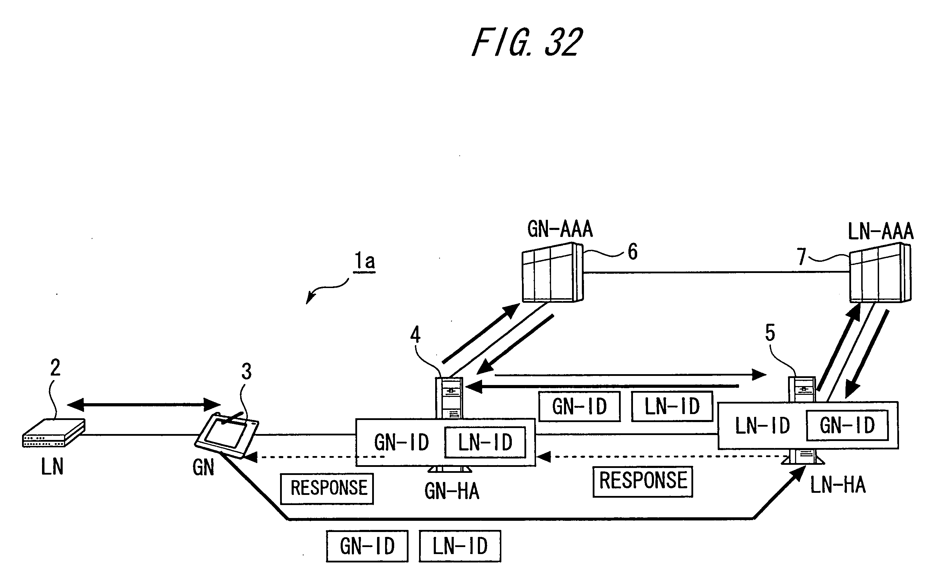

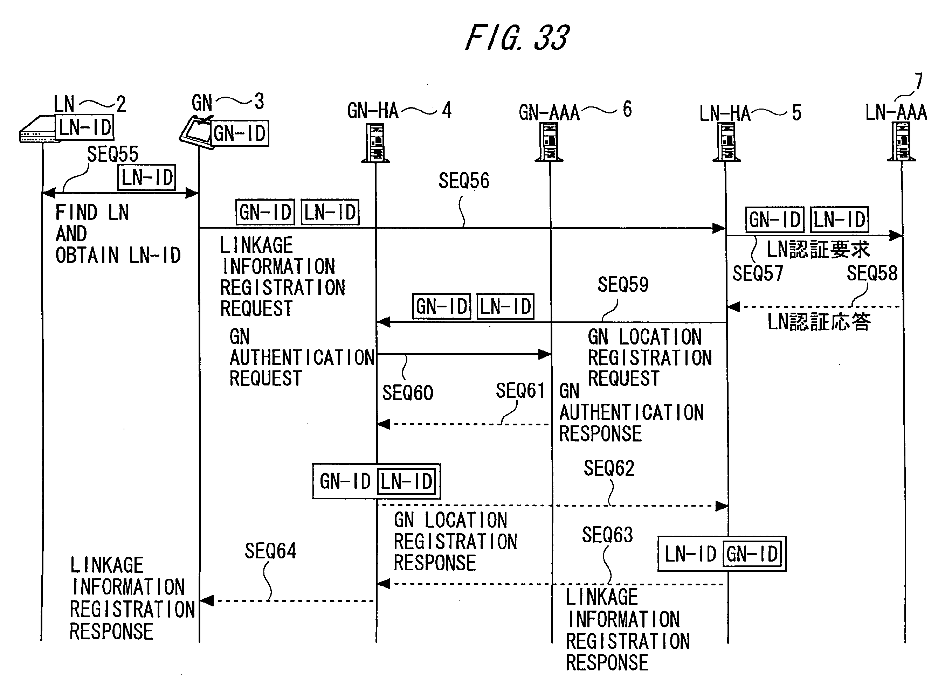

FIGS. 32 and 33 are diagrams showing the process sequence in a ninth operation example of the linkage information management system 1a. FIGS. 32 and 33 are used to explain the ninth operation example of the linkage information management system 1a.

In the ninth operation example, the GN 3 is set so as to prepare the linkage information registration request message at S06 (refer to FIG. 11B). Then, the GN 3 is set so as to transmit the prepared linkage information registration request message to the LN-HA 5, at S08.

Also, in the ninth operation example, the GN-HA 4 is set so as to transmit the GN authentication request message, prior to (before) executing the process to the received GN location registration request message, at S17 (refer to FIG. 12B). Also, in the ninth operation example, the GN-HA 4 is set so as not to execute the processes of S24 to S26. Also, in the ninth operation example, the GN-HA 4 is set so as to transmit the linkage information registration response message to the GN 3, if the linkage information registration response message is received from the LN-HA 5.

Also, in the ninth operation example, the LN-HA 5 is set so as not to execute the process of S48 (FIG. 13C). Also, in the ninth operation example, the LN-HA 5 is set so as to relate the GN-ID with the LN-ID, each of which is included in the linkage information registration request message received from the GN 3, and registers the GN-ID and LN-ID, and to transmit the linkage information registration response message to the GN 3, if the GN location registration response message is received from the GN-HA 4.

In the ninth operation example, at first, the operations until Seq46 to Seq53 in the eighth operation example are executed (Seq55 to S62). The LN-HA 5, when receiving the GN location registration response message, relates the LN-ID with GN-ID, each of which is included in the received linkage information registration request message, and registers the GN-ID and LN-ID as the linkage information. Then, the LN-HA 5 prepares the linkage information registration response message and transmits the prepared message to the GN-HA 4 (Seq63).

The GN-HA 4, when receiving the linkage information registration response message, prepares the linkage information registration response message to be transmitted to the GN 3 and transmits the prepared message to the GN 3 (Seq64).

In the ninth operation example, the authentication processes about the LN 2 and GN 3 are executed. Thus, in the ninth operation example, the validity about the LN 2 and GN 3 registered in the GN-HA and LN-HA 5 can be insured, thereby improving the safety of the entire system.

### [Second Embodiment]

### <System Configuration>

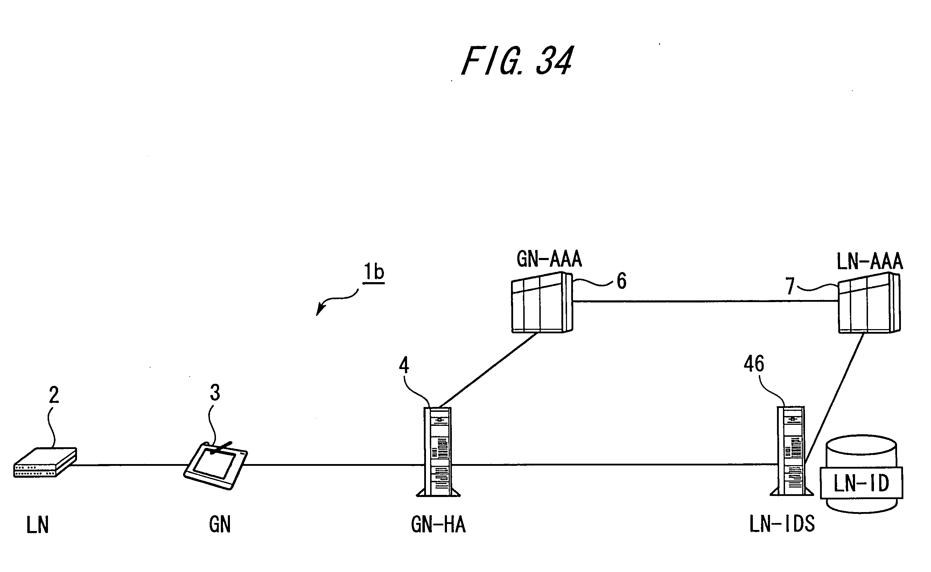

FIG. 34 is a diagram showing a second embodiment of the linkage information management system according to the present invention, namely, the schema of a linkage information management system 1a. FIG. 34 is used to explain the linkage information management system 1a.

The configuration of the linkage information management system 1b differs from the linkage information management system 1a only in that it is configured by using an LN-IDS (Local Node IDentification Server) 46 instead of the LN-HA 5.

In the linkage information management system 1b, the linkage information between the GN 3 and the LN 2, namely, the linkage information in which one of the GN-ID and the LN-ID is related with the other and the location information of the GN 3 (the correspondence between the CoA and the home address by the Mobile IP and the like) are collectively managed in the GN-HA 4. The GN-HA 4, although storing the LN-ID, does not store the information related to the LN 2 indicated by the LN-ID, except the LN-ID. On the other hand, the information related to the LN 2 is stored in the LN-IDS 46.

### <<LN-IDS>>

The LN-IDS 46 is configured by using an information processing unit such as a personal computer, a workstation, a server, and the like. The LN-IDS 46 has an LN database (not shown). The LN-ID of each LN 2 is related with the information related to the LN 2, and registered, as a record, in the LN database.

The LN-IDS 46, since a program is executed by the CPU, responds to an LN-ID inquiry message from the GN-HA 4. Specifically, the LN-IDS 46 retrieves the information on the LN 2 (the information related to the LN 2) corresponding to the LN-ID included in the LN-ID inquiry message, from the LN database. The LN-IDS 46 prepares the LN-ID response message including the retrieved information. Then, the LN-IDS 46 transmits the prepared LN-ID response message to the GN-HA 4 that is the transmission source of the LN-ID inquiry message.

Also, the LN-IDS 46 requests the authentication process about the inquired LN 2 to the LN-AAA 7, as necessary. In this case, the LN-IDS 46 may be configured so as to respond to the inquiry only about the normally authenticated LN 2.

### <Operation Example of System>

The operation example of the linkage information management system 1b will be described below by using the drawings.

### <<First Operation Example>>

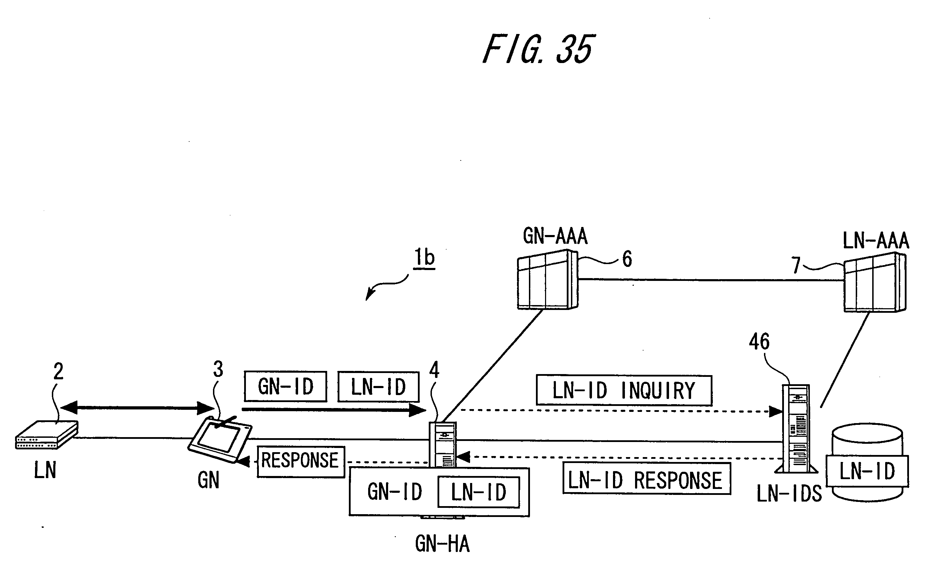

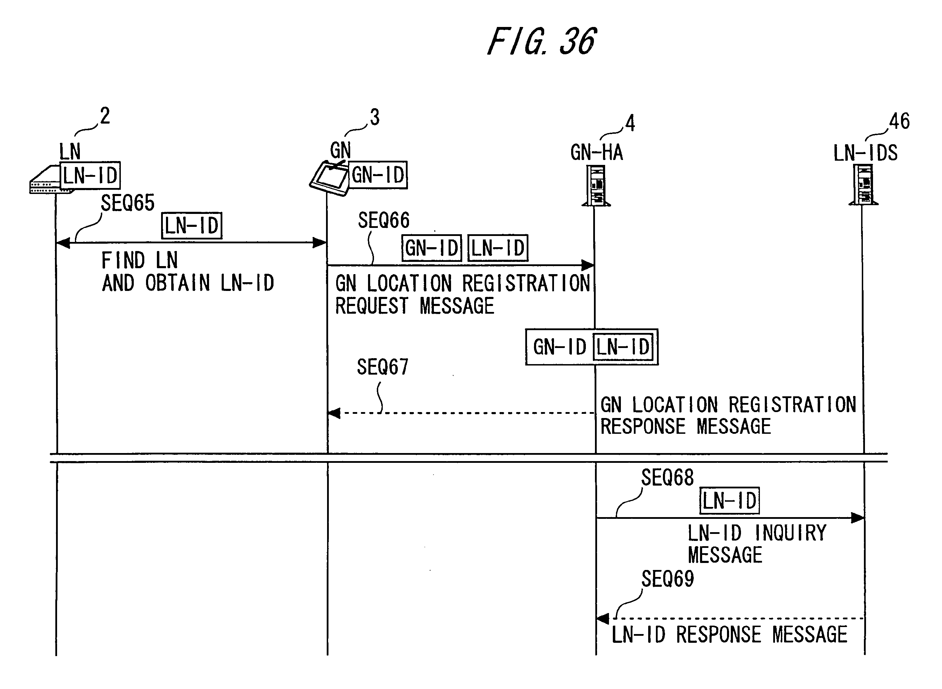

FIGS. 35 and 36 are diagrams showing the process sequence in the first operation example of the linkage information management system 1b. FIGS. 35 and 36 are used to explain the first operation example of the linkage information management system 1b.

The process in the first operation example is classified into a first phase and a second phase. In the first phase, the registration of the linkage information to the GN-HA 4 is executed. In the second phase, the inquiry to the LN-IDS 46 is executed.

At first, the first phase is explained. When the GN 3 finds the LN 2, the GN 3 obtains the LN-ID of the found LN 2 (Seq65).

Next, the GN 3 prepares the GN location registration request message including the obtained LN-ID and the GN-ID of the self-unit 3 (the GN 3 itself). Then, the GN 3 transmits the prepared GN location registration request message to the GN-HA 4 (Seq66).

The GN-HA 4, when receiving the GN location registration request message from the GN 3, relates the GN-ID with the LN-ID, each of which is included in the received GN location registration request message, and registers as the linkage information. At this time, the GN-HA 4 registers even the location information of the GN 3. Then, the GN-HA 4 transmits the GN location registration response message to the GN 3 that is the transmission source of the GN location registration request message (Seq67). The above-mentioned descriptions are the processes of the phase 1.

Next, the phase 2 is explained. The GN-HA 4 transmits the LN-ID inquiry message to the LN-IDS 46 as necessary (Seq68). The LN-ID inquiry message includes the LN-ID of the LN 2 that becomes an inquiry target.

The LN-IDS 46, when receiving the LN-IDS inquiry message, retrieves the information about the LN 2 to be the inquiry target. Then, the LN-IDS 46 transmits the LN-ID response message including the retrieved information, to the GN-HA 4 (Seq69).

The system (corresponding to the first embodiment of the present invention) in which the GN-ID and LN-ID are dispersed and managed in the GN-HA 4 and LN-HA 5 is suitable in propelling the work separation and cooperative work of an entrepreneur related to a network service. However, the system may have a disadvantageous case in a cost when the service is introduced and in a cost when it is carried out as a small service business.

On the other hand, in the first operation example of the second embodiment, the information related to the LN 2 in which diversification of a function is expected (for example, a product attribute, a dimension (size) and a detailed function) is collectively managed by the LN-IDS 46. For this reason, if the information related to the LN 2 is changed, it may be performed only on the LN-IDS 46. Thus, in the first operation example of the second embodiment, the management of the information related to the LN 2 becomes easy, which enables the drop in the cost in the system operation.

Also, in the first operation example of the second embodiment, the message requesting the registration of the linkage information is executed only between the GN 3 and the GN-HA 4. Thus, the response in the entire system is made faster.

### <<Second Operation Example>>

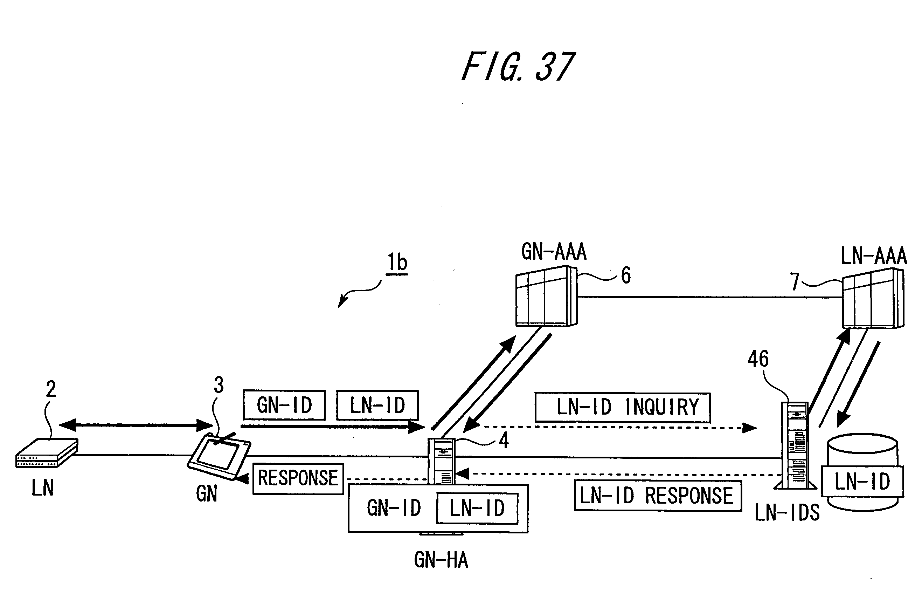

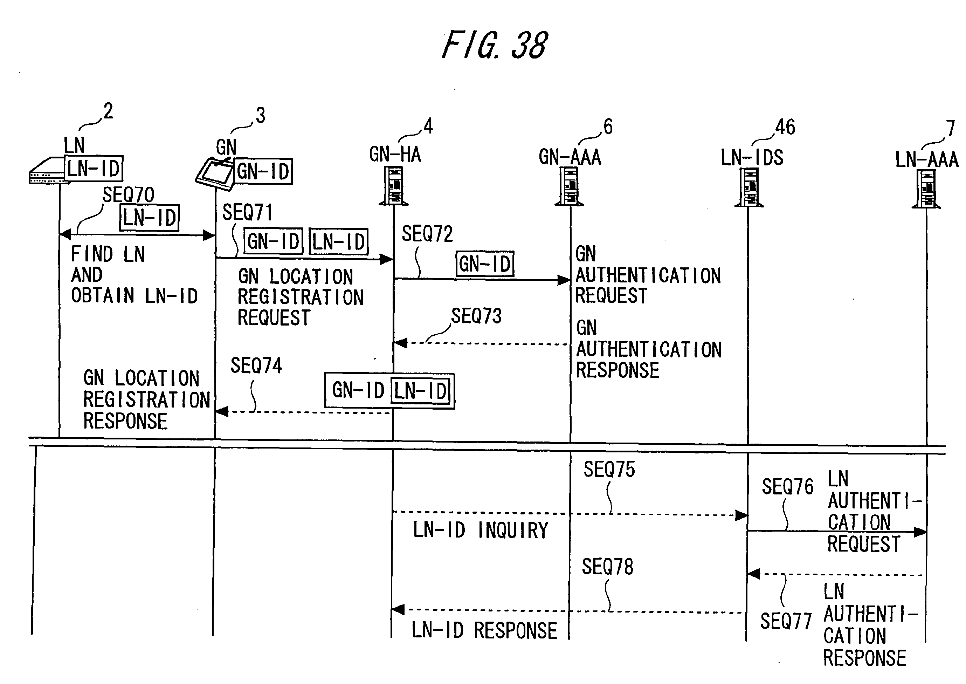

FIGS. 37 and 38 are diagrams showing the process sequence in the second operation example of the linkage information management system 1b. The second operation example of the linkage information management system 1b will be described with reference to FIGS. 37 and 38.

The process in the second operation example differs from the first operation example only in the point that the authentication of the GN 3 and LN 2 is executed.

The GN-HA 4, when receiving the GN location registration request (Seq71: corresponds to Seq66 of the first operation example), requests the GN-AAA 6 to execute the authentication process, with regard to the GN 3 corresponding to the GN-ID included in the received GN location registration request message. That is, the GN-HA 4 transmits the GN authentication request message to the GN-AAA 6 (Seq72). The GN-AAA 6 executes the authentication process and transmits the GN authentication response message to the GN-HA 4 (Seq76). Then, the GN-HA 4 considers this authentication result, relates the GN-ID with the LN-ID and registers as the linkage information.

Also, the LN-IDS 46, when receiving the LN-ID inquiry message (Seq75: corresponds to Seq68 of the first operation example), requests the LN-AAA 7 to authenticate the inquired LN 2 (Seq76). Then, the LN-IDS 46 considers the result of the authentication process in the LN-AAA 7 and transmits the LN-ID response message corresponding to the LN-ID inquiry message to the GN-HA 4.

In the second operation example, in-addition to the processes in the first operation example, the authentication process of the LN 2 and GN 3 is executed. Thus, in the second operation example, the validities of the GN 3 that is registered in the GN-HA 4 and the LN 2 to which the LN-IDS 46 responds are insured, which enables the safety in the entire system to be improved.

### [Application Example]

The application examples of the linkage information management systems 1a, 1b in the present invention will be described below. In the following explanation, with the linkage information management system 1a as the example, a first application example and a second application example are explained. The application similar to the second application example may be performed on the linkage information management system 1b.

### <First Application Example>

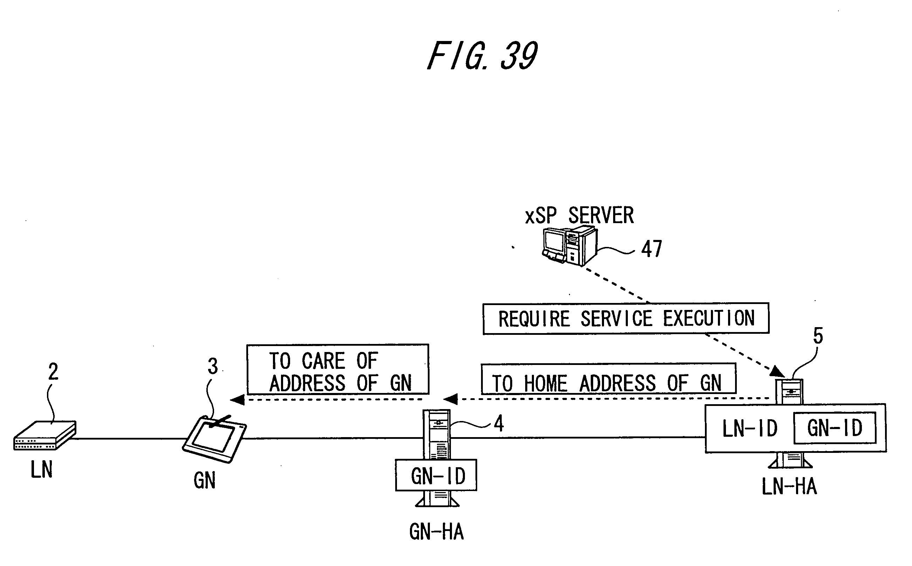

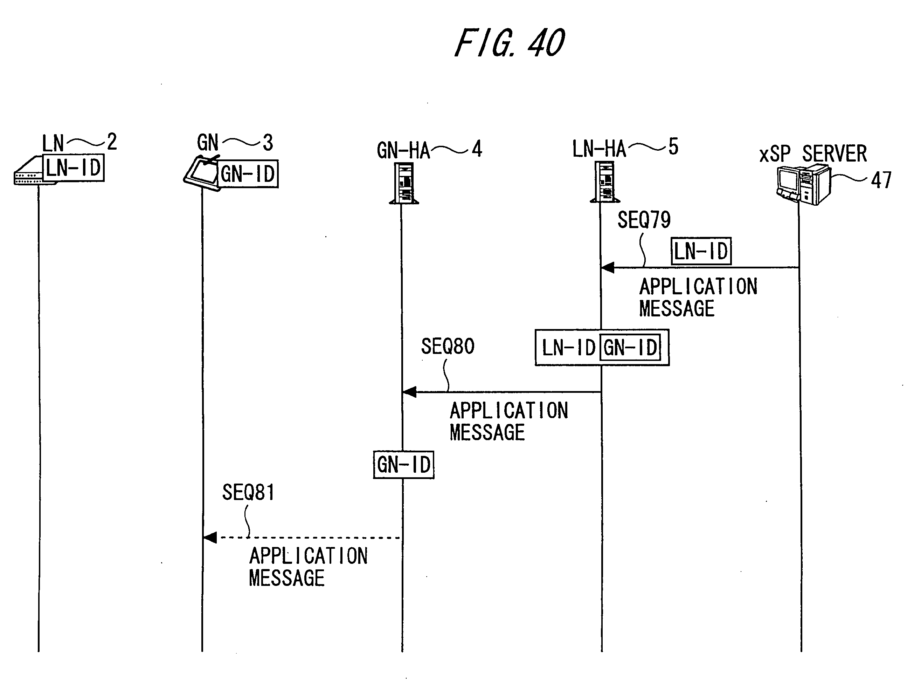

FIGS. 39 and 40 are diagrams showing the first application example of the present invention. In the first application example, an xSP (x Service Provider: carries out various service provisions) server 47 for providing services for the GN 3 used in linkage with a specific LN 2 is installed. As an example of such a service, there is transmission of a message with regard to the LN 2 (a direct mail toward the user of the LN 2, image transmission and the like).

Specifically, the xSP server 47 transmits a service execution request message (application message) including the LN-ID of the specific LN 2 to the LN-HA 5. At this time, the xSP server 47 transmits the service execution request message to the LN-HA 5 treating the corresponding LN-ID, in advance. Also, a unit for retrieving the LN-HA 5 treating the corresponding LN-ID may be installed inside the system. Also, a plurality of service execution request messages may be transmitted at the same time.

The LN-HA 5, when receiving the service execution request message, retrieves the GN-ID corresponding to the LN-ID included in the received message. Then, the retrieved GN-ID is added to the received message, and this message is transferred to the GN-HA 4 (Seq80). At this time, the LN-HA 5 performs the transfer to the GN-HA 4 treating the retrieved GN-ID. The operation of relating between the GN-ID and the GN-HA 4 may be carried out in the LN-HA 5, or may be carried out in another unit installed between the GN-HA 4 and the LN-HA 5.

The GN-HA 4 retrieves the CoA corresponding to the GN-ID included in the received message. Then, the received message is transferred to the retrieved CoA, namely, the GN 3 (Seq81). At this time, the retrieved CoA may be plural. If the messages to the plurality of CoA are identical, the GN-HA 4 may be set so as to perform multicasting transmission on the plurality of CoAs.

According to the first application example, an administrator of the xSP server 47 can provide the proper service for only the user of the specific LN 2.

### <Second Application Example>

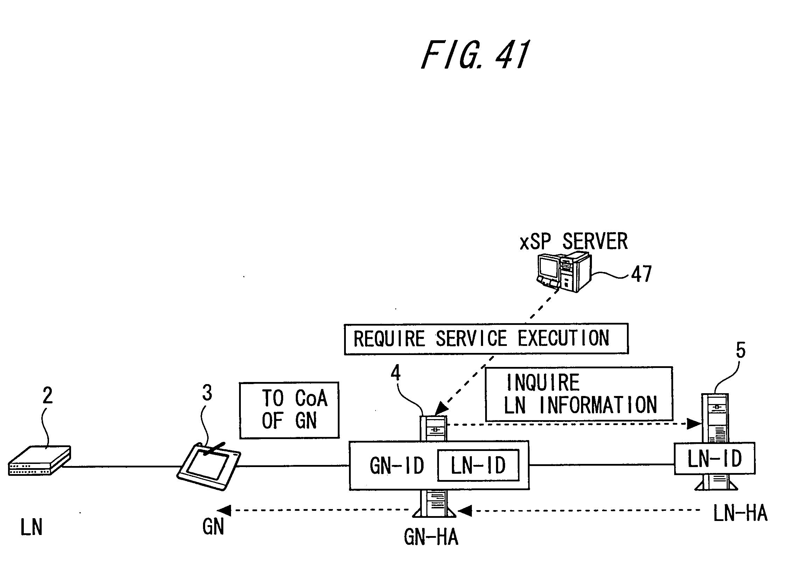

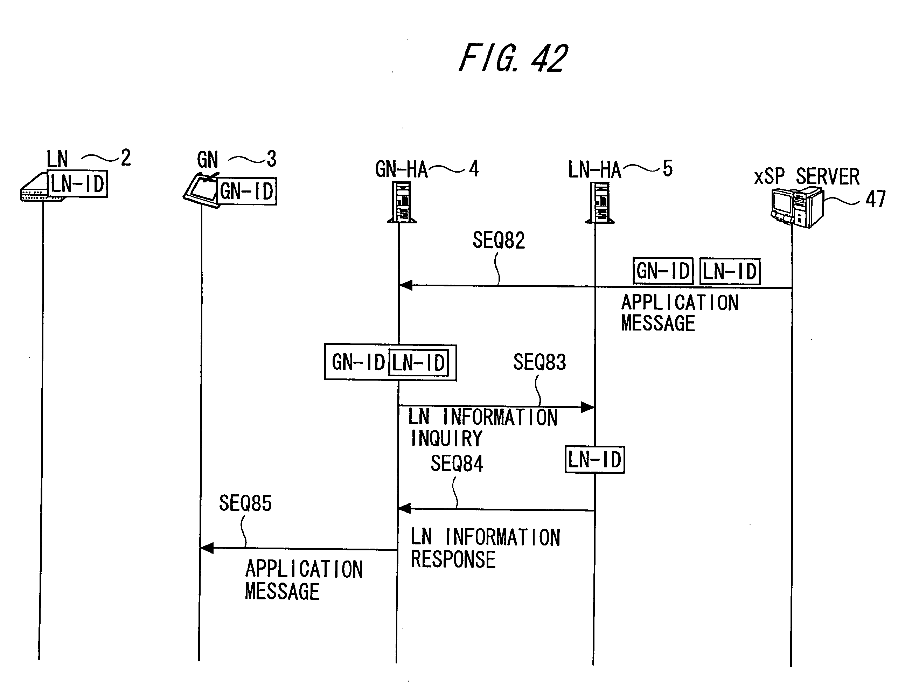

FIGS. 41 and 42 are diagrams showing the second application example of the present invention. In the second application example, the GN-ID and the LN-ID are limited by the xSP server 47. That is, the service execution request message including the GN-ID and LN-ID is transmitted by the xSP server 47 (Seq82).

The GN-HA 4 performs an LN information inquiry about the LN-ID included in the received message (Seq83). The LN-HA 5 returns the information about the LN 2 corresponding to the inquired LN-ID to the GN-HA 4 (Seq84). Then, the GN-HA 4 determines the GN-ID to be transferred the message among the GN-IDs included in the received message, in accordance with the information of the LN 2. For example, a process for transferring message only to the GN-ID of the GN 3 used by the user where the usage time of the LN 2 exceeds a predetermined time, or other process is executed. In this case, the usage time of the user with regard to the LN 2 is provided as the information of the LN 2 from the LN-HA 5. Then, the GN-HA 4 retrieves the CoA of the GN-ID that is judged to be transferred, and transfers the message to the retrieved CoA (Seq85). Incidentally, the LN-HA 5 in the second application example may be the LN-IDS 46.

In the secondapplication example, unlike the first application example, even the GN-ID is limited by the xSP server 47. Thus, the provision of the service becomes possible in accordance with the needs of the administrator of the xSP server 47.

### II. Message Transfer Control System

The message transfer control system according to the present invention will be described below. The foregoing linkage information management system (hereafter, referred to as "Basic System") roughly has the following configuration. That is, the basic system is referred to as a communication terminal ("GN") that can be connected to the wide area network such as the Internet. For example, a portable telephone, a personal computer (PC), or PDA (Personal Digital Assistants) is referred to as a unit (Local Node [LN]) that is connected through a local network to this communication terminal. For example, its identification information (LN-ID) is read from an RFID tag (Radio Frequency ID tag), Bluetooth terminal) and transmitted together with an ID (GN-ID) of a self-unit (GN itself) to the wide area network. The wide area network side holds the LN-ID and GN-ID as "Linkage Information". At this time, the linkage information is managed in association with the address of GN. Then, the linkage information is used to provide certain information (for example, a message) through the wide area network for the user (GN) related to a certain LN. The foregoing linkage information can be included in one of the context information of the user.

According to the basic system, for example, providers of the LN including service providers (ASP: Application Service Providers) provides (distributes) the LN for users. At this time, each LN is provided for the users as a singly body, or an appliance (a subject to which the LN is attached (for example, various products (including a real property), a repayable or gratuitous distribution material). Then, the GN of the user reads the LN-ID from the LN and transmits the LN-ID together with the GN-ID of the self-unit (the GN itself) to the wide area network. Consequently, on the wide area network, the LN-ID and the GN-ID are managed as the linkage information. Then, the service provider, by use of the linkage information, can provide the message related to the service, for example, only for the user related to the LN having the specific LN-ID (transmit to the GN of the user). In this way, for example, the service provider can use the linkage information and consequently provide the high level service for the user.

However, the basic system is mainly intended to register the linkage information on the wide area network side (for example, the service provider side) and transfer basic message from the wide area network side to the GN of the user related to the LN. For this reason, in putting the function of the basic system, namely, the service for using the registered linkage information into practical usage, the following problems may be considered.

In the basic system, the "Linkage Information" between the GN and the LN is registered on the wide area network side. However, the limit of the usage of the linkage information by the service provider (the fact that the linkage information is reflected in the service content as one of the contexts) is not considered. Thus, under the situation that the service provider uses the linkage information without any restriction, the service message (advertisement distribution or the like) that is not desired by the user itself is assumed to be distributed to the user of the GN (the service user).

One of the objects of the present invention is to provide a technique that can prevent the limitless usage of the linkage information.

Also, one of the objects of the present invention is to provide a technique for giving restriction to the usage of the linkage information, in accordance with the context information of the user of the GN or the context information related to the LN (for example, the context information of the service provider).

Also, one of the objects of the present invention is to provide a technique that can prevent the message transmission to the GN based on the limitless usage of the linkage information.

In the foregoing basic system (the linkage information management system), a system (a message transfer control system for using the linkage information) to limit the usage of the linkage information of a service provider (ASP) (for example transferring a message in which the linkage information is used) will be described below.

In transferring service messages based on context information of each terminal connected to the wide area network (e. g., the Internet), it is necessary to consider not only requirements of a message transmission side unit (e. g., an advertisement distribution server) but also conditions set for the LN itself in addition to tastes for users. For example, distributing information with regard to alcoholic beverages to minors is irrelevant. Allowance or rejection of distributing messages should be determined after considering and reflecting not only intentions of service providers (e. g., an advertisement information distributor) but also intentions of requesters to the service providers (e. g., selling source of products as alcoholic beverages) and end consumers (users of GN) and the like. For this reason, a function to carry out transfer control (judgment of transmission allowance or rejection) of messages based on contexts related to persons related to the foregoing services is required.

The message transfer control system is attained by adding new units and functions to the basic system. Therefore, the explanation of the system is mainly performed on the new units and functions.

### [System Configuration]

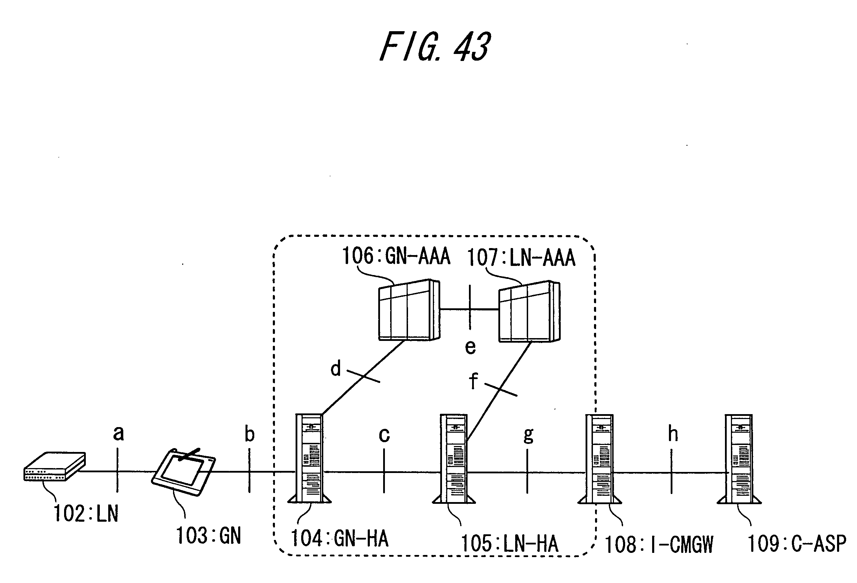

FIG. 43 is a diagram showing a basic network configuration example of the system (the message transfer control system that uses the linkage information) in a case of adding a configuration for carrying out message transfer control to the linkage information management system as shown in FIG. 1.

As shown in FIG. 43, the message transfer control system can be configured so as to include: an LN 102 and GN 103 which are located on the user side; a GN-HA 104, LN-HA 105, GN-AAA 106, LN-AAA 107, and I-CMGW (Incoming Context - aware Message Gateway) 108 which are located on the wide area network (indicated by a broken line in FIG. 43) ; ; and a C-ASP (Context - aware Application Service Provider) connected to the I-CMGW 108.

In FIG. 43, "a" indicates a boundary between the local network and the wide area network, "b" indicates a connection point to the wide area network of the GN, "c" indicates a linkage point between the GN-HA and the LN-HA (depends on reliability relation between both of them), "d" indicates a connection point between the GN-HA and the GN-AAA (used in a case of requiring the authentication of the GN), "e" indicates a linkage point between the GN-AAA and the LN-AAA (used depending on the reliability relation between both of them), "f" indicates a linkage point between the LN-HA and the LN-AAA, "g" indicates a connection point between the I-CMGW and the LN-HA, and "h" indicates a connection point between the I-CMGW and the C-ASP.

The same equipment as the LN 2 and the GN 3 (FIG. 1) in the basic system can be applied to the LN 102 and GN 103. The GN-HA 104, LN-HA 105, GN-AAA 106, and LN-AAA 107 have configurations and functions similar to those of GN-HA 4, LN-HA 5, GN-AAA 6, and LN-AAA 7 which are explained in the basic system, with regard to the registration and management of the linkage information.

However, a transfer control function of messages is added to the GN-HA 104 and LN-HA 105. Also, functions for carrying out registration and management of message transfer control information based on context information used to judge whether to allow or reject the message transfer is added to the GN-HA 104, LN-HA105, GN-AAA 106, and LN-AAA 107. Also, the configurations and functions related to the registration of the message transfer control information can be also added to the LN 102 and GN 103.

The C-ASP 109 has the same locationing as that of the existing application service provider (ASP). The C-ASP 109 is configured so as to be able to insert the context information (the LN-ID and the like) into a provision condition of various services provided by the ASP. The various services expanded on the network include the information distributions through the various applications, such as VoIP, a Web page, an electronic mail, and an image stream. The C-ASP 109 designates the context information (the LN-ID and the like) related to the LN 102, when a service message is transferred to (service is provided for) the GN 103 related to the LN 102 by the linkage information.

The I-CMGW 108 has a gateway function for receiving the service message including the context information designated by the C-ASP 109 in the wide area network. The I-CMGW 108 has a function for determining the LN-HA 105 that should transfer the service message, on the basis of contents of the context information related to the LN 102 included in the service message. On the wide area network, a plurality of LN-HA 105 are prepared in accordance with a cutting (sharing or dividing) method of a management related to the various LNs such as an information provider, a network administrator, and content of the context. The service message is transferred by the I-CMGW 108 to the corresponding LN-HA 105, in accordance with the context information such as the LN-ID.

One or more C-ASP 109 and I-CMGW 108 can be prepared, in accordance with the various conditions such as the number of LN-HA 105 and the number of ASPs. The C-ASP 109 holds the content related to the service and does not have a service contract with an individual user. The C-ASP 109 transmits the service message designated by the context information. The I-CMGW 108 distributes the service message from the C-ASP 109 into the proper LN-HA 105 on the basis of correspondence between the ASP and the LN (LN-HA 106). The LN-AAA 107 holds contract conditions and latest conditions of each LN 102. The LN-HA 105 carries out access control from each ASP to the LN 102. The LN-HA 105 can inquire a state and contract condition of the LN 102 to the LN-AAA 107.

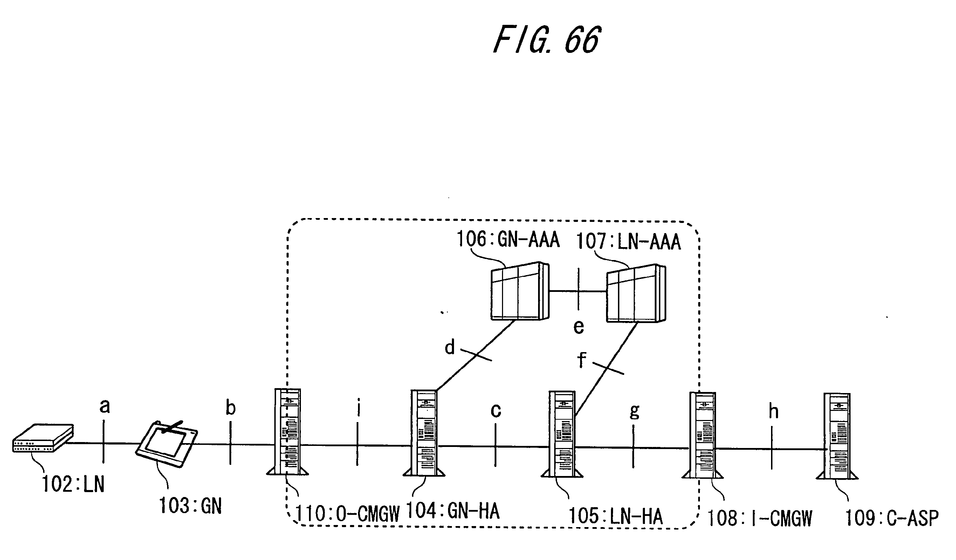

Moreover, although not shown in FIG. 43, the message transfer control system can include an O-CMGW (Outgoing Context - aware Message Gateway) 110 (see FIG. 66). The O-CMGW 110 is a gateway device for controlling the transfer of the service message which outgoes from the wide area network towards the user terminal (GN). That is, the O-CMGW 110 has a function for shutting down the service message that is not desired by the user, as necessary, in accordance with the context information related to the user (GN), although it passes through the LN-HA 105 (satisfies the transfer condition based on the context information related to the LN 102).

Note that, the GN-HA 104 and/or LN-HA 105 can configure the message transfer control system including a linkage information storage device, a transfer control information storage device, and transfer control means (may have first and second judging means). Also, the LN 102 corresponds to a distribution device, the GN 103 corresponds to a communication terminal, the GN-HA 104 corresponds to a location registration device of the communication terminal, the LN-HA 105 corresponds to a location registration device of the distribution device, the GN-AAA 106 corresponds to an authentication device of the communication terminal, the LN-AAA 107 corresponds to an authentication device of the distribution device, the I-CMGW 108 corresponds to a transfer control gateway device on an ingress side of the wide area network, and the O-CMGW corresponds to the transfer control gateway on an egress side of the wide area network.

### [Message Transfer Control Information]

The message transfer control information (referred to as "CAC (Connection Authorization Cache) " used in the transfer control for the service message in the LN-HA 105 and GN-HA 104 will be described.

When the service message distribution that uses the context information of the GN 103 and LN 102 where the linkage information (the information indicating the relation between the LN-ID and the GN-ID) is registered is carried out, it is necessary to define a message transfer condition.

However, as the number of each of the service providers (ASP), GN providers (GNP: Global Node Provider), and LN providers (LNP: Local Node Providers) increases, combinations of the message transfer conditions for each message become enormous. At this time, when managements of the transfer conditions of the message are collectively executed under a fixed rule, the managements are expected to be difficult (for example, whenever changes of an item configuring the context occurs and changes in the transfer condition based on the item changing further occur, necessity of changing relations of data and specification in the entire management system is occurred). It is not able to adapt judgment of whether to allow or reject transferring messages based on such a management method to enlarging the scale of the network (poor in scalability).

So, the message transfer condition related to each of the individual GN 103 and the individual LN 102 is individually defined and the message transfer condition peculiar to each of GNs and LNs is managed on the wide area network. Consequently, the requirement of the message transfer condition can have flexibility. Also, the message transfer condition corresponding to each convenience of ASP, GNP, and LNP can be easily defined, thereby propelling the entry into the system.

For this reason, in the message transfer control system shown in FIG. 43, the message transfer control information defined the message transfer condition based on the context information respectively related to each of the GN 103 and LN 102, namely, a dataset (CAC) described whether or not the service can be provided for the GN 103 is held (managed) on the wide area network. Then, when the service message of the individual ASP is transferred from the C-ASP 109 to the GN 103, the message transfer control based on the CAC is carried out on the wide area network. For this reason, the individual message transfer condition based on the context information for each GN 103 and the individual message transfer condition based on the context information for each LN 102 are defined as the CAC.

Specifically explaining, for the individual GN 103 managed by the GNP and the individual LN 102 managed by the LNP, the dataset for describing the condition of the message transfer allowance or rejection is defined in accordance with each of the context information. This dataset is referred to as CAC (Connection Authorization Cache).

The minimum unit defined by the CAC is the individual GN 103 and the individual LN 102. In the data configuration of the CAC, a certain format needs to be defined and made common in the message transfer control system. Specifically, the following configuration is employed.

The basic information elements included in the CAC are as follows.
(1) CAC Common (Fixed) Section (CAC-C)
   The message control information constituted by the common attribute that can be interpreted by any units referring to the CAC (for example, the attribute that should be essentially included irrespectively of the content of the contract service).
(2) CAC Individual (Variable) Section (CAC-V)
   The message control information corresponding to the variable portion of the CAC which can be interpreted only between specific players (for example, the LN and the advertisement distributor linked with a company for managing the LN), other than the CAC-C. For example, through reflecting the content of the contract service, it is determined whether or not the individual LN or GN has the individual CAC-V.

When the CAC is used, at least one of the foregoing CAC-C and CAC-V needs to be included. However, the definition and configuration (item) of the CAC-C and CAC-V depend on the purpose of the service provider.

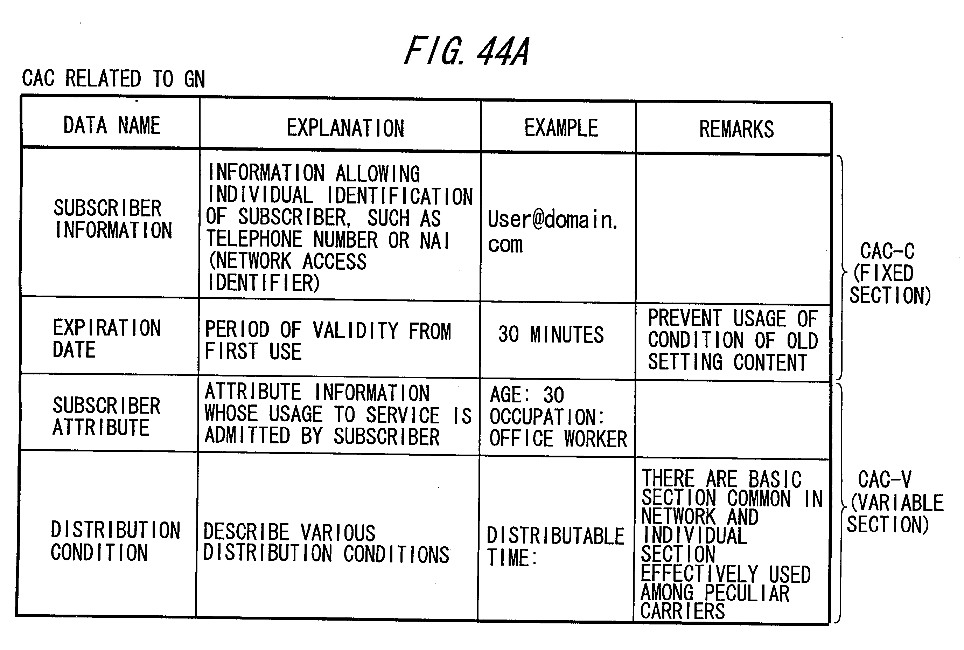

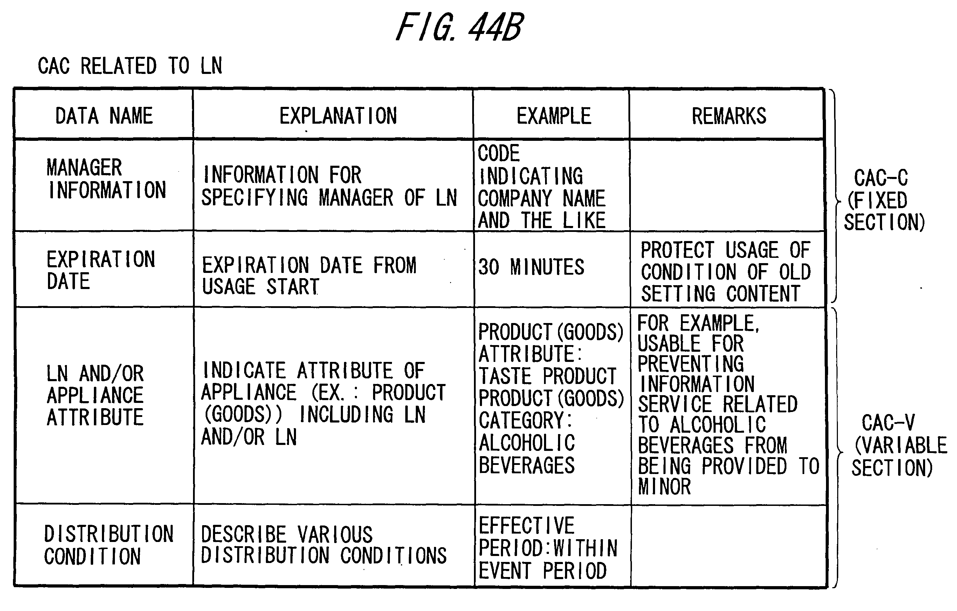

FIG. 44 shows an example of the data configuration of the CAC. FIG. 44A shows the data configuration example of CAC (GN-CAC) about the GN, and FIG. 44B shows the data configuration example of CAC (LN-CAC) with regard to the LN. The LN-CAC corresponds to the first transfer condition information, and the GN-CAC corresponds to the second transfer condition information.

The GN-CAC can include, for example, subscriber information, an expiration date (life), a subscriber attribute, and a distribution condition. Also, the subscriber information and the expiration date can be defined as the CAC-C (GN-CAC-C), and the subscriber attribute and the distribution condition can be defined as the CAC-V (GN-CAC-V).

The LN-CAC can include, for example, administrator information, an expiration date, an appliance attribute, and a distribution condition. Also, the administrator information and the expiration date can be defined as the CAC-C (LN-CAC-C), and the appliance attribute and the distribution condition can be defined as the CAC-V (GN-CAC-V).

The contents (items and definitions) of the GN-CAC and LN-CAC can be individually defined on the basis of the content of the context information related to the GN and LN.

### [Distribution Method of CAC]

The distribution method of the CAC will be explained below. In the system shown in FIG. 43, the transfer control of the message is carried out by the LN-HA 105 and the GN-HA 104. For this reason, the LN-HA 105 and the GN-HA 104 obtain the CAC used for the transfer control of the message, by using various methods. For example, the LN-HA 105 and the GN-HA 104 can obtain the CAC preset as a default CAC (D-CAC) in the GN-AAA 106 or LN-AAA 107. Alternatively, the LN-HA105 and the GN-HA 104 can obtain the CAC by receiving the CAC from the GN 103. The method for the LN-HA105 and GN-HA 104 to obtain the CAC (the distribution method of the default CAC to the LN-HA 105 and GN-HA 104) will be explained below.

As explained about the basic system, the registration process of the linkage information indicating the relation between the LN-ID and the GN-ID is carried out, for example, on the basis of the location registration procedure of the GN based on the Mobile IP. The distribution procedure of the default CAC is carried out on the basis of the registration procedure of this linkage information.

### <First Distribution Method>

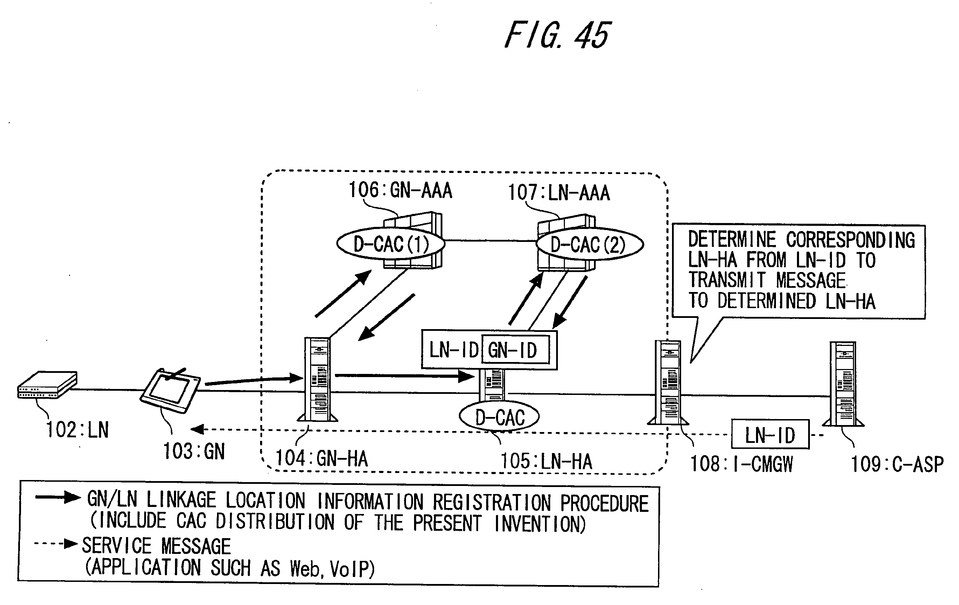

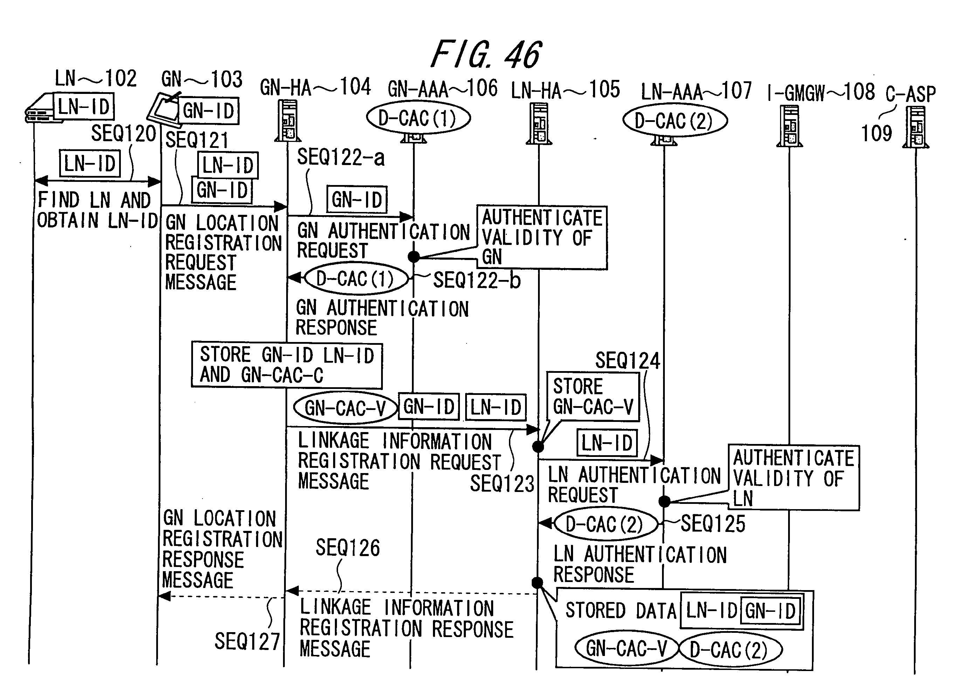

FIG. 45 and FIG. 46 are diagrams showing the first process sequence of the distribution method of the CAC. The first distribution method is carried out by the linkage (on the basis of the registration process of the linkage information) with the fifth operation example (refer to FIGS. 24 and 25) in the foregoing basic system.

In the GN-AAA 106, as the default CAC, the context information (GN-CAC) respectively related to the individual GN 103 are prepared in advance. Such a default CAC is represented as "D-CAC (1)." The D-CAC (1) includes the GN-CAC-C and the GN-CAC-V. On the other hand, also in the LN-AAA 107, CAC (LN-CAC) respectively related to the individual LN 102 are prepared in advance. Such a default CAC is represented as "D-CAC (2)." Each of the D-CAC (1) and the D-CAC (2) is kept on the databases managed by the GN-AAA 106 and the LN-AAA 107, respectively, as master (raw) information of the CAC.

In the process sequences shown in FIG. 45 and FIG. 46, a portion related to the registration of the linkage information is similar to the registration process based on the fifth operation example of the basic system (refer to FIGS. 24 and 25) . On the other hand, the distribution procedure of the default CAC is added to the registration procedure of the linkage information as follows.

As shown in FIG. 46, the GN-AAA 106, when receiving the GN authentication request message including the GN-ID from the GN-HA 104, authenticates the validity of the GN 103 having the GN-ID. At this time, if the validity is admitted, the GN-AAA 106 reads the D-CAC (1), which is held in advance in association.with the GN-ID, and returns the GN authentication response message including this D-CAC(1) to the GN-HA 104 (SEQ122-b).

The GN-HA 104, when receiving the GN authentication response message indicating an authentication success, relates the GN-ID with the LN-ID to register them as the linkage information. Next, the GN-HA 104 separates the D-CAC(1) into GN-CAC-C and GN-CAC-V to associate the GN-CAC-C with the linkage information and register them.

After that, the GN-HA 104 prepares the linkage information registration request message including the GN-ID and LN-ID that the GN-CAC-V is set, to transmit to the LN-HA 105 (SEQ123).

The LN-HA 105, when receiving the linkage information registration request message, stores the GN-CAC-V included in the message. Next, the LN-HA 105 transmits the LN authentication request including the LN-ID included in the linkage information registration request message to the LN-AAA 107 (SEQ124).

The LN-AAA 107 authenticates the validity of the LN having the LN-ID included in the LN authentication request, and if the authentication is successful, reads the D-CAC(2) that is held in advance in association with this LN-ID, and returns the LN authentication response message including this D-CAC (2) to the LN-HA 105 (SEQ125).

The LN-HA 105, when receiving the LN authentication response message indicating the authentication success, registers the GN-ID and LN-ID as the linkage information. Moreover, the LN-HA synthesizes the contents of the previously stored GN-CAC-V and the D-CAC(2) (LN-CAC) in the LN authentication response message.

Moreover, the LN-HA 105 registers the synthesized GN-CAC-V and LN-CAC (represented as "Synthesis CAC") after relating the linkage information with the synthesis CAC. In this way, a message control rule corresponding to the linkage information is prepared and registered inside the LN-HA 105.

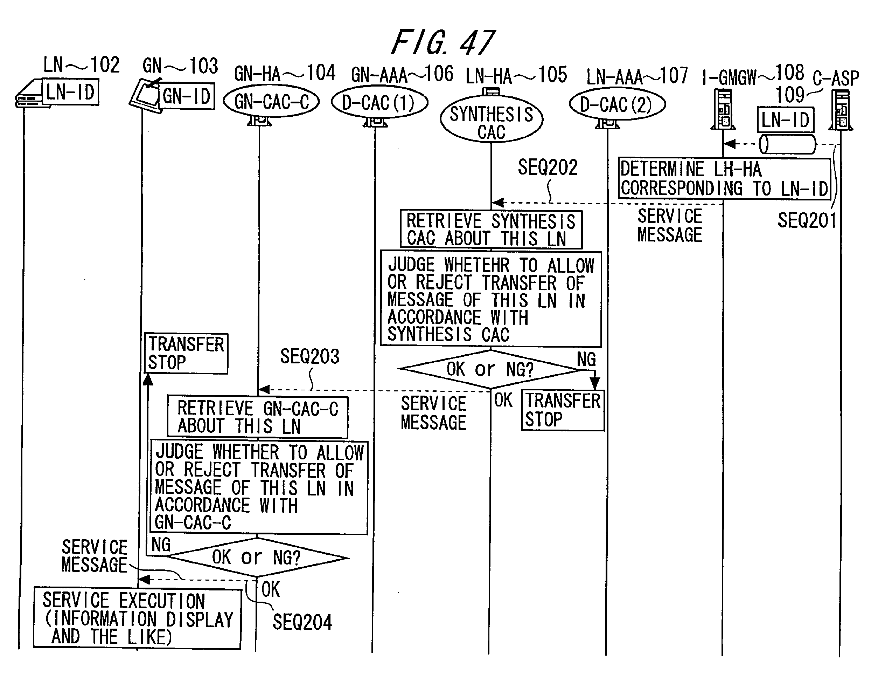

FIG. 47 is a diagram exemplifying the process sequence of the message transfer control that uses the synthesis CAC and GN-CAC-C registered in the LN-HA 105 and GN-HA 104 in accordance with the process sequence shown in FIG. 46.

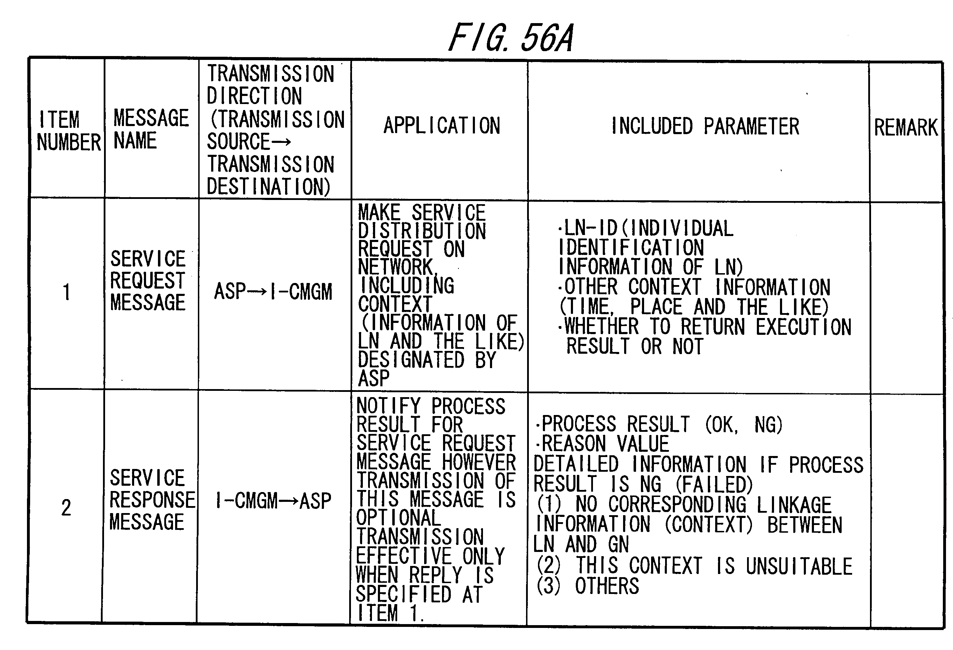

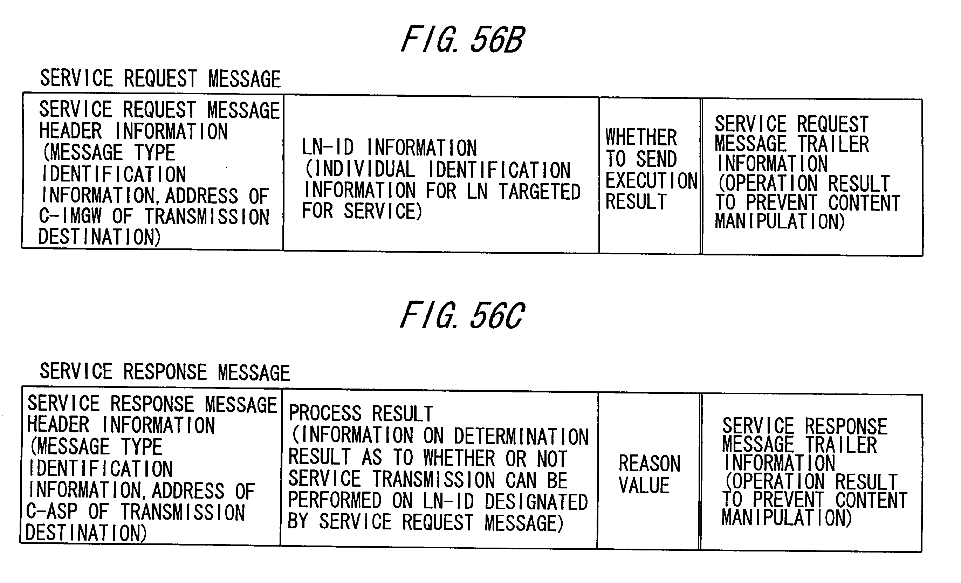

In FIG. 47, if the ASP transfers the service message to the GN 103 related to the particular (specific) LN 102, the C-ASP 109 transmits the service request message (refer to FIG. 56), in which the service message is capsulated, to the I-CMGW 108 (SEQ201). At this time, the LN-ID indicating the specific LN is set for a header portion of the service request message.

The I-CMGW 108, when receiving the service request message, extracts the LN-ID set for the header to calculate (specify) the LN-HA 105 that manages the extracted LN-ID, and transfers the service message included in the service request message to the calculated LN-HA 105 (SEQ202).

The LN-HA 105, when receiving the service message, judges whether or not there is the effective linkage information corresponding to the LN-ID included in the service message. At this time, the LN-HA 105 stops transferring the service message if there is no effective linkage information.

In contrast, if there is the effective linkage information, the LN-HA 105 reads the synthesis CAC registered in association with this linkage information, and judges whether or not the transfer condition of the message defined by the synthesis CAC (the transfer condition based on the context information) is satisfied (whether the transfer of the message is OK or NG).

At this time, if the transfer of the message is OK, the LN-HA 105 transfers the service message to the GN-HA 105 that manages the GN 103 specified by the linkage information (SEQ203). In contrast, if the transfer of the message is NG, the LN-HA 105 stops transferring the service message. It is prevented that the service message, which is not desired by the user of the GN 103, is transmitted to the GN 103.

The GN-HA 104, when receiving the service message, judges whether or not the linkage information corresponding to the LN-ID included in the message is registered. At this time, the GN-HA 104 stops transferring the service message if there is no effective linkage information. In contrast, if there is the effective linkage information, the GN-CAC-C registered in association with this linkage information is read, and it is judged that whether or not the transfer condition of the message defined by this GN-CAC-C (the transfer condition based on the context information related to the GN) is satisfied (whether the transfer of the message is OK or NG).

At this time, if the transfer of the message is OK, the GN-HA 104 transfers the service message to the GN 103 (SEQ204). In contrast, if the transfer of the message is NG, the GN-HA 104 stops transferring the service message (e. g., discarding message). It is prevented that the service message, which is not desired by the user of the GN 103, is transmitted to the GN 103.

Then, the GN 103, when receiving the service message from the GN-HA 104, carries out the service (the information indication and the like) based on this service message.

Note that, the GN-HA 104 may be configured so as to relate the GN-ID with the GN-CAC-C and register them, and further the GN-HA 104 may be configured so that the judgment whether to allow or reject transferring message is executed with usage of the GN-CAC-C corresponding to the GN-ID (calculated by the linkage information) included in the service message transferred from the LN-HA 105. In this case, the GN-HA 104 does not need to register the linkage information.

### <Second Distribution Method>

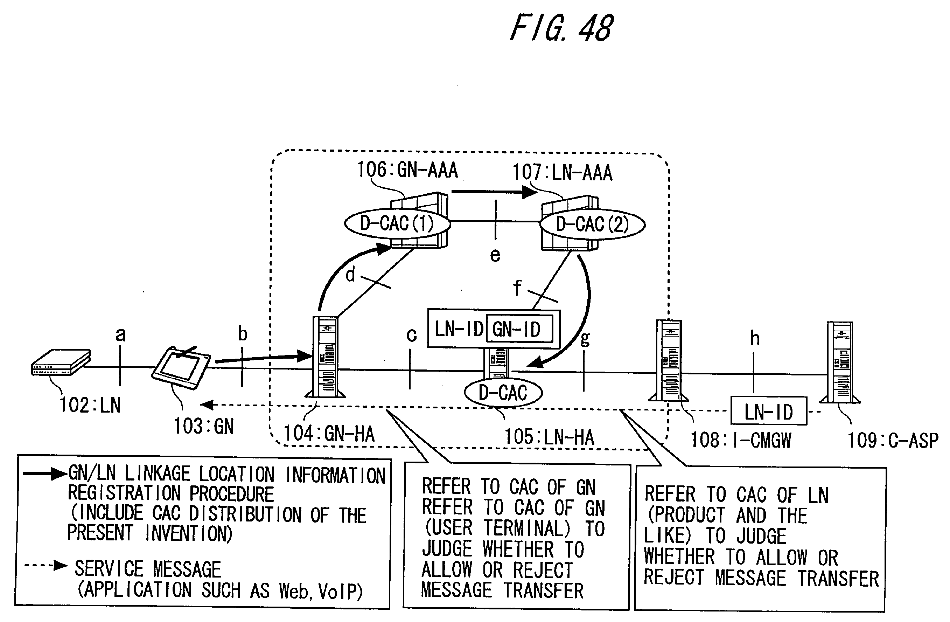

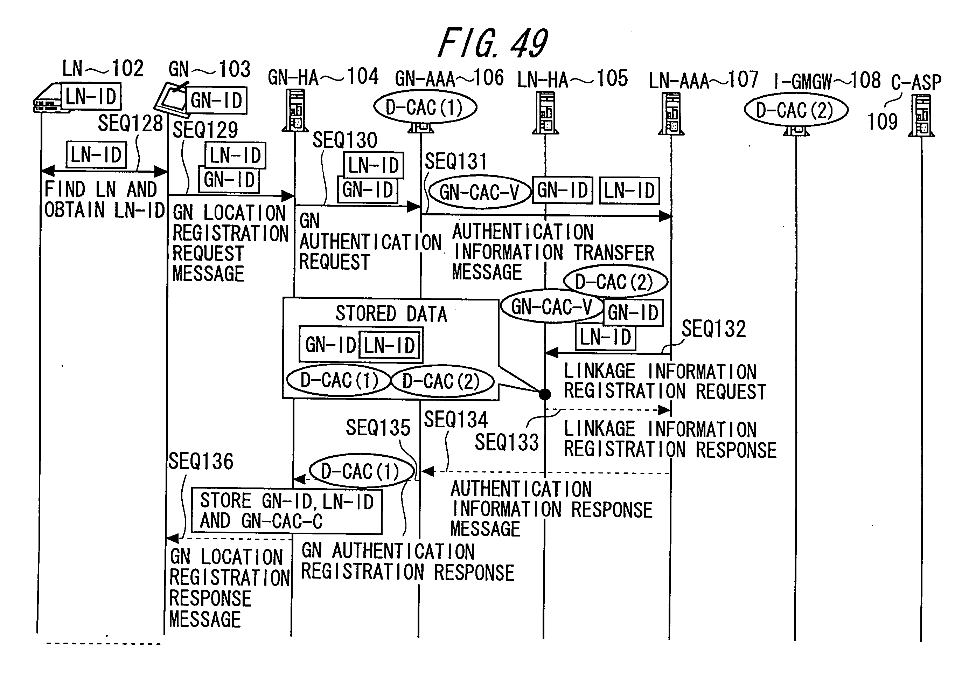

FIG. 48 and FIG. 49 are diagrams showing the second process sequence of the distribution method of the default CAC. The second distribution method is carried out by the linkage with the registration process (refer to FIGS. 26 and 27) of the linkage information based on the sixth operation example in the foregoing basic system.

The point that the D-CAC(1) and D-CAC(2) are respectively stored in the GN-AAA 106 and LN-AAA 107 in advance is similar to the first distribution method. Also, in the second distribution method shown in FIGS. 48 and 49, the portion related to the registration of the linkage information is similar to the sixth operation example in the basic system. On the other hand, the distribution procedure of the default CAC is added to the registration procedure of the linkage information based on the sixth operation example as follows.

The GN-AAA 106, when receiving the GN authentication request message from the GN-HA 104 (SEQ130), performs the authentication process of the GN-ID included in this GN authentication request message. At this time, if the validity of the GN-ID is admitted (the authentication is successful), theGN-AAA 106 reads the GN-CAC-V in the D-CAC(1) corresponding to this GN-ID, stores in the authentication information transfer message and transmits to the LN-AAA 107 (SEQ131).

The LN-AAA 107, when receiving the authentication information transfer message, performs the authentication process on the LN-ID included in this message. At this time, if the validity of the LN-ID is admitted, the LN-AAA 107 reads the D-CAC(2) corresponding to this LN-ID, stores the GN-CAC-V and D-CAC(2) in the linkage information registration request message, and transmits to the LN-HA 105 (SEQ132).

The LN-HA 105, when receiving the linkage information registration request message, relates the LN-ID with the GN-ID, each of which is included in this message to register them as the linkage information. Moreover, the LN-HA 105 prepares the synthesis CAC in which the GN-CAC-V and the D-CAC(2) are synthesized, and registers in association with the previously registered linkage information. Then, the LN-HA 105 transmits the linkage information registration response message to the LN-AAA 107 (SEQ133).

The LN-AAA 107, when receiving the linkage information registration response message, prepares the authentication information response message corresponding to this message and transmits to the GN-AAA 106 (SEQ134).

The GN-AAA 106, when receiving the authentication information response message, reads the GN-CAC-C in the D-CAC (1) corresponding to the GN-ID whose authentication previously succeeded, and transmits the GN authentication response message including the GN-CAC-C to the GN-HA 104 (SEQ135).

The GN-HA 104, when receiving the GN authentication response message, relates the GN-ID with the LN-ID to register them as the linkage information. Moreover, the GN-HA 104 relates the GN-CAC-C in the response message with the linkage information and registers the information. Then, the GN location registration message is transmitted to the GN 103 (SEQ136).

As described above, the synthesis CAC is registered in the LN-HA 105, and the GN-CAC-C is registered in the GN-HA 104. After that, if the C-ASP 109 transmits the service requestmessage including the service message, in accordance with the process sequence similar to that shown in FIG. 47, the LN-HA 105 and the GN-HA 104 carry out the transfer control of the service message based on the synthesis CAC and GN-CAC-C.

### <Third Distribution Method>

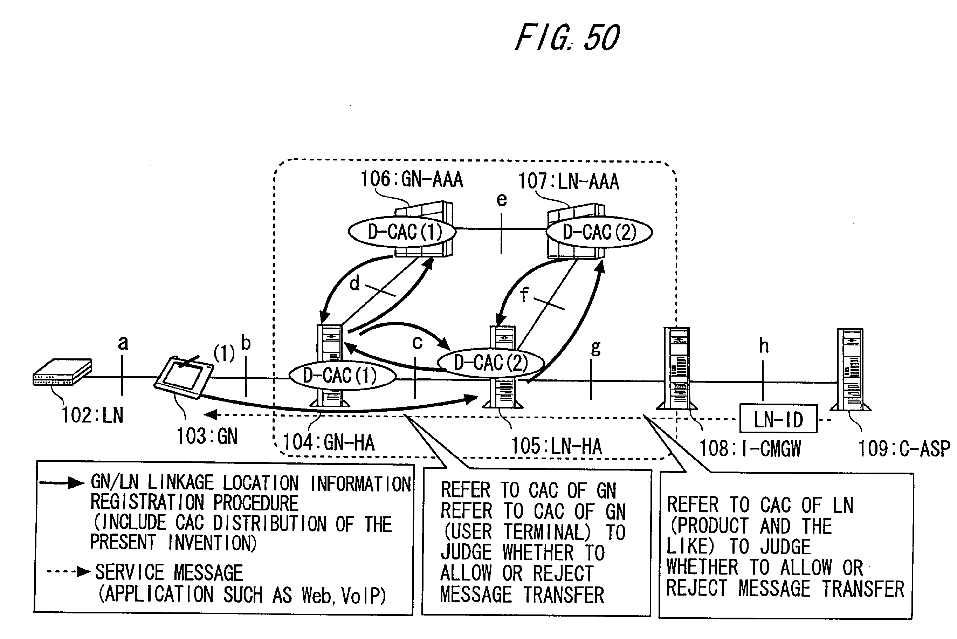

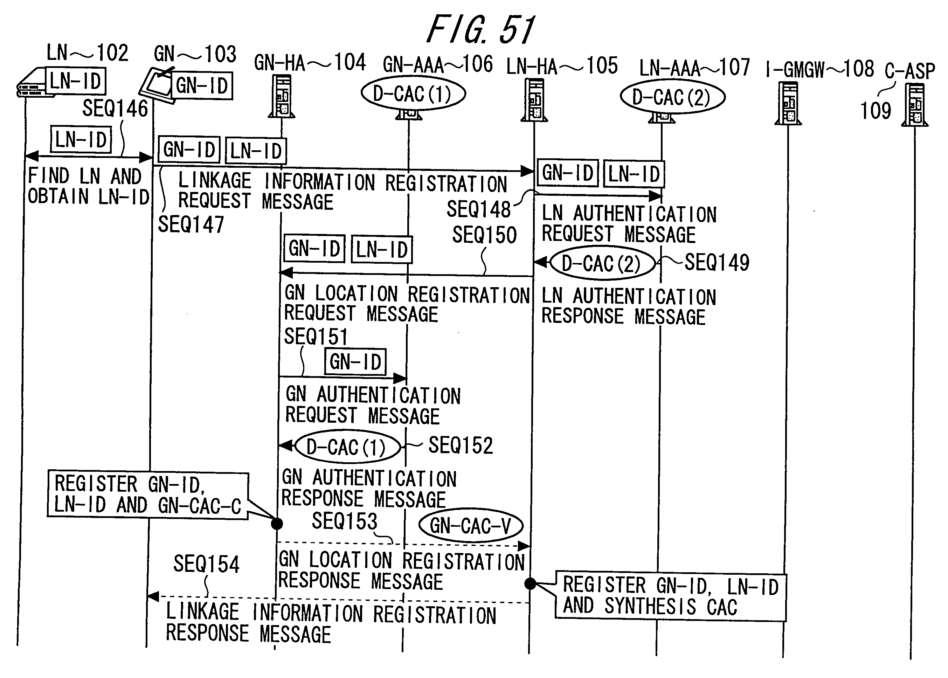

FIG. 50 and FIG. 51 are diagrams showing the third process sequence of the distribution method of the default CAC. The third distribution method is carried out by the linkage with the registration process (refer to FIGS. 30 and 31) of the linkage information based on the eighth operation example in the foregoing basic system.

The point that the D-CAC (1) and the D-CAC (2) are respectively stored in advance in the GN-AAA 106 and the LN-AAA 107 is similar to the first and second distribution methods. Also, in the third distribution method, the portion related to the registration of the linkage information is similar to the registration process based on the eighth operation example in the basic system. On the other hand, the distribution procedure of the default CAC is added to the registration procedure of the linkage information based on the eighth operation example as follows.

The LN-HA 105, when receiving the linkage information registration request message transmitted from the GN 103 by the SEQ147, prepares the LN authentication request message including the GN-ID and LN-ID included in the received message to transmit to the LN-AAA 107 (SEQ148).

The LN-AAA 107, when receiving the LN authentication request message, performs the authentication process on the LN-ID included inthismessage. At this time, if the validity of the LN-ID is admitted, the LN-AAA 107 reads the D-CAC (2) corresponding to this LN-ID, stores in the LN authentication response message and transmits to the LN-HA 105 (SEQ149).

The LN-HA 105, when receiving the LN authentication response message, transmits the GN location registration request message including the GN-ID and LN-ID included in the linkage information registration request message to the GN-HA 104 (SEQ150).

The GN-HA 104, when receiving the GN location registration request message, prepares the GN authentication request message including the GN-ID included in this message and transmits to the GN-AAA 106 (SEQ151).

The GN-AAA 106, when receiving the GN authentication request message from the GN-HA 104, performs the authentication process on the GN-ID included in this message. At this time, if the authentication of the GN-ID is successful, the GN-AAA 106 reads the D-CAC(1) corresponding to this GN-ID, stores in the GN authentication response message and transmits to the GN-HA 104 (SEQ152).

The GN-HA 104, when receiving the GN authentication response message, relates the GN-ID with the LN-ID, each of which is included in the GN location registration request message, to register them as the linkage information. Moreover, the GN-HA 104 separates the D-CAC (1) in the GN authentication response message into the GN-CAC-C and the GN-CAC-V, and relates the GN-CAC-C with the previously registered linkage information and registers the information. Then, the GN-HA 104 transmits the GN location registration response message including the GN-CAC-V to the LN-HA 105 (SEQ153).

The LN-HA 105, when receiving the GN location registration response message, relates the LN-ID with the GN-ID to register them as the linkage information. Moreover, the LN-HA 105 prepares the synthesis CAC, in which the GN-CAC-V and the D-CAC (2) obtained from the LN-AAA 107 are synthesized, and registers in association with the previously registered linkage information. Then, the LN-HA 105 transmits the linkage information registration response message to the GN 103 (SEQ154).

As described above, the synthesis CAC is registered in the LN-HA 105, and the GN-CAC-C is registered in the GN-HA 104. After that, if the C-ASP 109 transmits the service requestmessage including the service message, in accordance with the process sequence similar to that shown in FIG. 47, the LN-HA 105 carries out the transfer control of the service message based on the synthesis CAC, and the GN-HA 104 carries out the transfer control of the service message based on the GN-CAC-C.

### <Fourth Distribution Method>

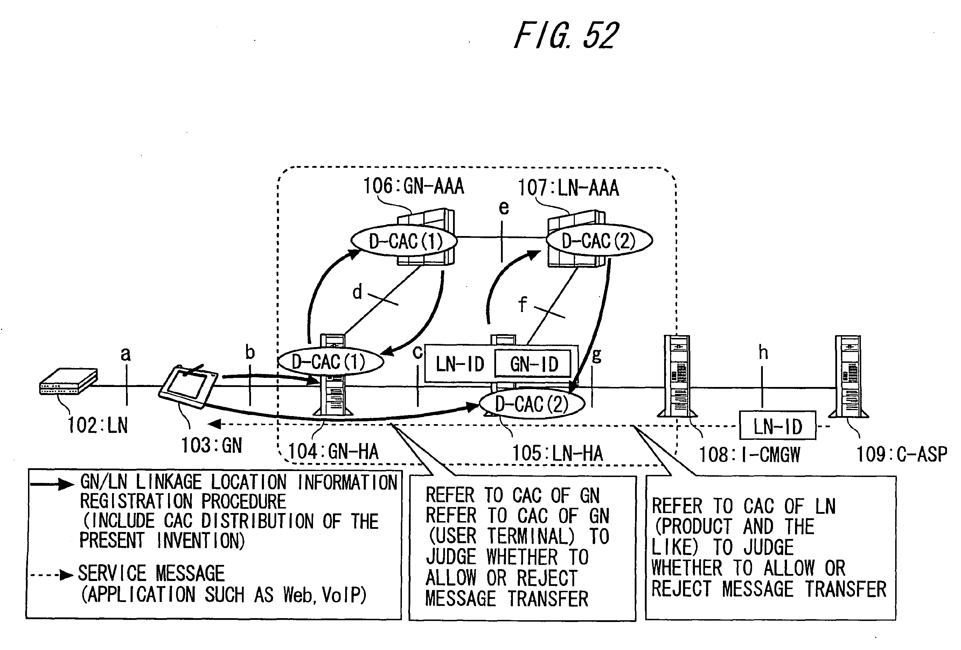

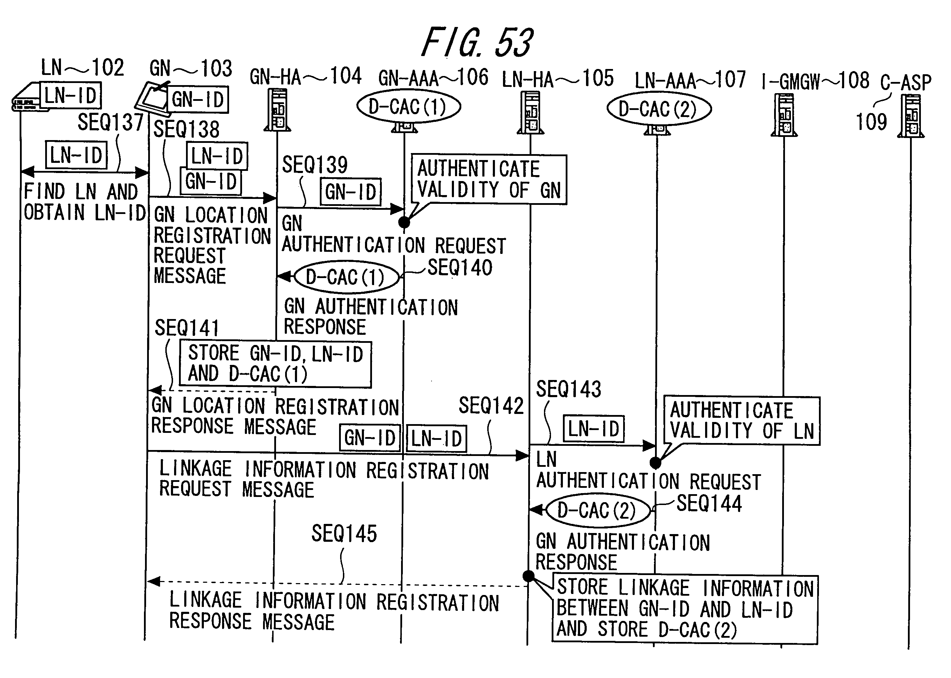

FIG. 52 and FIG. 53 are diagrams showing the fourth process sequence of the distribution method of the default CAC. The fourth distribution method is carried out by the linkage with the registration process (refer to FIGS. 28 and 29) of the linkage information based on the seventh operation example in the foregoing basic system.

The point that the D-CAC (1) and the D-CAC (2) are respectively stored in advance in the GN-AAA 106 and the LN-AAA 107 is similar to the first to third distribution methods. Also, in the fourth distribution method, the portion related to the registration of the linkage information is similar to the registration process based on the seventh operation example in the basic system. On the other hand, the distribution procedure of the default CAC is added to the registration procedure of the linkage information based on the seventh operation example as follows.

The GN-AAA 106, when receiving the GN authentication request message from the GN-HA 104 (SEQ139), performs the authentication process of the GN-ID included in this GN authentication request message. At this time, if the validity of the GN-ID is admitted, the GN-AAA 106 reads the D-CAC (1) corresponding to this GN-ID, stores in the GN authentication response message, and transmits to the GN-HA 104 (SEQ140).

The GN-HA 104, when receiving the GN authentication response message, relates the GN-ID with the LN-ID to register them as the linkage information. Moreover, the GN-HA 104 relates the D-CAC (1) in the response message with the linkage information to register them. Then, the GN location registration message is transmitted to the GN 103 (SEQ141).

The GN 103, when receiving the GN location registration response message, transmits the linkage information registration request message including the GN-ID and LN-ID to the LN-HA105 (SEQ142).

The LN-HA 105, when receiving the linkage information registration request message, prepares the LN authentication request message including the LN-ID included in this message and transmits to the LN-AAA 107 (SEQ143).

The LN-AAA 107, when receiving the LN authentication request message, performs the authentication process of the LN-ID included inthismessage. At this time, if the validity of the LN-ID is admitted, the LN-AAA 107 reads the D-CAC (2) corresponding to this LN-ID, stores this D-CAC (2) in the LN authentication response message and transmits to the LN-HA 105 (SEQ144).

The LN-HA 105, when receiving the LN authentication response message, relates the LN-ID with the GN-ID to register them as the linkage information. Moreover, the LN-HA 105 relates the D-CAC (2) with the previously registered linkage information and registers the information. Then, the LN-HA 105 transmits the linkage information registration response message to the GN 103 (SEQ145).

As described above, the D-CAC(2) is registered in the LN-HA 105, and the D-CAC (1) is registered in the GN-HA 104. After that, if the C-ASP 109 transmits the service request message including the service message, the process sequence similar to that shown in FIG. 47 is executed. However, the LN-HA 105 carries out the transfer control of the service message based on the D-CAC (2), and the GN-HA 104 carries out the transfer control of the service message based on the D-CAC(1).

The fourth distribution method is characterized in that the GN-CAC (D-CAC(1)) and the LN-CAC (D-CAC(2)) are individually registered in the GN-HA 104 and LN-HA 105 as the respective location management devices. Thus, in the fourth distribution method, the GN-CAC-V is not transmitted to the LN-HA 105. Such a method is effective when the contact condition of the GN (GN-CAC) requires a high privacy.

### <Fifth Distribution Method>

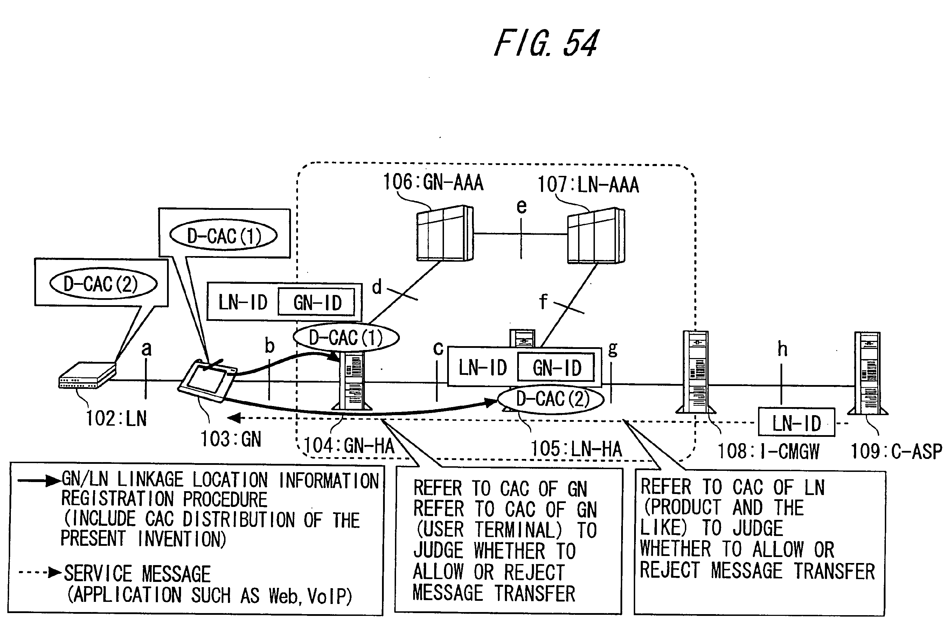

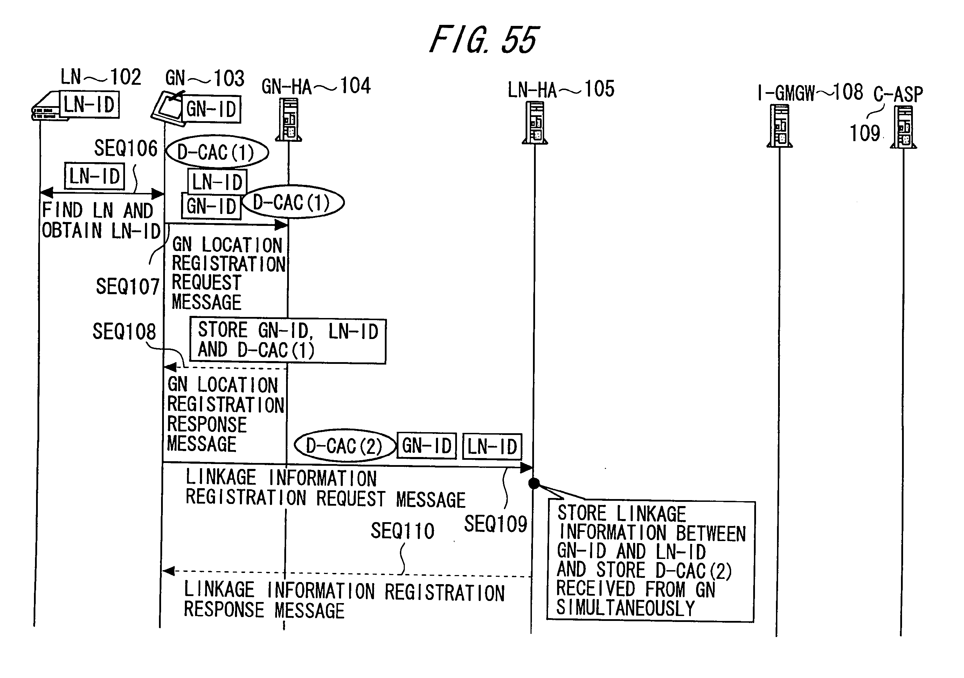

FIG. 54 and FIG. 55 are diagrams showing the fifth process sequence of the distribution method of the default CAC. The fifth distribution method is carried out through the linkage with the registration process (refer to FIGS. 18 and 19) of the linkage information based on the second operation example in the foregoing basic system.

In the fifth distribution method, differing from the first to fourth distribution methods, in the registration process of the linkage information, the authentication processes of the GN and LN are not carried out by the GN-AAA 106 and LN-AAA 107. That is, when the linkage information is registered, the accesses to the GN-AAA 106 and LN-AAA 107 are not executed. For this reason, the D-CAC(2) is held in the LN 102 as partial or related information of the LN-ID, and the D-CAC(1) is held in the GN 103 as partial or related information of the GN-ID. However, in the fifth distribution method, the portion related to the registration of the linkage information is similar to the registration process based on the second operation example. On the other hand, the distribution procedure of the default CAC is added to the registration procedure of the linkage information based on the second operation example asfollows. In the following explanation, the registration example in the case where the D-CAC(2) is incorporated in the LN 102 in association with the LN-ID and where the D-CAC (1) is incorporated in the GN 103 in association with the GN-ID is explained.

The GN 103, when obtaining the LN-ID from the LN 102 , further obtains the D-CAC(2) (SEQ106). Then, the GN 103 creates the GN location registration request message including the LN-ID, the GN-ID of the self-unit (the GN 103 itself), and the D-CAC (1) of the self-unit, and transmits the created message to the GN-HA 104 (SEQ107).

The GN-HA 104, when receiving the GN location registration request message, registers the GN-ID and LN-ID as the linkage information after associating with each other. Moreover, the GN-HA 104 registers the D-CAC(1) in association with this linkage information. Then, the GN location registration response message is transmitted to the GN 103 (SEQ108).

The GN 103, when receiving the GN location registration response message, prepares the linkage information registration request message including the LN-ID, the GN-ID of the self-unit, and the D-CAC(2) obtained from the LN 102, and transmits to the LN-HA 105 (SEQ109).

The LN-HA 105, when receiving the linkage information registration request message, relates the GN-ID with the LN-ID, each of which is included in the message to register them as the linkage information. Moreover, the LN-HA 105 relates the D-CAC(2) included in the linkage information registration request message with the previous linkage information and registers the information. Then, the LN-HA 105 transmits the linkage information registration response message to the GN 103 (SEQ110).

As described above, the D-CAC (2) is registered in the LN-HA 105, and the D-CAC (1) is registered in the GN-HA 104. After that, if the C-ASP 109 transmits the service request message including the service message, in accordance with the process sequence substantially similar to that shown in FIG. 22, the LN-HA 105 carries out the transfer control of the service message based on the D-CAC (2), and the GN-HA 104 carries out the transfer control of the service message based on the D-CAC(1).

Note that, if the transfer control of the message based on the synthesis CAC in the LN-HA 105 is desired, the D-CAC(2) is configured as the part of the LN-ID, and the D-CAC (1) is configured as the part of the GN-ID. Consequently, in the sequence shown in FIG. 30, the D-CAC(1) becomes at the state that it is transmitted to the LN-HA 105.

The fifth distribution method is assumed to be applied to a case where there is no server having an authentication function to the LN or GN, or a case where the efficiency is emphasized more than the authentication (for example, an operation inside a private network).

### [Service Request Message]

The service request message transferred between the I-CMGW 108 and the C-ASP 109 which is used in the transmission of the service message of the ASP will be described below.

The service message (e.g., advertisement distribution request) transferred to the GN 103 from the service provider (ASP) includes the context information (at least LN-ID) to determine that a transmission destination. The service using the context information needs to correspond to various protocols. As an example, there is HTTP (Hyper Text Transfer Protocol) with regard to a Web service or SIP (Session Initiation Protocol) used for a call control of an IP telephone or the like. Most of those protocols are standardized. Thus, the peculiar context information cannot be always embedded. Simultaneously, even if the embedding is possible, the embedded location at a protocol unit (the offset from a packet head) is assumed to be different. For this reason, a reading logic of the LN-ID at the protocol unit is required. Thus, a method of easily writing the context information to the service message without depending on the protocol is required.

So, in transmitting and receiving the service request message to be transmitted and received between the C-ASP 109 and the I-CMGW 108, irrespectively of the type of the service protocol (the format of the service message based on the type of the protocol), a capsulated packet of the service message including the individual identification information (LN-ID) of the LN 102 as uniquely specifiable key information is prepared, and the capsulated packet is transmitted to the I-CMGW 108. The I-CMGW 108 specifies the key information (LN-ID) from the capsulated packet and consequently specifies the LN-HA to which the service message to be transferred.

When the service message transmitted from the C-ASP 109 is passed through the interface "h" shown in FIG. 43, the capsulation is carried out at the C-ASP 109 side, irrespectively of the protocol. At that time, the context information related to the LN 102 including the LN-ID is stored in the header portion of the capsulated packet (service message). Moreover, a field for storing the context information including the LN-ID is prepared in a header portion of an outer capsulated packet (service request message). Also, an authentication element in which data of the outer capsulated packet is encrypted and calculated is added to a back end of the outer capsulated packet. Thus, manipulation of the message is avoided.

FIG. 56 is an explanatory diagram of the service request message and service response message. FIG. 56A shows a table explaining the contents of the service request message and the service response message, FIG. 56B shows a configuration example (header and trailer portions) of the service request message, and FIG. 56C shows a configuration example of the service response message.

The service request message is transmitted from the C-ASP 109 towards the wide area network. An original service message is capsulated and transmitted to the I-CMGW 108 as the destination. The service request message includes, as parameters, the LN-ID, the other context information (times, places, and the like), and information indicating whether need or not to reply execution results (the process result; result information as to whether or not the service transmission to the LN-ID specified by the service request message can be executed).

The service request message has a field for storing the LN-ID information (the LN-ID and the other context information) as shown in FIG. 56B. This field is referred at the I-CMGW 108. Thereby, it is specified that the LN-HA 105 to which the capsulated service message should be transmitted. Also, the other context information included in the LN-ID information is used as the judgment information to judge whether or not the service message is transferred from the I-CMGW 108 to the LN-HA 105.

The service response message is a response message to the service request message. However, the service response message is an option that is transmitted from the I-CMGW 108 to the C-ASP 109, only if the information indicating whether need or not to reply the execution results is set to "Necessity" in the service request message. The service response message includes, as parameters, a value (OK or NG) indicating the execution result (process result) and a reason value of the case of NG.

### [Distribution Method of On-Demand CAC]

The distribution method of the on-demand CAC will be described below.

### <Schema>

In the message transfer control through the distribution of the foregoing default CAC, the message transfer control unit such as the LN-HA105 or GN-HA 104, when receiving the service message, cannot carry out the message transfer control based on the CAC, if the state related to the CAC on the transfer control unit side is as follows.
(A) Case Where CAC Is Not Prepared
   This is the case where although the CAC is prepared in the management unit of the CAC such as the LN-AAA 107 or GN-AAA 106, the CAC corresponding to the message is absent or not set in the registration region (CAC cache) of the CAC on the message control unit side, because of a transfer trouble (download failure) of the CAC, an error of the registration process of the CAC on the message control unit side, and the like.
(B) Case Where Expiration Date of CAC Comes
   As described above, the CAC can have the expiration date (valid). In the case where the CAC has the expiration date, if the configuration for carrying out the process for the coming of the expiration date is not prepared, this leads to the situation that the CAC whose expiration date comes is still stored in a CAC registration region on the message management unit side. In contrast, it is able to consider adding a conf iguration that, in the case where the management unit side monitors the expiration date to the individual CAC, when the expiration date of the CAC given to the transfer control unit side comes, the CAC related to update is distributed. However, even if such configuration is added, the situation that the CAC before the expiration date is kept is not always compensated on the transfer control unit side.
(C) Case Where CAC Is Abnormal (Case Where It Is Broken As Data)
   A case where an abnormal CAC as the data is stored in the registration region because of the transfer trouble or the error of the registration process explained in the foregoing (A) is considered. In this case, although the CAC exists, the normal message transfer allowance or rejection judgment cannot be executed.

In the case where the state of the CAC corresponds to one of the foregoing (A) to (C), in this case, if the transfer of the message is unconditionally allowed, there is a possibility that the message which is not desired by the user is provided for the GN 103. On the other hand, if the transfer of the message is not unconditionally allowed, there is a possibility that the meaning of the service provision is lost.

So, if the state of the CAC related to the service message in the message transfer control device corresponds to the foregoing (A) to (C), this is configured so as to request the provision of the CAC to the management device of the CAC such as the LN-AAA 107 or GN-AAA 106.

Specifically, a process sequence is introduced the foregoing message transfer control system. The process sequence is as follows. The message transfer control device (the LN-HA 105 or GN-HA 104) judges whether or not there is a CAC serving as a standard of the transfer allowance or rejection judgment when the message transfer control is executed. If there is not the CAC, the message transfer control device requests a management device (the LN-AAA 107 or GN-AAA 106) to provide the CAC.

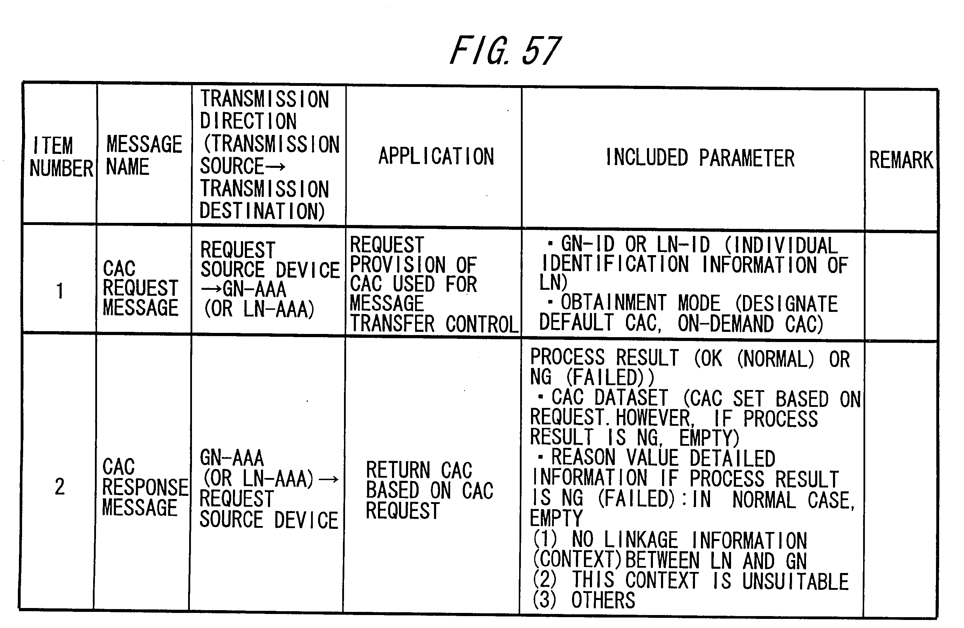

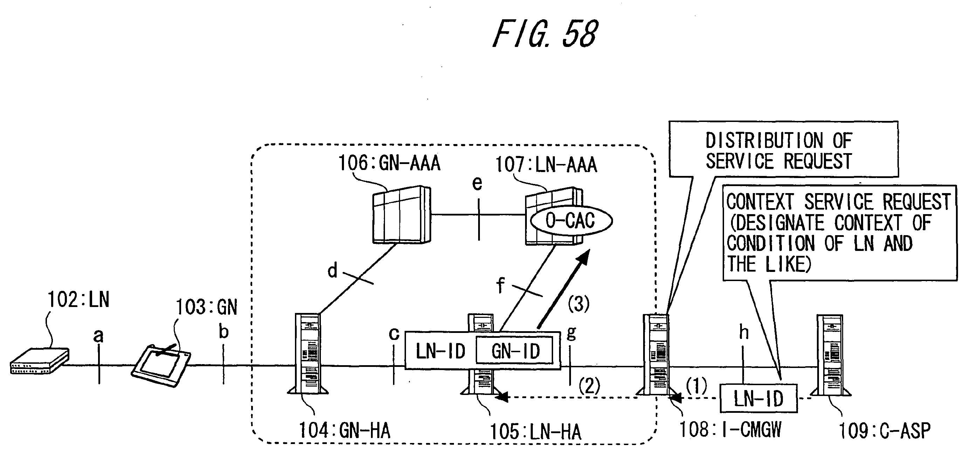

FIG. 57 is a table explaining the CAC request message and CAC response message which are used when the message transfer control device requests the CAC to the management device of the CAC. FIGS. 58 to 65 are diagrams showing an example of the process sequence related to the distribution method of the on-demand CAC.

The configuration in which the message transfer control device requests the management device of the CAC to provide the CAC can be added to the system as shown in FIGS. 45 to 55. That is, it can be configured such that the CAC is registered in the GN-HA 104 and LN-HA 105 at the time of the linkage information registration and in the case shown in the foregoing (A) to (C), the CAC is requested. In contrast, the system shown in FIGS. 58 to 65 employs the following configuration by omitting the procedure for registering the CAC in the message transfer control device in advance at the time of the linkage information registration.

### (Configuration 1: Distribution of LN Side On-Demand CAC)

The LN-HA 105 functions as the transfer control process of the message. The LN-HA 105 can request the LN-AAA 107 to provide the CAC when performing the transfer control of the message. The LN-AAA 107, when the linkage information is registered, creates an on-demand CAC (O-CAC) related to the linkage information from an LN-CAC (or corresponds to LN-CAC (D-CAC(2)) and corresponds to GN-CAC(D-CAC(1))) serving as a master, and holds (stores). The LN-AAA 107 provides a corresponding O-CAC in response to the request from the LN-HA 105. The LN-HA 105 carries out the transfer control of the message in accordance with the O-CAC.

### (Configuration 2: Distribution of User Side On-Demand CAC)

The GN-HA 104 functions as the transfer control process of the message. The GN-HA 104 can request the GN-AAA 106 to provide the CAC when performing the transfer control of the message. The GN-AAA 106, when the linkage information is registered, creates an on-demand CAC (O-CAC) related to the linkage information from a GN-CAC (or corresponds to GN-CAC (D-CAC(1)) and corresponds to LN-CAC(D-CAC(2))) serving as a master, and holds. The GN-AAA 106 provides a corresponding O-CAC in response to the request from the GN-HA 104. The GN-HA 104 carries out the transfer control of the message in accordance with the O-CAC.

Note that, the system shown in FIGS. 58 to 65 is different from the system shown in FIGS. 45 to 55 in the configurations related to the foregoing configurations 1 and 2 (the registration method of the CAC in the transfer control unit) . However, the configurations and functions related to the basic system are similar.

### <CAC Request/Response Message>

Note that, when the CAC is granted between the message transfer control device and the CAC management device, the CAC request message and the CAC response message are transmitted and received between both of them. As shown in FIG. 32, the CAC request message is transmitted from the message transfer control device to the CAC management device. The CAC request message includes at least information that function as a retrieval key of the CAC of the request target. For example, the GN-ID or LN-ID can be used as the retrieval key. Moreover, an obtainment mode can be set as a parameter for the CAC request message.

On the other hand, the CAC response message is transmitted from the CAC management device to the message transfer control device. The CAC response message includes at least a process result for the request. If the process result is normal (OK), the CAC response message includes the CAC dataset based on the request. In contrast, if the process result is failed (NG), its reason value is included.

### <Operation Example Based on Configuration 1>

FIG. 58 to FIG. 61 show examples of the process sequences of the distribution procedure of the O-CAC and message transfer control based on the foregoing configuration 1.

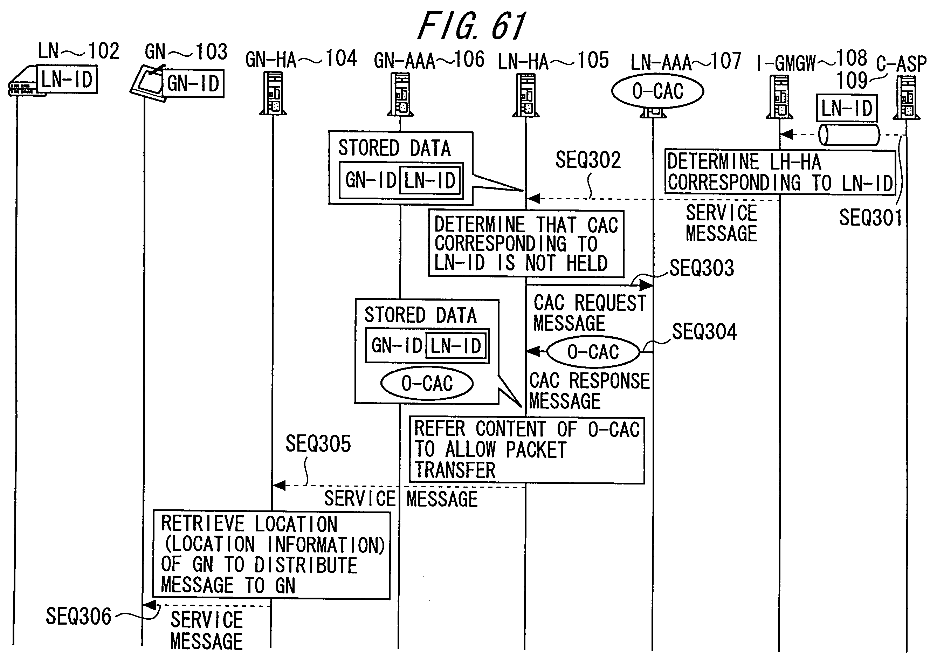

As shown in FIG. 58, when the service request message including the service message and the context information related to the LN (at least LN-ID) is transmitted from the C-ASP 109 to the I-CMGW 108 (FIG. 58: (1), FIG. 61; SEQ301), the I-CMGW 108 transfers the service message to the LN-HA 105 corresponding to a transfer destination, in accordance with the context information including the LN-ID (FIG. 58; (2), FIG. 61; SEQ302).

The LN-HA 105, when receiving the service message, reads the corresponding linkage information from the LN-ID included in this service message, and judges whether or not there is the CAC stored in association with this linkage information. At this time, if there is the CAC, the LN-HA 105 carries out the transfer allowance or rejection judgment of the service message in accordance with the CAC. If the transfer condition described in the CAC is satisfied, the message is transferred to the GN-HA 104. If not, the transfer of the message is stopped (for example, discarded). In contrast, the LN-HA 105, if there is no CAC corresponding to the LN-ID, creates the CAC request message including the LN-ID and transmits to the LN-AAA 107 (FIG. 58; (3), FIG. 61; SEQ303).

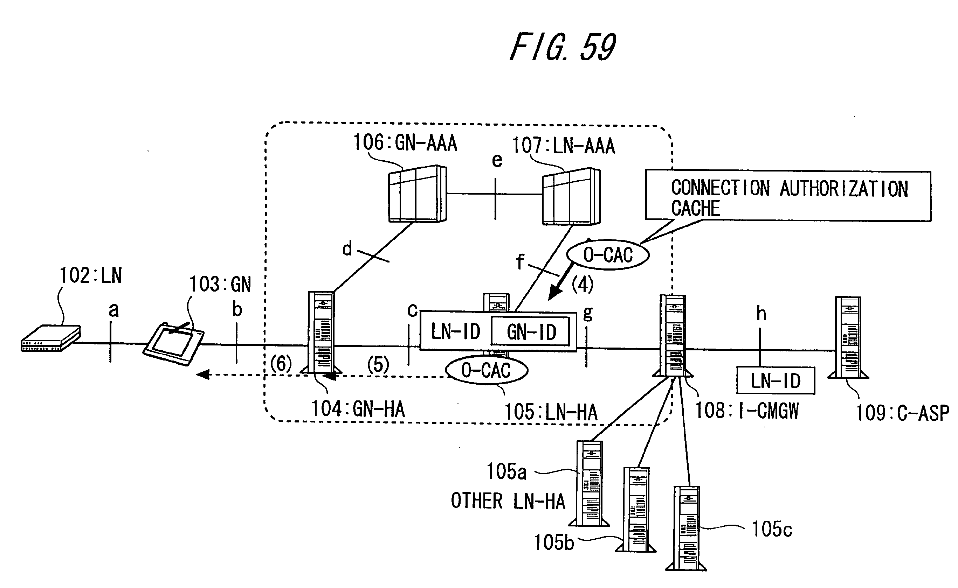

The LN-AAA 107, when receiving the CAC request message, defines the LN-ID included in the message as a key, and retrieves the O-CAC to be provided for the LN-HA 105. Then, the LN-AAA 107 creates the CAC response message having content based on the retrieval result and returns to the LN-HA 105 (FIG. 59; (4), FIG. 61; SEQ304). At this time, if the process result is OK (if the corresponding O-CAC is found out), the O-CAC based on the request is included in the CAC response message.

Note that, the LN-AAA 107 can be configured so as to hold the provision condition of the O-CAC based on the state (context) of the LN specified by the LN-ID and further judge whether or not the retrieved O-CAC should be provided.

The LN-HA 105, when receiving the CAC response message, relates the O-CAC included in to the message with the linkage information and registers them, and judges whether or not the service message should be transferred in accordance with this O-CAC. Then, the LN-HA 105, if the service message does not satisfy the transfer condition based on the O-CAC, stops transferring the message, and if the transfer condition is satisfied, allows transferring the message (packet). Consequently, the service message is transmitted from the LN-HA 105 to the GN-HA 104 (specified by the linkage information) (FIG. 59; (5), FIG. 61; SEQ305).

In this case, the GN-HA 104 retrieves a location (address) of the GN 103 based on the linkage information without carrying out the message transfer control, and transfers the service message to the GN 103 (FIG. 59; (6), FIG. 61; SEQ306).

Then, in the GN 103, a service based on the service message is carried out (for example, information display).

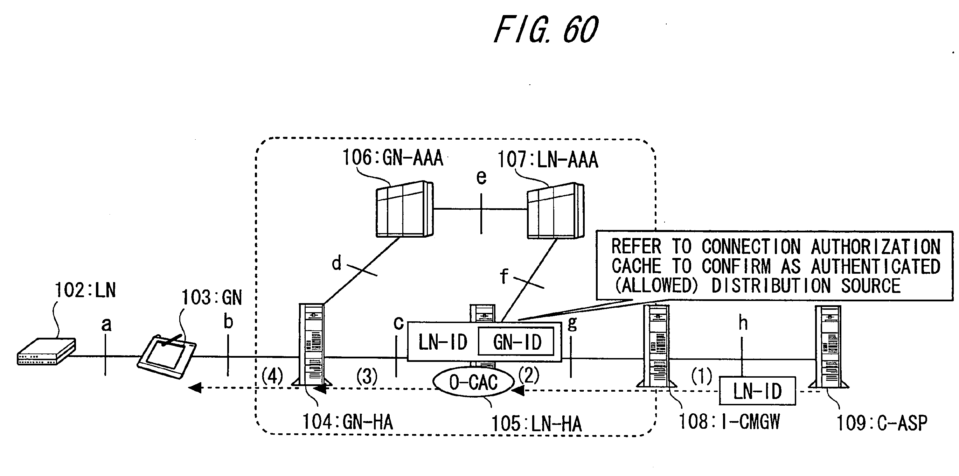

FIG. 60 shows a manner of the process sequence of the message transfer control that is carried out after the process sequences shown in FIGS. 58, 59, and 61. The O-CAC which is downloaded and stored by the LN-HA 105 in the procedures shown in FIGS. 59 and 61 is used for judgment control of the message until the expiration date set for this O-CAC comes.

For this reason, in FIG. 60, unlike FIG. 59, the request and obtainment (download and storage) of the O-CAC to the LN-AAA 107 of the LN-HA 105 are not executed, and the transfer control of the message is executed in accordance with the O-CAC before the expiration date kept in the LN-HA 105.

However, the O-CAC can be configured so as to be downloaded for each reception of the message.

### <Operation Example Based on Configuration 2>

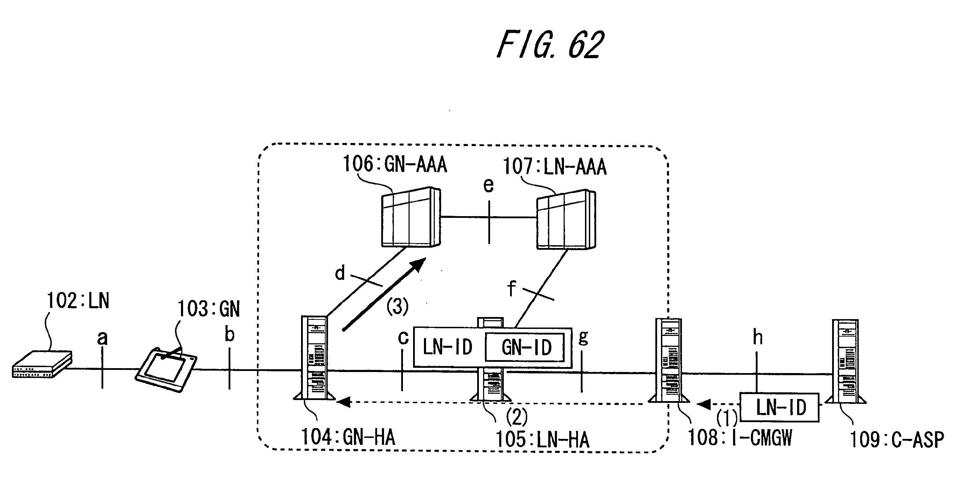

FIG. 62 to FIG. 65 show examples of the process sequences of the distribution procedure of O-CAC and message transfer control based on the foregoing configuration 2.

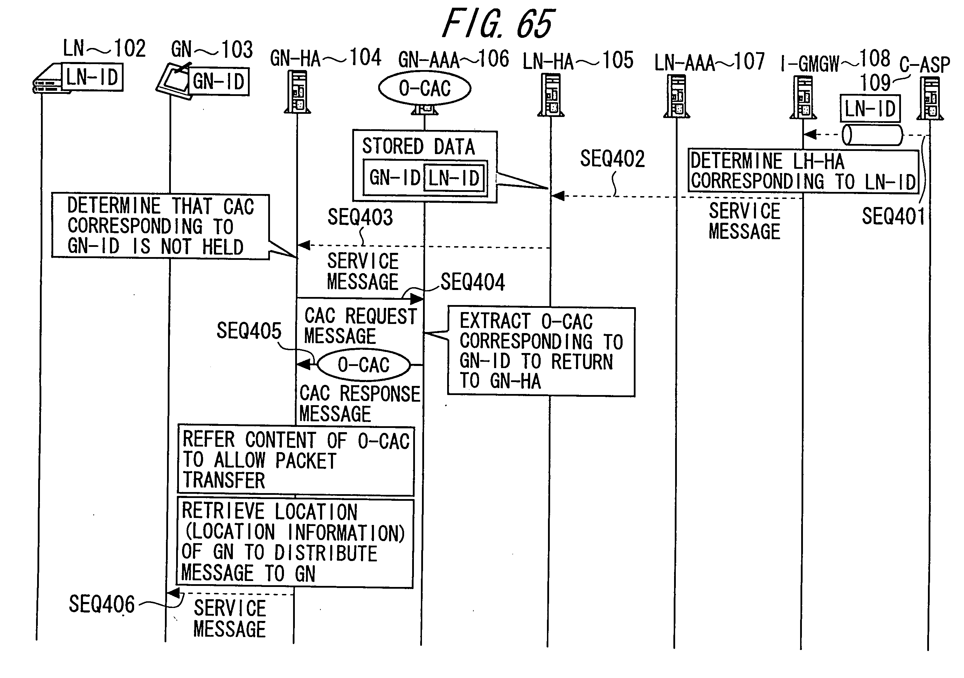

As shown in FIG. 62, when the service request message including the service message and the context information related to the LN (at least LN-ID) is transmitted from the C-ASP 109 to the I-CMGW 108 (FIG. 62: (1), FIG. 65; SEQ401), the I-CMGW 108 transfers the service message to the LN-HA 105 corresponding to a transfer destination, in accordance with the context information including the LN-ID (FIG. 62; SEQ402).

The LN-HA 105, when receiving the service message, reads the corresponding linkage information from the LN-ID included in this service message, and transfers the service message to the GN-HA 104 that manages the GN 103 having the GN-ID included in this linkage information (FIG. 62; (2), FIG. 65; SEQ403).

The GN-HA 104, when receiving the service message, reads the corresponding linkage information from the LN-ID included in this service message and judges whether or not there is the CAC stored (registered) in association with this linkage information.

At this time, if there is the CAC, the GN-HA 104 carries out the transfer allowance or rejection judgment of the service message in accordance with the CAC, and if the transfer condition described in the CAC is satisfied, transfers the message to the corresponding GN 103, and if not, stops (for example, discards) transferring the message.

In contrast, the GN-HA 104, if there is no CAC corresponding to the GN-ID, creates the CAC request message including that GN-ID, and transmits to the GN-AAA 106 (FIG. 62; (3), FIG. 65; SEQ404).

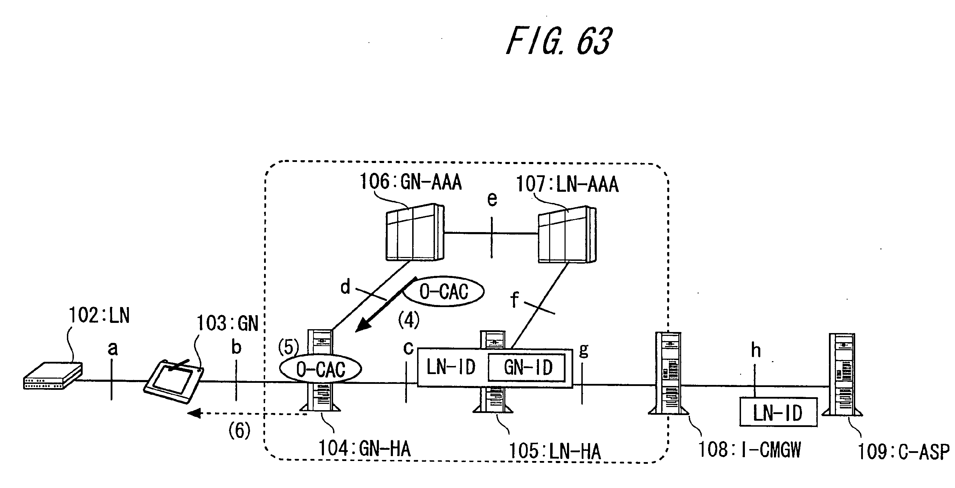

The GN-AAA 106, when receiving the CAC request message, retrieves the O-CAC to be provided for the GN-HA 104, in accordance with the GN-ID included in the CAC request message. Then, the GN-AAA 106 creates the CAC response message having content based on the retrieval result and returns to the GN-HA 104 (FIG. 63; (4), FIG. 65; SEQ405). At this time, if the process result is OK, the CAC response message includes the O-CAC based on the request.

Note that, the GN-AAA 106 can be configured so as to set the provision condition of the O-CAC based on the state (context) of the GN specified by the GN-ID and further judge whether or not the retrieved O-CAC should be provided.

The GN-HA 104 relates the O-CAC included in the CAC response message with the linkage information and registers them, and judges whether or not the servicemessage shouldbe transferred in accordance with this O-CAC. Then, the GN-HA 104, if the service message does not satisfy the transfer condition based on the O-CAC, stops transferring the message, and if the transfer condition is satisfied, allows transferring the message (packet). Then, the GN-HA 104 retrieves a location (address) of the GN 103 in accordance with the GN-ID included in the linkage information and transfers the service message to the GN 103 (FIG. 63; (6), FIG. 65; SEQ406).

Then, in the GN 103, a service based on the service message is carried out (for example, displaying information).

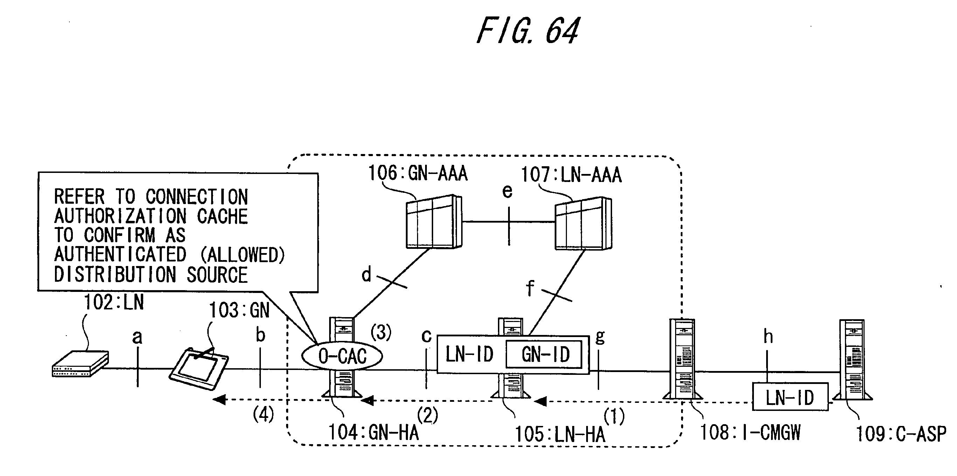

FIG. 64 shows a manner of the process sequence of the message transfer control that is carried out after the process sequences shown in FIGS. 62, 63, and 65. The O-CAC stored in the GN-HA 104 by the procedures shown in FIG. 62 and FIG. 65 is used for the judgment control of the message until the expiration date set for this O-CAC comes.

For this reason, in FIG. 64, unlike FIG. 63, the request and obtainment (download and storage) of the O-CAC to the GN-AAA 106 of the GN-HA 104 are not executed, and the transfer control of the message is executed in accordance with the O-CAC before the expiration date kept in the GN-HA 105.

Note that, in the foregoing first and second configurations, only one of the LN-HA 105 and the GN-HA 104 carries out the message transfer control. Instead of this configuration, each of the LN-HA 105 and the GN-HA 104 can be configured so as to download the O-CAC and carry out the message transfer control (transfer allowance or rejection judgment).

### [I-CMGW]

The I-CMGW 108 will be described below. In the foregoing message transfer control system, the service message transmitted by the ASP from the C-ASP 109 does not specify the user of the transmission destination. The service message can be transmitted based on the context of the user that becomes the transmission target. The context of the user includes an attribute related to the GN 103 and/or the identification information of the LN 102 which is possessed by the user or located in vicinity thereof and in which the linkage information with the user terminal (GN 103) is registered on the wide area network. The service message that the context is defined as a key can be transferred. For this reason, when the service message "Based on Context" arrives at the wide area network, it is required that the LN and LNP corresponding to the context designated in the service message are specified, and the service message is transferred to the LN-HA accommodating the LN.

The I-CMGW 108, in order to receive the service message from the C-ASP 109 and send the service message to the proper LN-HA, specifies the LN-HA that manages each LN that belongs to the LN-HA itself, and transfers the message to the specified LN-HA. This enables the plurality of LNPs to be accommodated, and the message from the ASP can be efficiently distributed.

### [O-CMGW]

The O-CMGW will be described below. FIG. 66 is a diagram showing an example of the message transfer control system to which the O-CMGW is applied. In FIG. 66, the O-CMGW 110 is arranged between the GN 103 and the GN-HA 104, in a portion corresponding to an outlet (egress) of the wide area network accommodating the GN-HA 104.

The O-CMGW 110 is the gateway device for controlling the transfer of the service message that goes from the wide area network towards the user terminal (GN 103). That is, the O-CMGW 110 is configured as a device for carrying out the message transfer control, instead of a mechanism that the GN-HA 104 carries out the message transfer control based on the context information related to the GN 103. In other words, the O-CMGW 110 has a function of shutting down, for example, a message that is not desired by the user, as necessary, in accordance with the context of the user (the context information related to the GN 103), although the message passes through the LN-HA 105.

The O-CMGW 110 has a function of carrying out the process similar to the message transfer control based on the reference of the CAC which the GN-HA 104 carries out when receiving the service message, as described above. The O-CMGW 110 is realized, for example, by adding the foregoing message transfer control mechanism to an edge router (edge node) of the wide area network.

In order that the O-CMGW 110 may carry out the message transfer control, the CAC is required. The O-CMGW 110 is configured, for example, so as to receive, from the GN-HA 104, the CAC based on the linkage information which the GN-HA 104 obtains through the distribution methods (the first to fifth distribution methods) of the D-CAC as described above.

If the O-CMGW 110 is applied, the O-CMGW 110 whose number is greater than the GN-HA 104 is considered to be arranged depending on the movement range of the GN 103, the number of the users of the GN 103, or the like. Thus, the arrangement number of the devices for carrying out the message transfer control is greater than that in the case where the GN-HA carries out the message transfer control. However, a message process load on each device can be reduced.

### [Configuration of GN-HA]

The configuration of the GN-HA 104 configuring the foregoing message transfer control system will be described below. The GN-HA 104 is realized by adding a CAC control/message transfer control function (GNMH (Global Node Message Handler)) to the GN-HA applied to the basic system (FIG. 4).

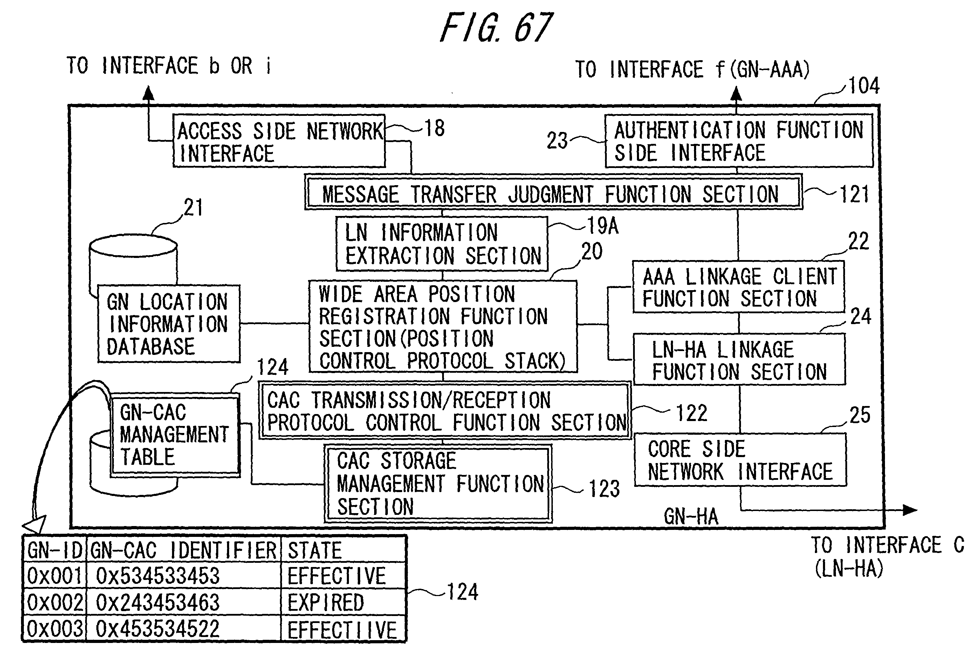

FIG. 67 is a block diagram showing the configuration example of the GN-HA 104. As shown in FIG. 67, the GN-HA 104 is configured by adding a message transfer judgment function section 121 (second transfer control means), a CAC transmission/reception protocol control function section 122 (second transfer control information request means), a CAC storage management function section 123 (second information management means), and a GN-CAC management table 124 (second transfer control information storage section), which constitute the GNMH, to the GN-HA 4 (refer to FIG. 4) in the basic system.

Also, the GN-HA 104 includes a core side network interface 25 serving as a reception section of a message, a GN location information database 21 as a location registration storage section; an access side network interface 18 as a transmission section of the message, and a wide area location registration function section 20 as second authentication request means.

The message transfer judgment function section 121 is installed so as to be locationed between the access side network interface 18 and an LN information extraction section 19A corresponding to the GN-ID extraction unit 19 and also locationed between the authentication function side interface 23 and the AAA linkage client function section 22.

Also, the CAC transmission/reception protocol control function section 122 is connected to the wide area location registration function section 20, the CAC storage management function section 123 is connected to the CAC transmission/reception protocol control function section 122, and the GN-CAC management table 124 is connected to the CAC storage management function section 123.

The CAC transmission/reception protocol control function section 122 controls a communication protocol used for obtaining the CAC from the AAA device. The CAC storage management function section 123 carries out a writing/reading process of a record related to the CAC to/from the GN-CAC management table 124. The GN-CAC management table 124 stores records, for example, including the GN-ID, GN-CAC identifier, and state (before expiration date/expiration date coming) as elements. The GN-CAC identifier is a code indicating the message transfer condition described in the GN-CAC.

The message transfer judgment function section 121 performs the transfer allowance or rejection, on the service message received by the core side network interface 25, in accordance with the information (GN-CAC) stored in the GN-CAC management table 124.

Note that, if the O-CMGW is applied, the foregoing GNMH is installed in the edge router.

The GNMH (the CAC transmission/reception protocol control function section 122, the CAC storage management function section 123, the message transfer judgment function section 121, and the like) installed in the GN-HA 104 shown in FIG. 67 is realized by causing a processor (not shown) such as a CPU possessed by a computer used as the GN-HA 104 to execute a program. The GN-CAC management table 124 is created on a non-volatile recording medium such as a hard disk possessed by the computer. However, the GNMH can be configured so as to be attained by a dedicated hardware logic circuit.

### [Configuration of LN-HA]

The configuration of the LN-HA 105 configuring the foregoing message transfer control system will be described below. The LN-HA 105 is realized by adding a CAC control/message transfer control function (LNMH (Local Node Message Handler)) to the LN-HA applied to the basic system (FIG. 5).

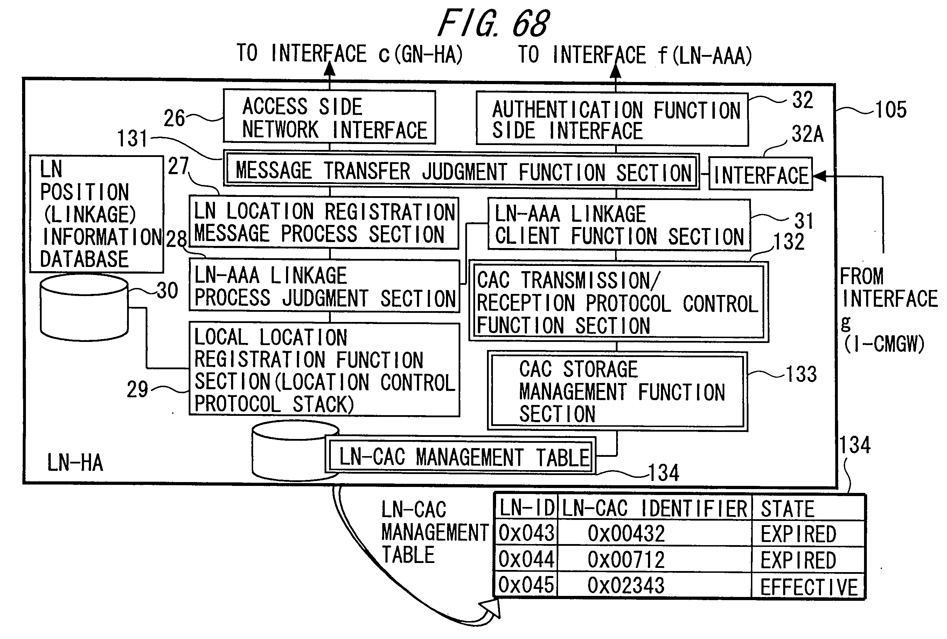

FIG. 68 is a block diagram showing a configuration example of the LN-HA 105. As shown in FIG. 68, the LN-HA 105 is configured by adding a message transfer judgment function section 131 (transfer control means), CAC transmission/reception protocol control function section 132 (transfer information request means), CAC storage management function section 133 (information management means), and LN-CAC management table 134 (transfer control information storage section), which constitute a LNMH, to the LN-HA 5 (refer to FIG. 5) in the basic system.

Also, the LN-HA 105 includes the LN location (linkage) information database 30 as a linkage information storage section, the network interface 32A as a reception section of a message, the access side network interface 26 as a transmission section of the message, and the local location registration function section 29 as authentication request means.

A message transfer judgment function section 131 is installed so as to be locationed between the access side network interface 26 and the LN location registration message process section 27 and locationed between the authentication function side interface 32 and the LN-AAA linkage client function section 31.

Also, the CAC transmission/reception protocol control function section 132 is connected to the LN-AAA linkage client function section 31, the CAC storage management function section 133 is connected to the CAC transmission/reception protocol control function section 132, and the LN-CAC management table 134 is connected to the CAC storage management function section 133.

The CAC transmission/reception protocol control function section 132 controls a communication protocol used when the CAC is obtained from the AAA device (LN-AAA 107). The CAC storage management function section 123 carries out the writing/readprocess of a record related to the CAC to/from the. LN-CAC management table 134. The LN-CAC management table 134 stores the record, for example, including the LN-ID, the LN-CAC identifier, and the state (before expiration date/expiration date coming) as elements. The LN-CAC identifier is a code indicating the message transfer condition described in the LN-CAC.

The message transfer judgment function section 131 performs the transfer allowance or rejection, on the service message received by the interface 32A, in accordance with the information (LN-CAC) stored in the LN-CAC management table 134. However, the LN-CAC management table 134 can store the D-CAC(2), the synthesis CAC, and the O-CAC, which are based on the distribution method of the CAC, as the CAC.

The LNMH (the CAC transmission/reception protocol control function section 132, the CAC storage management function section 133, the message transfer judgment function section 131, and the like) installed in the LN-HA 105 shown in FIG. 68 is attained by causing the processor (not shown) such as the CPU possessed by the computer used as the LN-HA 105 to execute the program. The LN-CAC management table 134 is created on the non-volatile recording medium such as the hard disk possessed by the computer. However, the LNMH can be configured so as to be attained by the dedicated hardware logic circuit.

### [Configuration of GN-AAA]

The configuration of the GN-AAA 106 constituting the foregoing message transfer control system will be described below. The GN-AAA 106 is realized by adding configurations related to the distribution of the CAC to the GN-AAA applied to the basic system.

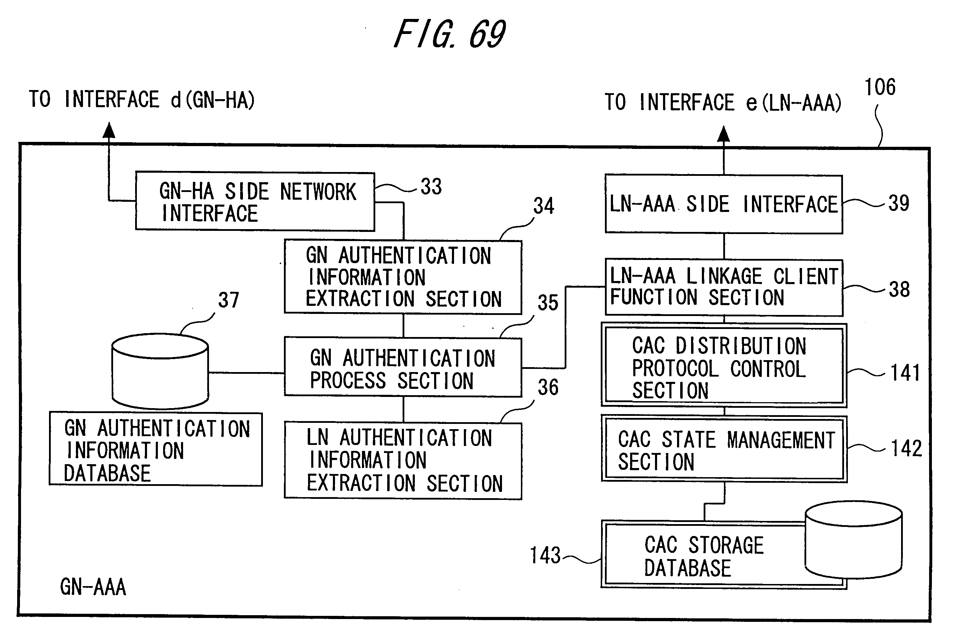

FIG. 69 is a block diagram showing a configuration example of the GN-AAA 106. As shown in FIG. 69, the GN-AAA 106 is configured by adding a CAC distribution protocol control section 141, a CAC storage management function section 142, and a CAC storage database 143, to the GN-AAA 106 (refer to FIG. 6) in the basic system.

The CAC storage database 143 stores the O-CAC and D-CAC(1) related to the individual GN 103 (peculiar for each GN 103) as the master information. The CAC state management section 142 manages the state of the CAC with regard to each GN 103 stored in the CAC storage database 143. For example, the CAC whose expiration date comes is removed. The CAC distribution protocol control section 141 reads the corresponding CAC (D-CAC (1) and O-CAC) from the CAC storage database 14.3, in response to the GN authentication request or CAC request from the GN-HA 104, and transmits to the request source.

The CAC distribution protocol control section 141 and CAC state management section 142, which constitute the GN-AAA 106 shown in FIG. 69, are realized by causing the processor (not shown) such as the CPU possessed by the computer used as the GN-AAA 106 to execute the program. The CAC storage database 143 is created on the non-volatile recording medium such as the hard disk possessed by the computer. However, the CAC distribution protocol control section 141 and the CAC state management section 142 can be configured so as to be attained by the dedicated hardware logic circuit.

### [Configuration of LN-AAA]

The configuration of the LN-AAA 107 constituting the foregoing message transfer control system will be described below. The LN-AAA 107 is realized by adding the configuration related to the distribution of the CAC to the LN-AAA (FIG. 7) applied to the basic system.

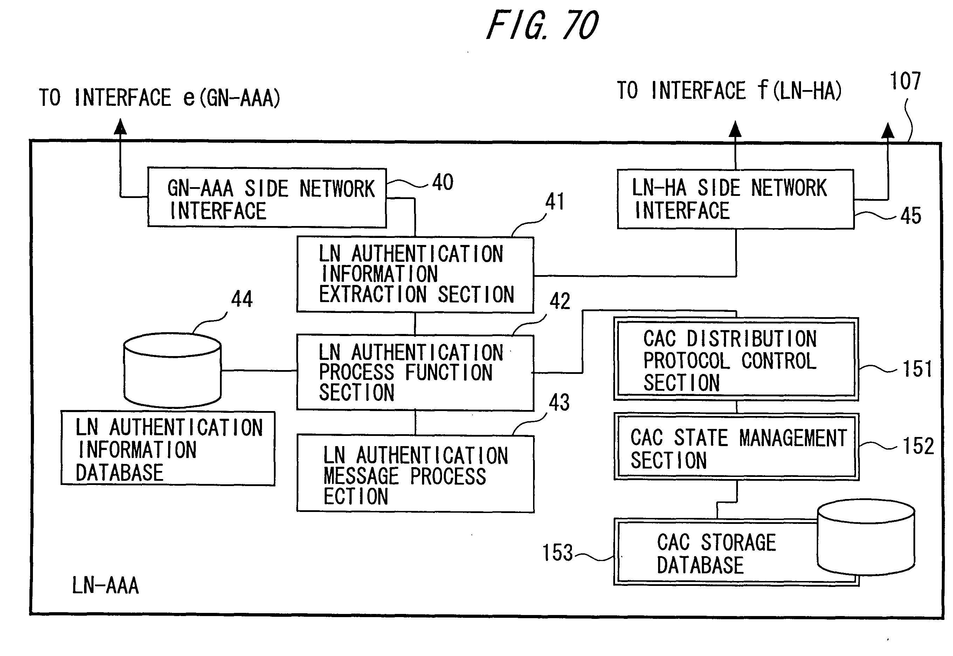

FIG. 70 is a block diagram showing a configuration example of the LN-AAA 107. As shown in FIG. 70, the LN-AAA 107 is configured by adding a CAC distribution protocol control section 151, a CAC storage management function section 152, and a CAC storage database 153, to the LN-AAA 107 (refer to FIG. 7) in the basic system.

The CAC storage database 153 stores the O-CAC and D-CAC(2) related to the individual LN 102 (peculiar for each LN) as the master information. The CAC state management section 152 manages the state of the CAC with regard to each LN 102 stored in the CAC storage database 143. For example, the CAC whose expiration date comes is removed. The CAC distribution protocol control section 151 reads the corresponding CAC (D-CAC(2) and O-CAC) from the CAC storage database 153, in response to the LN authentication request or CAC request from the LN-HA 105, and transmits to the request source.

The CAC is the contract condition of the individual contractor (user) and the appliance (LN), and the privacy and the like are emphasized. For this reason, they need to be managed under the safety equal to the contract condition. According to the foregoing configuration, the CAC is managed by the GN-AAA and LN-AAA in which the safety is reserved. Then, they are distributed at the time of the location registration of the LN or GN, or by the individual CAC request.

The CAC distribution protocol control section 151 and CAC state management section 152, which constitute the LN-AAA 107 shown in FIG. 70, are realized by causing the processor (not shown) such as the CPU possessed by the computer used as the LN-AAA 107 to execute the program. The CAC storage database 153 is created on the non-volatile recording medium such as the hard disk possessed by the computer. However, the CAC distribution protocol control section 151 and the CAC state management section 152 can be configured so as to be attained by the dedicated hardware logic circuit.

### [Process Example of GN-HA/LN-HA]

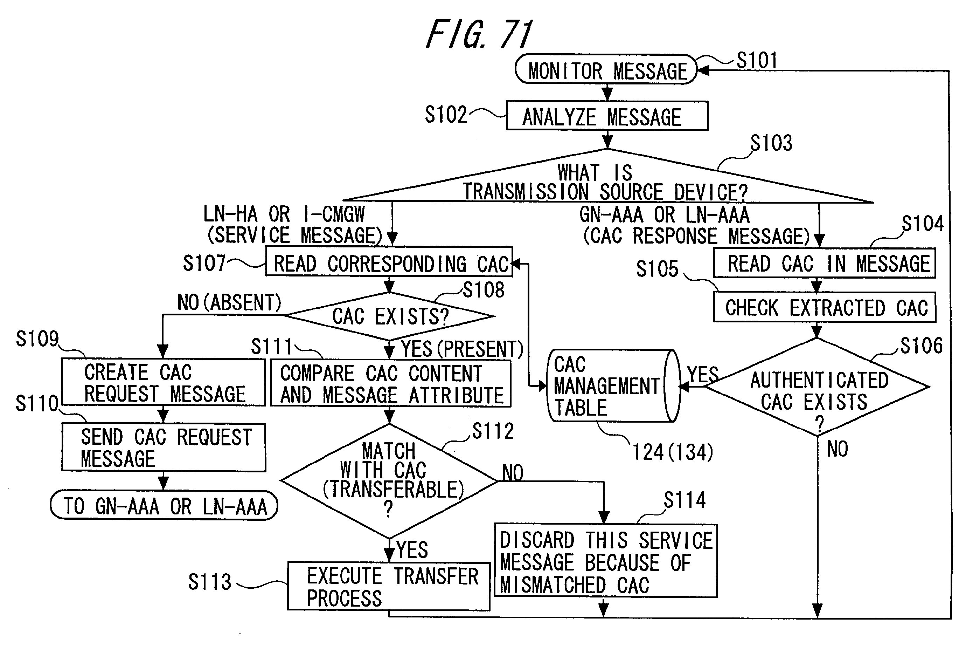

FIG. 71 is a flowchart showing an example of the process executed by the LN-HA 105 or GN-HA 104. The flowchart shown in FIG. 71 shows the process of the GNMH or LNMH possessed by the GN-HA 104 or LN-HA 105.

In FIG. 71, in the GN-HA 104 (LN-HA 105), the reception of the message is always monitored (Step S101).

When a message is received, the content of the message is analyzed (Step S102), and what is a transmission source device of the message is judged (Step S103) . At this time, if the transmission source device of the message is judged to be the GN-AAA 106 (or LN-AAA 107), the message is treated as the CAC response message.

In this case, the CAC included in the message is read (Step S104), the CAC is checked (Step S105), and whether or not there is the legal CAC is judged (Step S106). At this time, if there is the legal CAC (Step S106; Y), the record related to the CAC is stored in the CAC management table (GN-CAC management table 124 or LN-CAC management table 134). In contrast, if there is no legal CAC (Step S106; N), the CAC is not registered. The process returns to the step S101.

Note that, in the process at the step S103, if the transmission source device of the message is the LN-HA (or I-CMGW), the message is treated as the service message.

In this case, the read process of the CAC corresponding to the service message from the CAC storage table is carried out (Step S107), and it is judged whether or not there is the corresponding CAC (Step S108).

At this time, if there is no corresponding CAC (Step S108; N), the CAC request message is prepared (Step S109) and transmitted to the corresponding AAA device (GN-AAA 106 or LN-AAA 107) (Step S110).

In contrast, if there is the corresponding CAC (Step S108; Y), the content of the CAC and the attribute of the message are compared (Step S111), and whether or not the attribute of the message (the context information specified by the message) agrees with the CAC, namely, whether or not the transfer of the message is allowed is judged (Step S112).

At this time, if the message attribute coincides with the CAC (S112; Y), the transfer process of the message is executed (Step S113). If not (S112; N), because of disagreement with the CAC, the service message is discarded (Step S114).

### [Process Example of GN-AAA/LN-AAA]

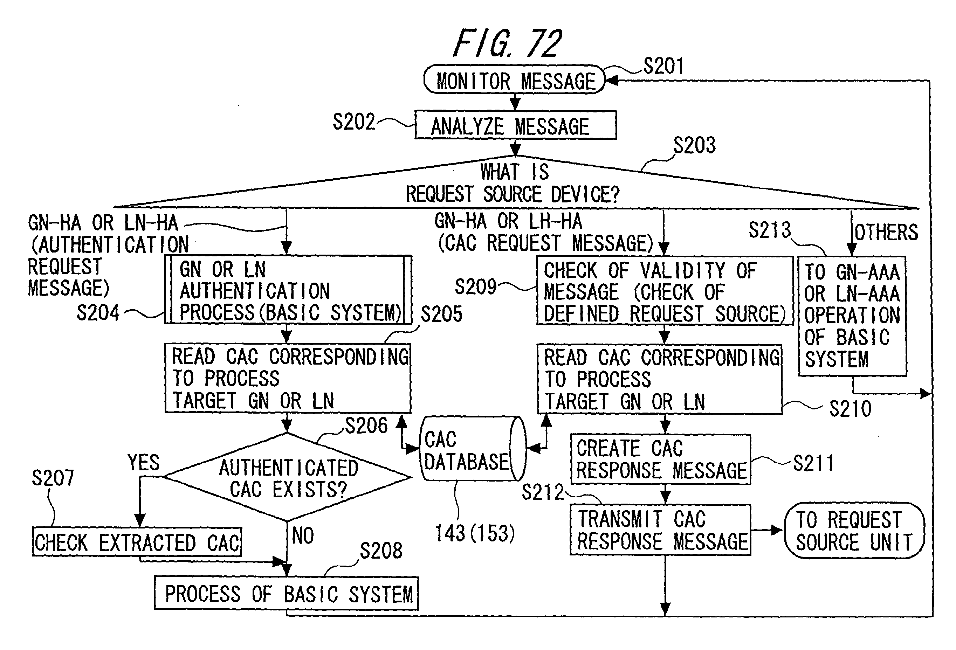

FIG. 72 is a flowchart showing an example of the process executed by the GN-AAA 106 or LN-AAA 107.

In FIG. 72, in the GN-AAA 106 (LN-AAA 107), the reception of the message is always monitored (Step S201).

If the message is received, the content of the message is analyzed (Step S202), and what is the request source device of the message (the type of the message) is judged (Step S203).

At this time, if the message is judged to be the authentication request message (or linkage information registration request message) from the GN-HA (or LN-HA), the authentication process of the GN or LN (the authentication process in the basic system) is carried out (Step S204).

In succession, the read process from the CAC storage database of the CAC corresponding to the GN (or LN) of the process target is carried out (Step S205), and whether or not the legal CAC exists is judged (Step S206).

At this time, if it is judged that the legal CAC exists (Step S206; Y), the read (extracted) CAC is checked (Step S207). After that, the process similar to the basic system is carried out (Step S208). Consequently, the CAC based on the GN-ID (or LN-ID) included in the linkage information is provided for the GN-HA 104 (or LN-HA 105).

In contrast, if it is judged that the legal CAC does not exist, at the step S206 (Step S206; N), the process proceeds to a step S208. In this case, the CAC is not provided.

At the step S203, if the message is judged to be the CAC request message from the GN-HA (or LN-HA), the check of the validity of the message (the check of the defined request source) is carried out (Step S209).

In succession, the read process from the CAC storage database of the CAC corresponding to the GN (or LN) of the process target is carried out (Step S210). The CAC response message is configured (created) (Step S211) and transmitted to the request source device (Step S212). Consequently, if the corresponding CAC is read at the step S210, the corresponding CAC is provided for the request source device.

Note that, at the step S203, if the message is judged not to be the foregoing request message, the operation as the other GN-AAA or LN-AAA in the basic system is carried out (Step S213).

### INDUSTRIAL APPLICABILITY

The linkage information management system according to the present invention can be applied to the industry, which provides the service using the appliance to the user, for example, provides a new function for the end unit of the user, and provides the service such as the mail distribution based on the appliance.

The message transfer control system according to the present invention can be widely used in the technical field to provide the users having contracts of service provision on a commercial network such as an IP network with the service [Based on Context] for controlling the service in accordance with the various situations (contexts) of the users.

In particular, if the service based on the context is carried out as a commercial service, when the services of the various service providers are provided for the user having the various tastes, they can be applied to the business type in which the intention to the service on the user side is considered.

## Claims

1. A linkage information management system, comprising:
a first device identified with a first identifier, the first device having storage means for storing the first identifier;
a second device uniquely identified with a second identifier, the second device including read means for reading the first identifier from the first device, storage means for storing the second identifier, creatingmeans for creating a linkage information message that includes the first identifier read by the read means and the second identifier stored in the storage means, and transmission means for transmitting the linkage information message created by the creating means to another device; and
a linkage information management server including reception means for receiving the transmitted linkage information message, linkage information storage means for storing linkage information in which the first identifier and the second identifier are associated, and registration means for registering the first identifier and the second identifier, which are included in the linkage information message received by the reception means, as the linkage information, in the linkage information storage means.

2. The linkage information management system according to claim 1, wherein the first device and second device each have radio communication means, and the read means of the second device reads the first identifier through the radio communication means.

3. The linkage information management system according to claim 1 or 2, wherein the linkage information management server further includes completion report means for reporting the second device of a completion of the registration to the second device, when the linkage information is registered in the linkage information storage means, and
the second device further includes usage limit means for enabling a usage of the first device, when the completion report is received.

4. The linkage information management system according to any one of claims 1 to 3, wherein the second device has a first address, which is an invariable address assigned to the second device itself, and a second address, which is a variable address,
the transmission means of the second device further transmits a location registration message, which includes the second address, the first address, and a second identifier of the second device itself, to the linkage information management server, and
the linkage information management server further includes location information storage means for storing the first address, the second address, and the second identifier, which are included in the received location registration message after associating with one another.

5. The linkage information management system according to any one of claims 1 to 4, further comprising a first authentication device for executing an authentication process on the first device,
wherein the linkage information management server includes authentication request means for requesting the authentication process on the first device of the first authentication device, and
registration limit means for limiting a registration of the linkage information with the registration means in response to a result of the authentication process with the first authentication device.

6. The linkage information management system according to any one of claims 1 to 5, further comprising a second authentication device for executing an authentication process on the second device,
wherein the linkage information management server includes authentication request means for requesting the authentication process on the second device of the second authentication device; and registration limit means for limiting a registration of the linkage information with the registration means in response to a result of the authentication process with the second authentication device.

7. The linkage information management system according to any one of claims 1 to 7, further comprising a device information management server including: device information storage means for storing device information with respect to the first device and the first identifier after associating with each other; retrieval means for retrieving the device information stored in association with the first identifier included in a received inquiry message; and response means for transferring the device information retrieved by the retrieval means as a response to the inquiry message,
wherein the linkage information management server further includes inquiry means for transmitting the inquiry message including a specific first identifier to the device information management server.

8. The linkage information management system according to claim 4, wherein the linkage information management server includes identifier retrieval means for retrieving, when data with the first identifier is received, the second identifier stored in the linkage information storage means in association with the first identifier, address retrieval means for retrieving the second address stored in the location information storage means in association with the second identifier retrieved by the retrieval means; and transfer means for transferring at least a part of the data to the second address retrieved by the address retrieval means.

9. A terminal device, comprising:
read means for reading a first identifier from a first device;
storage means for storing a second identifier for uniquely identifying the terminal device itself;
creating means for creating a linkage information message, which includes the first identifier read by the read means and the second identifier stored in the storage means; and
transmission means for transmitting the linkage information message created by the creating means to another device.

10. A linkage information management server, comprising:
linkage information storage means for storing linkage information in which a first identifier for identifying a first device and a second identifier for uniquely identifying a second device are associated;
registrationmeans for registering, as the linkage information, the received first identifier and second identifier in the linkage information storage means; and
location information storage means for storing a first address, which is an invariable address assigned to the second device, a second address, which is a variable address assigned to the second device, and the second identifier after associating with one another.

11. The linkage information management server according to claim 10, further comprising:
identifier retrieval means for retrieving, when data with the first identifier is received, the second identifier stored in the linkage information storage means in association with the first identifier;
address retrieval means for retrieving the second address stored in the location information storage means in association with the second identifier retrieved by the retrieval means; and
transfer means for transferring at least a part of the data to the second address retrieved by the address retrieval means.

12. A message transfer control system, comprising:
linkage information storage means for storing linkage information that indicates a relation between a communication terminal of a user and a distribution device distributed to a user side;
transfer control information storage means for storing transfer control information that defines a transfer condition of a message to be transmitted to the communication terminal associated with a specific distribution device based on the linkage information; and
transfer control means for controlling a transfer of the message to the communication terminal, in accordance with the transfer control information.

13. The message transfer control system according to claim 12,
wherein the transfer control information includes first transfer condition information that defines a transfer condition of the message based on context information related to the distribution device, and second transfer condition information that defines the transfer condition of the message based on the context information related to the communication terminal, and
the transfer control means allows the transfer of the message, when the transfer condition of the message defined by the first and second transfer condition information is satisfied.

14. The message transfer control system according to claim 13,
wherein the transfer control means includes first judging means for judging whether to allow or reject a transfer of the message in accordance with at least the first transfer condition information; and second judging means for judging whether to allow or reject a transfer of the message in accordance with at least the second transfer condition information.

15. A message transfer control system, comprising a location registration device of a communication terminal of a user, and a location registration device of a distribution device distributed on a user side, which are respectively connected to a wide area network where the communication terminal of the user is connected,
wherein the location registration device of the distribution device includes
a linkage information storage section for storing, as linkage information, information indicating a relation between the communication terminal and the distribution device, which is transmitted from the communication terminal,
a transfer control information storage section for storing transfer control information that defines a transfer condition to a message to be transmitted to the communication terminal related to a specific distribution device,
a reception section for receiving a message in which the distribution device is designated,
transfer control means for judging, when the communication terminal related to the distribution device designated by the message is identified by the linkage information stored in the linkage information storage section is specified, whether to allow or reject a transfer of the message to the communication terminal, in accordance with the transfer control information stored in the transfer control information storage section, and
a transmission section for transmitting the message whose the transfer is allowed by the transfer control section, and
wherein the location registration device of the communication terminal includes
a reception section for receiving the message from the location registration device of the distribution device,
a location information storage section for storing location information of the communication terminal, and
a transmission section for transmitting the message to the communication terminal, in accordance with the location information of the communication terminal.

16. The message transfer control system according to claim 15,
wherein the location registration device of the communication terminal further includes
a second transfer control information storage section for storing transfer control information that defines the transfer condition to the message to be transmitted to the communication terminal related to the specific distribution device, and
second transfer control means for judging, when the message from the location registration device of the distribution device is received, whether to allow or reject the transfer of the message to the communication terminal, in accordance with the transfer control information stored in the second transfer information storage section, and
wherein the transmission section transmits the message whose the transfer is allowed by the second transfer control section to the communication terminal.

17. The message transfer control system according to claim 15 or 16, wherein the location registration device of the distribution device further includes
authentication request means for requesting, when receiving identification information of the distribution device and identification information of the communication terminal that are stored as the linkage information, an authentication device of the distribution device to authenticate the distribution device specified by the identification information of the distribution device, and
information management means for storing the transfer control information provided by the authentication device of the distribution device in the transfer control information storage section, when the authentication of the distribution device'related to the request is successful.

18. The message transfer control system according to claim 16 or 17, wherein the location registration device of the communication terminal further includes
second authentication request means for requesting, when receiving identification information of the distribution device and identification information of the communication terminal that are stored as the linkage information, an authentication device of the communication terminal to authenticate the communication terminal specified by the identification information of the communication terminal, and
second information management means for storing the transfer control information provided by the authentication device of the communication terminal in the second transfer control information storage section, when the authentication of the communication terminal related to the request is successful.

19. The message transfer control system according to claim 15 or 16, wherein the location registration device of the distribution device further includes information management means for storing, when receiving identification information of the distribution device and identification information of the communication terminal and the transfer control information that are stored as the linkage information from the authentication device of the distribution device, the transfer control information in the transfer control information storage section.

20. The message transfer control system according to claim 15 or 16, wherein the location registration device of the distribution device further includes information management means for storing, when receiving identification information of the distribution device and identification information of the communication terminal and the transfer control information that are stored as the linkage information from the communication terminal, the transfer control information in the transfer control information storage section.

21. The message transfer control system according to claim 20,
wherein the location registration device of the communication terminal further includes information management means for storing, when receiving the identification information of the distribution device and the identification information of the communication terminal and the transfer control information that are stored as the linkage information from the communication terminal, the transfer control information in the second transfer control information storage section.

22. The message transfer control system according to any one of claims 15 to 21, wherein the transfer control means judges whether to allow or reject the transfer of the message, in accordance with whether or not a transfer condition of the message based on at least context information with respect to the distribution device stored in the transfer control information storage section as the transfer control information is satisfied.

23. The message transfer control system according to any one of claims 16 to 22, wherein the second transfer control means judges whether to allow or reject the transfer of the message, in accordance with whether or not a transfer condition of the message based on at least context information with respect to the communication terminal stored in the second transfer control information storage section as the transfer control information is satisfied.

24. The message transfer control system according to any one of claims 15 to 23, wherein the transfer control means judges whether to allow or reject the transfer of the message, in accordance with the transfer control information including transfer condition information of the message defined for each distribution device, which is stored in the transfer control information storage section.

25. The message transfer control system according to any one of claims 16 to 24, wherein the second transfer control means judges whether to allow or reject the transfer of the message, in accordance with the transfer control information including transfer condition information of the message defined for each communication terminal, which is stored in the second transfer control information storage section.

26. The message transfer control system according to any one of claims 15 to 25, wherein the location registration device of the distribution device further includes transfer control information request means for requesting, when a message is received and the transfer control information that is effective for judging whether to allow or reject a transfer of the received message is not stored in the transfer control information storage section, the authentication device of the distribution device to send the transfer control information.

27. The message transfer control system according to any one of claims 16 to 26, wherein the location registration device of the communication terminal further includes second transfer control information request means for requesting, when a message is received and the transfer control information that is effective for judging whether to allow or reject a transfer of the received message is not stored in the transfer control information storage section, the authentication device of the communication terminal to send the transfer control information.

28. The message transfer control system according to any one of claims 15 to 27, further comprising a transfer control gateway device on an ingress side of the wide area network, which is connected to the wide area network, wherein the ingress side transfer control gateway device specifies, when receiving a service message to be transferred to the communication terminal from a service provider device, at least one of a plurality of location registration devices of the distribution device, which should be transferred the service message, in accordance with at least identification information of the distribution device included in or added to the service message , and transfers the service message to the at least one of the plurality of location registration devices.

29. The message transfer control system according to claim 28,
wherein the ingress side transfer control gateway device judges whether to transfer the service message to the location registration device of the distribution device, in accordance with context information with respect to the distribution device included in or added to the service message.

30. The message transfer control system according to claim 28 or 29, wherein the ingress side transfer control gateway device receives a service request message, in which the service message is capsulated and at least identification information of the distribution device is set in a header portion thereof, from the service provider device.

31. The message transfer control system according to any one of claims 15 to 30, further comprising a transfer control gateway device on an egress side of the wide area network, which is connected to the wide area network and includes a transfer control information storage section for storing the transfer control information that defines a transfer condition to the message to be transmitted to the communication terminal related to a specific distribution device, a reception section for receiving the message from the location registration device of the communication terminal, and transfer control means for judging whether to allow or reject the transfer of the message received by the reception section to the communication terminal, in accordance with the transfer control information stored in the transfer information storage section.

32. A message transfer control method, comprising steps of:
storing linkage information that indicates a relation between a communication terminal of a user and a distribution device distributed to a user side in a storage device;
storing transfer control information that defines a transfer condition of a message to be transmitted to the communication terminal associated with a specific distribution device based on the linkage information in the storage device; and
controlling a transfer of the message to the communication terminal, in accordance with the transfer control information.

33. The message transfer control method according to claim 32,
wherein the transfer control information includes first transfer condition information that defines a transfer condition of the message based on context information related to the distribution device; and second transfer condition information that defines the transfer condition of the message based on context information related to the communication terminal, and
in the transfer control step, the transfer of the message is allowed, when the transfer condition of the message defined by the first and second transfer condition information is satisfied.

34. The message transfer control method according to claim 33,
wherein the transfer control step includes a first judging step of judging whether to allow or reject the transfer of the message in accordance with at least the first transfer condition information, and a second judging step of judging whether to allow or reject the transfer of the message in accordance with at least the second transfer condition information.

35. A message transfer control method using a location registration device of a communication terminal of a user and a location registration device of a distribution device distributed on a user side, which are respectively connected to a wide area network where the communication terminal of the user is connected, the location registration device of the distribution device executing steps of:
storing, as linkage information, information indicating a relation between the communication terminal and the distribution device, which is transmitted from the communication terminal, in a linkage information storage section;
storing transfer control information that defines a transfer condition to a message to be transmitted to the communication terminal related to a specific distribution device in a transfer control information storage section;
receiving a message in which the distribution device is designated;
judging, when the communication terminal related to the distribution device designated by the message is identified by the linkage information stored in the linkage information storage section, whether to allow or reject a transfer of the message to the communication terminal, in accordance with the transfer control information stored in the transfer control information storage section; and
transmitting the message whose the transfer is allowed in the transfer control step, and
the location registration device of the communication terminal executing steps of:
receiving the message from the location registration device of the distribution device; and
transmitting the received message to the communication terminal, in accordance with the location information of the communication terminal stored in a location information storage section.

36. The message transfer control method according to claim 35,
wherein the location registration device of the communication terminal further executes the steps of:
storing transfer control information that defines the transfer condition to the message to be transmitted to the communication terminal related to the specific distribution device in a second transfer control information storage section;
judging, when the message from the location registration device of the distribution device is received, whether to allow or reject the transfer of the received message to the communication terminal, in accordance with the transfer control information stored in the second transfer information storage section; and
transmitting the message whose the transfer is allowed to the communication terminal.

37. The message transfer control method according to claim 35 or 36, wherein the location registration device of the distribution device further executes the steps of:
requesting, when receiving identification information of the distribution device and identification information of the communication terminal that are stored as the linkage information, an authentication device of the distribution device to authenticate the distribution device specified by the identification information of the distribution device; and
storing the transfer control information provided by the authentication device of the distribution device in the transfer control information storage section, when the authentication of the distribution device related to the request is successful.

38. The message transfer control method according to claim 36 or 37, wherein the location registration device of the communication terminal further executes the steps of:
requesting, when receiving identification information of the distribution device and identification information of the communication terminal that are stored as the linkage information, an authentication device of the communication terminal to authenticate the communication terminal specified by the identification information of the communication terminal; and
storing the transfer control information provided by the authentication device of the communication terminal in the second transfer control information storage section, when the authentication of the communication terminal related to the request is successful.

39. The message transfer control method according to claim 35 or 36, wherein the location registration device of the distribution device further executes the steps of storing, when receiving identification information of the distribution device and identification information of the communication terminal and the transfer control information that are stored as the linkage information from the authentication device of the distribution device, the transfer control information in the transfer control information storage section.

40. The message transfer control method according to claim 35 or 36, wherein the location registration device of the distribution device further executes the step of storing, when receiving identification information of the distribution device and identification information of the communication terminal and the transfer control information that are stored as the linkage information from the communication terminal and, the transfer control information in the transfer control information storage section.

41. The message transfer control method according to claim 40, wherein the location registration device of the communication terminal further executes the step of storing, when receiving the identification information of the distribution device and the identification information of the communication terminal and the transfer control information that are stored as the linkage information from the communication terminal and, the transfer control information in the second transfer control information storage section.

42. The message transfer control method according to any one of claims 35 to 41, wherein the transfer controlling step in the location registration device of the distribution device includes judging whether to allow or reject the transfer of the message, in accordance with whether or not the transfer condition of the message based on at least context information with respect to the distribution device stored in the transfer control information storage section as the transfer control information is satisfied.

43. The message transfer control method according to any one of claims 36 to 42, wherein the transfer controlling step in the location registration device of the communication terminal includes judging whether to allow or reject the transfer of the message, in accordance with whether or not the transfer condition of the message based on at least context information with respect to the communication terminal stored in the second transfer control information storage section as the transfer control information is satisfied.

44. The message transfer control method according to any one of claims 35 to 43, wherein the transfer controlling step the location of the distribution device includes judging whether to allow or reject the transfer of the message, in accordance with the transfer control information including the transfer condition information of the specific message defined for each distribution device, which is stored in the transfer control information storage section.

45. The message transfer control method according to any one of claims 36 to 44, wherein the transfer controlling step in the location registration device of the communication terminal includes judging whether to allow or reject the transfer of the message, in accordance with the transfer control information including transfer condition information of the message defined for each communication terminal, which is stored in the second transfer control information storage section.

46. The message transfer control method according to any one of claims 35 to 45, wherein the location registration device of the distribution device further executes a step of requesting, when a message is received and the transfer control information that is effective for judging whether to allow or reject the transfer of the received message is not stored in the transfer control information storage section, the authentication device of the distribution device to send the transfer control information.

47. The message transfer control method according to any one of claims 36 to 46, wherein the location registration device of the communication terminal further executes a step of requesting, when a message is received and the transfer control information that is effective for judging whether to allow or reject the transfer of the message is not stored in the transfer control information storage section, the authentication device of the communication terminal to send the transfer control information.

48. The message transfer control method according to any one of claims 35 to 47, wherein the method further uses a transfer control gateway device on an ingress side of the wide area network for a service message, which is connected to the wide area network, the ingress side transfer control gateway device executing steps of: receiving a service message to be transferred to the communication terminal from a service provider device; specifying at least one of a plurality of location registration devices of the distribution device to which the service message is transferred, in accordance with at least identification information of the distribution device included in or added to the service message, and transfer the service message to the at least one of the plurality of location registration devices.

49. The message transfer control method according to claim 38, wherein the ingress side transfer control gateway device judges whether to transfer the service message to the location registration device of the distribution device, in accordance with context information with respect to the distribution device included in or added to the service message.

50. The message transfer control method according to claim 48 or 49, wherein the ingress side transfer control gateway device receives a service request message, in which the service message is capsulated and at least identification information of the distribution device is set in a header portion thereof, from the service provider device.

51. The message transfer control method according to any one of claims 35 to 40, wherein the method further uses a transfer control gateway device on an egress side of the wide area network for a service message from a service provider, which is connected to the wide area network, the egress side transfer control gateway device executing steps of: storing the transfer control information that defines a transfer condition to the message to be transmitted to the communication terminal related to a specific distribution device in a transfer control information storage section; receiving the message from the location registration device of the communication terminal; and judging whether to allow or reject the transfer of the received message to the communication terminal, in accordance with the transfer control information stored in the transfer information storage section.
